# EUROPEAN PATENT SPECIFICATION

(11) **EP 4 118 865 B1**
(45) Date of publication and mention of the grant of the patent: **01.05.2024**
(21) Application number: 21719791.2
(22) Date of filing: 26.03.2021
(51) Int. Cl.: H04W 24/02, H04W 24/10, H04W 36/00

(54) **MANAGING MEASUREMENT GAP CONFIGURATIONS**
VERWALTUNG DER KONFIGURATIONEN VON MESSLÜCKEN
GESTION DE CONFIGURATIONS DES ÉCARTS DE MESURE

(30) Priority: 06.04.2020 US 202063006038 P; 11.06.2020 US 202063038101 P
(43) Date of publication of application: 18.01.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2021/024290
(87) International publication number: WO 2021/206929

(56) References cited:
- SAMSUNG: "Measurement Gap Configuration for EN-DC", 3GPP DRAFT; R2-1800625 MEASUREMENT GAP CONFIGURATION FOR EN-DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 11 January 2018 (2018-01-11), XP051385795, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-11]
- VIVO: "Issues on measurement gap in EN-DC and NR", 3GPP DRAFT; R2-1712765_ISSUES ON MEASUREMENT GAP IN ENDC AND NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371668, Retrieved from the Internet: URL:http://www.3gpp.org/ftp/tsg%5Fran/WG2% 5FRL2/TSGR2%5F100/Docs/ [retrieved on 2017-11-17]
- OPPO: "Measurement Gap Configuration in MR-DC", 3GPP DRAFT; R2-1712242_MEASUREMENT GAP COORDINATION IN EN-DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371369, Retrieved from the Internet: URL:http://www.3gpp.org/ftp/tsg%5Fran/WG2% 5FRL2/TSGR2%5F100/Docs/ [retrieved on 2017-11-17]
- GOOGLE INC: "Introduction of needForGapsInfoNR", 3GPP DRAFT; R3-203922, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. E-Meeting; 20200601 - 20200611 22 May 2020 (2020-05-22), XP051889603, Retrieved from the Internet: URL:https://ftp.3gpp.org/tsg_ran/WG3_Iu/TS GR3_108-e/Docs/R3-203922.zip R3-203922 Introduction of needForGapsInfoNR_TEI16.docx [retrieved on 2020-05-22]
- ERICSSON: "Procedure description on optional IEs in CU to DU RRC information IE", 3GPP DRAFT; 38473_CR0377R2_(REL-15)_R3-193266, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, Nevada, US; 20190513 - 20190517 30 May 2019 (2019-05-30), XP051739782, Retrieved from the Internet: URL:https://www.3gpp.org/ftp/tsg_ran/WG3_I u/TSGR3_104/Docs/R3-193266.zip [retrieved on 2019-05-30]

## Description

This disclosure relates generally to wireless communications and, more particularly, to managing measurement gap information in certain scenarios involving handover and dual connectivity and certain base station architectures.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

A user device (or user equipment, commonly denoted by acronym "UE") in some cases can concurrently utilize resources of multiple network nodes, *e.g.,* base stations, interconnected by a backhaul. When these network nodes support the same radio access technology (RAT) or different RATs, this type of connectivity is referred to as Dual Connectivity (DC) or Multi-Radio DC (MR-DC), respectively. When a UE operates in DC or MR-DC, one base station operates as a master node (MN), and the other base station operates as a secondary node (SN). The backhaul can support an Xn interface, for example.

The MN can provide a control-plane connection and a user-plane connection to a core network (CN), whereas the SN generally provides a user-plane connection. The cells associated with the MN define a master cell group (MCG), and the cells associated with the SN define a secondary cell group (SCG). The UE and the base stations MN and SN can use signaling radio bearers (SRBs) to exchange radio resource control (RRC) messages, as well as non-access stratum (NAS) messages.

There are several types of SRBs that a UE can use when operating in DC. SRB1 and SRB2 resources allow the UE and the MN to exchange RRC messages related to the MN and to embed RRC messages related to the SN, and can be referred to as MCG SRBs. SRB3 resources allow the UE and the SN to exchange RRC messages related to the SN, and can be referred to as an SCG SRB. Split SRBs allow the UE to exchange RRC messages directly with the MN using radio resources of the MN, the SN, or both of the MN and SN. Further, the UE and the base stations (*e.g*., MN and SN) use data radio bearers (DRBs) to transport data on a user plane. DRBs terminated at the MN and using the lower-layer resources of only the MN can be referred as MCG DRBs, DRBs terminated at the SN and using the lower-layer resources of only the SN can be referred as SCG DRBs, and DRBs terminated at the MCG but using the lower-layer resources of both the MN and the SN can be referred to as split DRBs.

A base station *(e.g.,* MN, SN) and/or the CN in some cases causes the UE to transition from one state of the Radio Resource Control (RRC) protocol to another state. More particularly, the UE can operate in an idle state (*e.g., EUTRA-RRC_IDLE, NR-RRC IDLE),* in which the UE does not have a radio connection with a base station; a connected state *(e.g., EUTRA-RRC_CONNECTED, NR-RRC CONNECTED),* in which the UE has a radio connection with the base station; or an inactive state *(e.g., EUTRA-RRC INACTIVE, NR-RRC INACTIVE*)*,* in which the UE has a suspended radio connection with the base station.

In some scenarios, a UE can operate in the connected state and subsequently transition to the inactive state. Generally speaking, in the inactive state, the radio connection between the UE and the radio access network (RAN) is suspended. In response to a network-triggering event, such as when a base station pages the UE *(e.g*., for an incoming phone call), or when the UE is otherwise triggered to send data *(e.g*., outgoing phone call, browser launch), the UE can then transition back to the connected state. To carry out the transition, the UE can request that the base station resumes the suspended radio connection *(e.g*., by sending an RRC Resume Request message), so that the base station can configure the UE to again operate in the connected state.

Recently, 3GPP introduced the changes described in documents R2-2004807 and R2-2004811, according to which a UE can transmit a measurement gap capability (i.e., *NeedForGapsInfoNR* information element (IE)). Meanwhile, 3GPP introduced the changes described in documents in a folder in https://www.3gpp.org/ftp/tsg_ran/WG2_RL2/TSGR2_110-e/Inbox/Drafts/%5BOffline-028%5D%5BOther%5D%20Inter-Freq%20measurements%20without%20Gaps%20(Huawei)/CR, according to which a UE can transmit a measurement gap capability (i.e., *interFrequencyMeas-Nogap-r16* field). The *NeedForGapsInfoNR* IE indicates whether a UE requires measurement gaps (simplified as gaps in some instances hereinafter) to perform measurements on a target frequency band. This may occur when a UE cannot measure a target band that is a carrier frequency of a target cell at the same time as transmitting and/or receiving on the serving cell(s). In some scenarios, the UE can transmit the *NeedForGapsInfoNR* IE to a gNB in an RRC response message (i.e., *RRCReconfiguration* or *RRCResumeComplete* message) during an RRC procedure (i.e., RRC reconfiguration procedure or RRC resume procedure). In other scenarios, the UE can transmit the *NeedForGapsInfoNR* IE to an eNB or ng-eNB in an *UECapabilityInformation* message during a UE Capability Enquiry procedure. The UE can provide the *NeedForGapsInfoNR* IE for NR intra-frequency measurements and/or NR inter-frequency measurements.

The *interFrequencyMeas-NoGap-r16* field indicates that the UE can perform inter-frequency synchronization signal block (SSB) based measurements without measurement gaps if the SSB is completely contained in the active bandwidth part (BWP) of the UE as specified in 3GPP Technical Specification 38.133. In some scenarios, the UE can transmit the *interFrequencyMeas-NoGap-r16* field to a gNB in an *UECapabilityInformation* message during a UE Capability Enquiry procedure.

However, it is unclear how distributed network devices are to manage the measurement gap capability information and which devices are responsible for determining whether to generate measurement gap configurations.

For example, in cases involving a disaggregated gNB architecture, a central unit (CU) of the gNB receives the RRC response message including the *NeedForGapsInfoNR* IE, while a distributed unit (DU) of the gNB is not aware of the *NeedForGapsInfoNR* IE. As a result, the DU always configures measurement gaps for the UE for NR intra-frequency measurement and/or NR inter-frequency measurement, even if the *NeedForGapsInfoNR* IE indicates that the UE is capable of gapless measurement on a particular frequency or band. Consequently, the DU does not schedule transmissions to the UE in the measurement gaps because, according to the DU logic, the UE is not capable of receiving transmissions from the DU while performing measurements in the measurement gaps. This results in inefficient scheduling of transmissions to the UE, and, in turn, sub-optimal UE performance.

As another example, a UE may transmit the *NeedForGapsInfoNR* IE to a source gNB but, after a handover of the UE from the source gNB to a target gNB, the target gNB does is not aware of the *NeedForGapsInfoNR* IE. Therefore, the target gNB conservatively configures measurement gaps for the UE for NR intra-frequency measurements and/or NR inter-frequency measurements even though the UE previously indicated to the source gNB that it is capable of gapless measurement. This results in similar inefficiencies to those discussed above.

As yet another example, in dual connectivity scenarios, a UE can provide the *NeedForGapsInfoNR* IE only to an MN and not to an SN. Further, the *NeedForGapsInfoNR* IE only indicates measurement gap capability for NR intra-frequency measurements and/or NR inter-frequency measurements configured by the MN. The UE that is in dual connectivity with the MN and the SN thus cannot indicate a *NeedForGapsInfoNR* IE for NR intra-frequency measurements and/or NR inter-frequency measurements configured by the SN. Therefore, the SN has to conservatively configure measurement gaps for the UE for NR intra-frequency measurements and/or NR inter-frequency measurements even though the UE is capable of gapless measurement. As a result, the MN may unnecessarily omit scheduling transmissions during measurement gaps, resulting in similar inefficiencies to those discussed above.

3GPP R2-1800625 relates to measurement gap configuration for EN-DC. 3GPP R2-1712765 relates to issues on measurement gap in EN-DC and NR. 3GPP R2-1712242 relates to measurement gap coordination in EN-DC. 3GPP R3-203922 relates to an introduction of needForGapsInfoNR. 3GPP R3-193266 relates to procedure description on optional IEs in CU to DU RRC information IE. This document states that If the gNB-CU includes the SMTC information of the measured frequency(ies) in the *MeasurementTimingConfiguration* IE of the *CU to DURRC Information* IE that is included in the UE CONTEXT SETUP REQUEST message, the gNB-DU shall generate the measurement gaps based on the received SMTC information. Then the gNB-DU shall send the measurement gaps information to the gNB-CU in the *MeasGapConfig* IE of the *DU to CURRC Information* IE that is included in the UE CONTEXT SETUP RESPONSE message.

### SUMMARY

In accordance with aspects of this disclosure, there is provided: a method in a first network node of a radio access network, as defined in claim 1; a method in a first network node of a radio access network, as defined in claim 6; and a network node of a radio access network, as defined in claim 15. A RAN of this disclosure communicates with a UE and includes at least two network nodes. A first network node can receive a measurement gap capability of the UE and transmit an indication of the measurement gap capability to a second network node. In dual connectivity scenarios, not covered by the appended set of claims, a network node operating as an SN can receive the measurement gap capability directly from the UE. In some scenarios, these two network nodes are a CU and a DU operating as part of a distributed base station. In other scenarios, these two network nodes are different base stations, such as a source base station (S-BS) and a target base station (T-BS) of a handover procedure.

In some scenarios, the indication of the measurement gap capability may be an information element (IE), a field, a flag, etc. that specifies the measurement gap capability of the UE (e.g., a *NeedForGapsInfoNR* IE). In other scenarios, the first network node may determine, based on the measurement gap capability, whether the UE requires measurement gaps for a particular frequency and, if so, transmit measurement timing information (e.g., SMTC timing information) to the second network node.

Based on the received indication of the measurement gap capability, the second network node can determine whether to generate a measurement gap configuration for the UE. For example, if the second network node receives the measurement gap capability, the second network node can determine whether the UE requires measurement gaps for a target band and, if so, generate a measurement gap configuration when needed. If the second network node receives measurement timing information, the second network node generates a measurement gap configuration in accordance with the timing information. The second network node provides an indication of whether the second network node generated the measurement gap configuration by, for example, including or excluding the measurement gap configuration in a message to the first network node. In dual connectivity scenarios, not covered by the appended set of claims, the second network node operating as an SN can provide the indication directly to the UE via a radio interface. As used in this disclosure, providing an indication can correspond to providing an explicit indication (*e.g*., by explicitly providing an IE), or to providing an implicit indication (*e.g*., by not including an IE in a message responding to a request for the IE).

An example of the techniques of this disclosure is a method in a first network node of a RAN for managing measurement gap information. The method can be implemented by processing hardware and includes receiving, at the first network node from a second network node of the RAN, an indication of a measurement gap capability of the UE in communication with the RAN. The method also includes determining, by processing hardware and based on the indication of the measurement gap capability, whether to generate a measurement gap configuration for the UE. Further, the method includes providing, to the second network node, an indication of whether the first network node generated the measurement gap configuration for the UE.

Another example of these techniques is a method in a first network node of a RAN for managing measurement gap information. The method includes receiving an information element specifying a measurement gap capability of a user equipment (UE) in communication with the RAN. The method also includes transmitting, to a second network node, an indication of the measurement gap capability. Further, the method includes receiving, from the second network node, an indication of whether the second network node generated a measurement gap configuration for the UE.

Yet another example of these techniques is a network node including processing hardware and configured to execute the methods above.

Another example of these techniques, described herein but not explicitly claimed, is a method in a UE for managing gap measurement. The method can be implemented by processing hardware and includes receiving, from a RAN, a configuration the UE is to use to report a measurement gap capability. The method also includes determining that the configuration specifies at least one frequency band unsupported at the UE. The method further includes generating an indication of a measurement gap capability based on the received configuration and transmitting the indication of the measurement gap capability to the RAN.

A further example of these techniques, described herein but not explicitly claimed, is a UE including processing hardware and configured to execute the method above.

### BRIEF DESCRIPTION OF THE DRAWINGS

Fig. 1A is a block diagram of an example system in which a radio access network (RAN) and a user device can implement the techniques of this disclosure for managing measurement gap configurations;
Fig. 1B is another block diagram of an example system in which a radio access network (RAN) and a user device can implement the techniques of this disclosure for managing measurement gap configurations;
Fig. 1C is a block diagram of an example base station in which a central unit (CU) and a distributed unit (DU) that can operate in the system of Fig. 1A or Fig. 1B;
Fig. 2 is a block diagram of an example protocol stack according to which the UE of Fig. 1A communicates with base stations;
Fig. 3A is a messaging diagram of an example scenario in which a CU provides a measurement gap capability of a UE to a DU, and the DU generates a measurement gap configuration in response to the measurement gap capability, in accordance with the techniques of this disclosure;
Fig. 3B is a messaging diagram of an example scenario similar to the scenario of Fig. 3A, but with the DU determining not to generate a measurement gap configuration in response to the measurement gap capability;
Fig. 3C is a messaging diagram of an example scenario similar to the scenario of Fig. 3A, but in which the CU, based on the measurement gap capability of the UE, provides information to the DU, and the DU generates a measurement gap configuration in response to receiving the information;
Fig. 3D is a messaging diagram of an example scenario similar to the scenario of Fig. 3C, but with the CU determining not to request the DU to configure gaps for the UE or determining to request the DU to release gaps previously configured for the UE, based on the measurement gap capability of the UE;
Fig. 3E is a messaging diagram of an example scenario similar to the scenario of Fig. 3A, with the DU determining whether the UE requires gaps based on a UE capability;
Fig. 3F is a messaging diagram of an example scenario similar to the scenario of Fig. 3E, with the CU determining whether the UE requires gaps based on a UE capability;
Fig. 4A is a messaging diagram of an example handover scenario in which a source base station (S-BS) provides a measurement gap capability of a UE to a target base station (T-BS), and the T-BS determines whether to generate a measurement gap configuration based on the measurement gap capability, in accordance with the techniques of this disclosure;
Fig. 4B is a messaging diagram of an example handover scenario similar to the scenario of Fig. 4A, in which a CU of the T-BS provides the measurement gap capability to a DU of the T-BS, and the DU generates a measurement gap configuration in response to the measurement gap capability;
Fig. 4C is a messaging diagram of an example handover scenario similar to the scenario of Fig. 4B, but with the DU determining not to generate a measurement gap configuration in response to the measurement gap capability;
Fig. 4D is a messaging diagram of an example handover scenario similar to the scenario of Fig. 4B, but in which the CU of the T-BS, based on the measurement gap capability of the UE, provides information to the DU of the T-BS, and the DU generates a measurement gap configuration in response to receiving the information;
Fig. 4E is a messaging diagram of an example handover scenario similar to the scenario of Fig. 4D, but with the CU of the T-BS determining not to request the DU to configure gaps for the UE or determining to request the DU to release gaps previously configured for the UE, based on the measurement gap capability of the UE;
Fig. 4F is a messaging diagram of an example handover scenario similar to the scenario of Fig. 4B, but with the handover being from a source DU (S-DU) of a base station to a target DU (T-DU) of the base station;
Fig. 4G is a messaging diagram of an example handover scenario similar to the scenario of Fig. 4C, but with the handover being from an S-DU of a base station to a T-DU of the base station;
Fig. 4H is a messaging diagram of an example handover scenario similar to the scenario of Fig. 4D, but with the handover being from an S-DU of a base station to a T-DU of the base station;
Fig. 4I is a messaging diagram of an example handover scenario similar to the scenario of Fig. 4E, but with the handover being from an S-DU of a base station to a T-DU of the base station;
Fig. 5A is a messaging diagram of an example scenario contemplated by the present disclosure but not explicitly claimed, in which an SN receives the measurement gap capability of a UE operating in MR-DC from an MN, and the SN determines whether to generate a measurement gap configuration based on the measurement gap capability, in accordance with the techniques of this disclosure;
Fig. 5B is a messaging diagram of an example scenario contemplated by the present disclosure but not explicitly claimed, the example scenario being similar to the scenario of Fig. 5A, but in which the SN receives the measurement gap capability directly from the UE;
Fig. 5C is a messaging diagram of an example scenario contemplated by the present disclosure but not explicitly claimed, the example scenario being similar to the scenario of Fig. 5A, but in which a CU of the SN provides a measurement gap capability or information to a DU of the SN, in accordance with which the DU determines whether to generate a measurement gap configuration;
Fig. 5D is a messaging diagram of an example scenario contemplated by the present disclosure but not explicitly claimed, the example scenario being similar to the scenario of Fig. 5C, but with the CU providing the measurement gap capability or information to the DU during the SN addition procedure;
Fig. 6A is a messaging diagram of an example scenario contemplated by the present disclosure but not explicitly claimed, in which a source base station (S-BS) suspends an RRC connection with a UE, and the UE resumes an RRC connection with a target base station (T-BS), with the UE providing a measurement gap capability of the UE to the T-BS, in accordance with the techniques of this disclosure;
Fig. 6B is a messaging diagram of an example scenario contemplated by the present disclosure but not explicitly claimed, the example scenario being similar to the scenario of Fig. 6A, but with the S-BS providing a measurement gap capability of the UE to the T-BS;
Fig. 7 is a messaging diagram of an example scenario contemplated by the present disclosure but not explicitly claimed, in which a source MN (S-MN) and source SN (S-SN) suspend an RRC connection with a UE, and the UE resumes an RRC connection with a target MN (T-MN) and target SN (T-SN), with the S-MN providing a measurement gap capability of the UE to the T-MN, in accordance with the techniques of this disclosure;
Fig. 8 is a flow diagram of an example method for managing measurement gap capability information, which can be implemented in a CU of this disclosure;
Fig. 9A is a flow diagram of an example method for determining whether to generate a measurement gap configuration, which can be implemented in a DU of this disclosure;
Fig. 9B is a flow diagram of another example method for determining whether to generate a measurement gap configuration, which can be implemented in a DU of this disclosure;
Fig. 10 is a flow diagram of an example method for determining whether to include SMTC information indicating a measurement gap capability of a UE in a message to a DU, which can be implemented in a CU of this disclosure;
Fig. 11 is a flow diagram of an example method for managing measurement gap capability information during handover scenarios, which can be implemented in an S-BS of this disclosure;
Fig. 12 is a flow diagram of an example method contemplated by the present disclosure but not explicitly claimed, the example method being for managing measurement gap capability information following suspending an RRC connection, which can be implemented in an S-BS of this disclosure;
Fig. 13 is a flow diagram of an example method for generating measurement gap capability information, which can be implemented in a UE of this disclosure;
Fig. 14 is a flow diagram of an example method for requesting measurement gap capability information from a UE, which can be implemented in a base station of this disclosure;
Fig. 15 is a flow diagram of an example method for managing measurement gap information, which can be implemented in a network node of this disclosure; and
Fig. 16 is a flow diagram of another example method for managing measurement gap information, which can be implemented in a network node of this disclosure.
Fig. 17 is a flow diagram of an example method for managing gap measurement, which can be implemented in a UE of this disclosure.

### DETAILED DESCRIPTION OF THE DRAWINGS

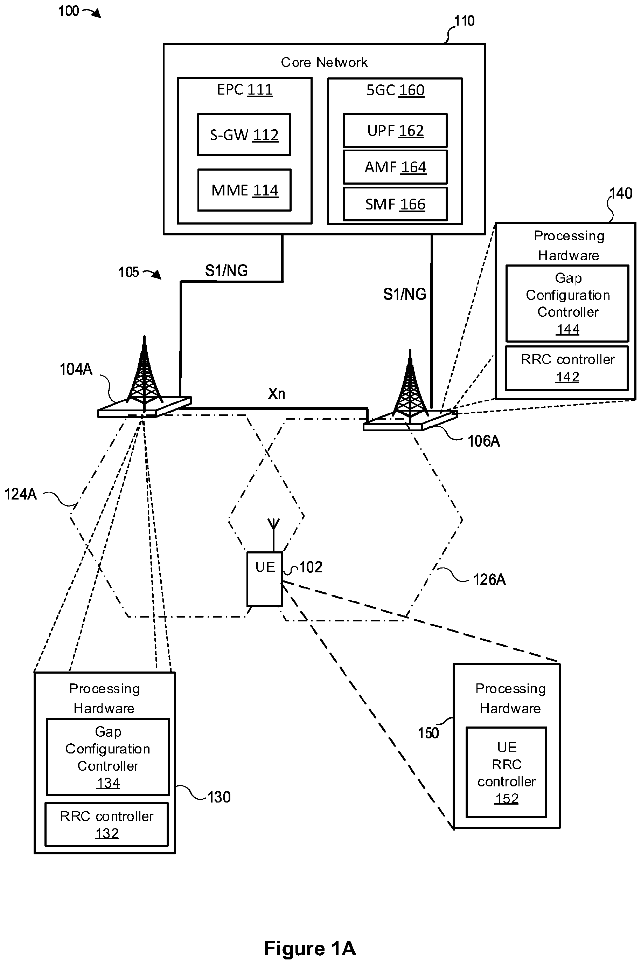

As discussed in detail below, network nodes of a radio access network (RAN) in communication with a UE can implement the techniques disclosed herein to manage measurement gap configurations in scenarios involving distributed base station architectures and scenarios involving handover and dual connectivity for example. Prior to discussing these techniques, example communication systems which can implement these techniques are considered with reference to Figs. 1A-1C.

Referring first to Fig. 1A, an example wireless communication system 100 includes a UE 102, a base station (BS) 104A, a base station 106A, and a core network (CN) 110. The base stations 104A and 106A can operate in a RAN 105 connected to the same core network (CN) 110. The CN 110 can be implemented as an evolved packet core (EPC) 111 or a fifth generation (5G) core (5GC) 160, for example.

Among other components, the EPC 111 can include a Serving Gateway (S-GW) 112 and a Mobility Management Entity (MME) 114. The S-GW 112 in general is configured to transfer user-plane packets related to audio calls, video calls, Internet traffic, etc., and the MME 114 is configured to manage authentication, registration, paging, and other related functions. The 5GC 160 includes a User Plane Function (UPF) 162 and an Access and Mobility Management (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

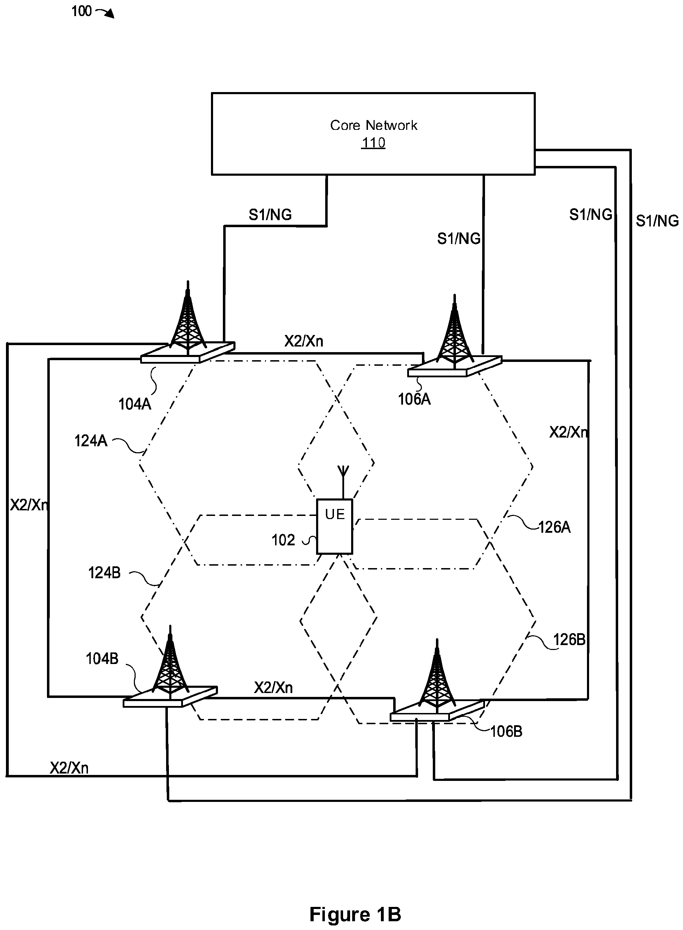

As illustrated in Fig. 1A, the base station 104A supports a cell 124A, and the base station 106A supports a cell 126A. The cells 124A and 126A can partially overlap, so that the UE 102 can communicate in DC with the base station 104A and the base station 106A operating as a master node (MN) and a secondary node (SN), respectively. To directly exchange messages during DC scenarios and other scenarios discussed below, the MN 104A and the SN 106A can support an X2 or Xn interface. In general, the CN 110 can connect to any suitable number of base stations supporting NR cells and/or EUTRA cells. An example configuration in which the EPC 110 is connected to additional base stations is discussed below with reference to Fig. 1B.

The base station 104A is equipped with processing hardware 130 that can include one or more general-purpose processors such as CPUs and non-transitory computer-readable memory storing machine-readable instructions executable on the one or more general-purpose processors, and/or special-purpose processing units. The processing hardware 130 in an example implementation includes an RRC controller 132 configured to manage RRC configurations specified in one or more particular RRC release and/or versions, when the base station 104A operates as an MN. The processing hardware 130 further can implement a Gap configuration controller 134 configured to implement some or all of the techniques for managing gap measurements at a UE discussed in this disclosure. Depending on the implementation, the Gap configuration controller 134 can operate as a component of the RRC controller 132, as a component separate from the RRC controller 132, or as a component only partially implemented in the RRC controller 132.

The base station 106A is equipped with processing hardware 140 that can also include one or more general-purpose processors such as CPUs and non-transitory computer-readable memory storing machine-readable instructions executable on the one or more general-purpose processors, and/or special-purpose processing units. The processing hardware 140 in an example implementation includes an RRC controller 142 configured to manage RRC configurations specified in one or more particular RRC release and/or versions, when the base station 106A operates as an SN, and a Gap configuration controller 144 similar to the Gap configuration controller 134. In some implementations, the Gap configuration controllers 134 and 144 each implement functionality of an MN and an SN because each of the base stations 104A and 106A can operate as an MN or an SN in different scenarios.

Still referring to Fig. 1A, the UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes a UE RRC controller 152 configured to manage RRC configurations.

More particularly, the RRC controllers 132, 142, and 152 can implement at least some of the techniques discussed with reference to the messaging and flow diagrams below to manage RRC configurations. Although Fig. 1A illustrates the RRC controllers 132 and 142 as separate components, in at least some of the scenarios the base stations 104A and 106A can have similar implementations and in different scenarios operate as MN or SN nodes. In these implementations, each of the base stations 104A and 106A can implement both the RRC controller 132 and the RRC controller 142 to support MN and SN functionality, respectively.

In operation, the UE 102 can use a radio bearer *(e.g.,* a DRB or an SRB) that at different times terminates at the MN 104A or the SN 106A. The UE 102 can receive a radio bearer configuration configuring the radio bearer from the MN 104A or the SN 106A. The UE 102 can apply one or more security keys when communicating on the radio bearer, in the uplink (from the UE 102 to a base station) and/or downlink (from a base station to the UE 102) direction. The UE in some cases can use different RATs to communicate with the base stations 104A and 106A. Although the examples below may refer specifically to specific RAT types, 5G NR or EUTRA, in general the techniques of this disclosure also can apply to other suitable radio access and/or core network technologies.

Fig. 1B depicts an example wireless communication system 100 in which communication devices can implement these techniques. The wireless communication system 100 includes a UE 102, a base station 104A, a base station 104B, a base station 106A, a base station 106B and a core network (CN) 110. The UE 102 initially connects to the base station 104A. The BSs 104B and 106B may have similar processing hardware as the base station 106A. The UE 102 initially connects to the base station 104A.

In some scenarios, the base station 104A can perform immediate SN addition to configure the UE 102 to operate in dual connectivity (DC) with the base station 104A (via a PCell) and the base station 106A (via a PSCell other than cell 126A). The base stations 104A and 106A operate as an MN and an SN for the UE 102, respectively. The UE 102 in some cases can operate using the MR-DC connectivity mode, *e.g.,* communicate with the base station 104A using 5G NR and communicate with the base station 106A using EUTRA, or communicate with the base station 104A using EUTRA and communicate with the base station 106A using 5G NR.

At some point, the MN 104A can perform an immediate SN change to change the SN of the UE 102 from the base station 106A (source SN, or "S-SN") to the base station 104B (target SN, or "T-SN") while the UE 102 is communicating in DC with the MN 104A and the S-SN 106A. In another scenario, the SN 106A can perform an immediate PSCell change to change the PSCell of the UE 102 to the cell 126A. In one implementation, the SN 106A can transmit a configuration changing the PSCell to cell 126A to the UE 102 via a signaling radio bearer (SRB) *(e.g.,* SRB3) for the immediate PSCell change. In another implementation, the SN 106A can transmit a configuration changing the PSCell to the cell 126A to the UE 102 via the MN 104A for the immediate PSCell change. The MN 104A may transmit the configuration immediately changing the PSCell to the cell 126A to the UE 102 via SRB1.

In other scenarios, the base station 104A can perform a conditional SN Addition procedure to first configure the base station 106B as a C-SN for the UE 102, i.e. conditional SN addition or change (CSAC). At this time, the UE 102 can be in single connectivity (SC) with the base station 104A or in DC with the base station 104A and the base station 106A. If the UE 102 is in DC with the base station 104A and the base station 106A, the MN 104A may determine to perform the conditional SN Addition procedure in response to a request received from the base station 106A or in response to one or more measurement results received from the UE 102 or obtained by the MN 104A from measurements on signals received from the UE 102. In contrast to the immediate SN Addition case discussed above, the UE 102 does not immediately attempt to connect to the C-SN 106B. In this scenario, the base station 104A again operates as an MN, but the base station 106B initially operates as a C-SN rather than an SN.

More particularly, when the UE 102 receives a configuration for the C-SN 106B, the UE 102 does not connect to the C-SN 106B until the UE 102 has determined that a certain condition is satisfied (the UE 102 in some cases can consider multiple conditions, but for convenience only the discussion below refers to a single condition). When the UE 102 determines that the condition has been satisfied, the UE 102 connects to the C-SN 106B, so that the C-SN 106B begins to operate as the SN 106B for the UE 102. Thus, while the base station 106B operates as a C-SN rather than an SN, the base station 106B is not yet connected to the UE 102, and accordingly is not yet servicing the UE 102. In some implementations, the UE 102 may disconnect from the SN 106A to connect to the C-SN 106B.

In yet other scenarios, the UE 102 is in DC with the MN 104A (via a PCell) and SN 106A (via a PSCell other than cell 126A and not shown in Fig. 1A). The SN 106A can perform conditional PSCell addition or change (CPAC) to configure a candidate PSCell (C-PSCell) 126A for the UE 102. If the UE 102 is configured a signaling radio bearer (SRB) *(e.g.,* SRB3) to exchange RRC messages with the SN 106A, the SN 106A may transmit a configuration for the C-PSCell 126A to the UE 102 via the SRB, *e.g.,* in response to one or more measurement results which may be received from the UE 102 via the SRB or via the MN 104A or may be obtained by the SN 106A from measurements on signals received from the UE 102. In case of via the MN 104A, the MN 104A receives the configuration for the C-PSCell 126A. In contrast to the immediate PSCell change case discussed above, the UE 102 does not immediately disconnect from the PSCell and attempt to connect to the C-PSCell 126A.

More particularly, when the UE 102 receives a configuration for the C-PSCell 126A, the UE 102 does not connect to the C-PSCell 126A until the UE 102 has determined that a certain condition is satisfied (the UE 102 in some cases can consider multiple conditions, but for convenience only the discussion below refers to a single condition). When the UE 102 determines that the condition has been satisfied, the UE 102 connects to the C-PSCell 126A, so that the C-PSCell 126A begins to operate as the PSCell 126A for the UE 102. Thus, while the cell 126A operates as a C-PSCell rather than a PSCell, the SN 106A may not yet connect to the UE 102 via the cell 126A. In some implementations, the UE 102 may disconnect from the PSCell to connect to the C-PSCell 126A.

In some scenarios, the condition associated with CSAC or CPAC can be signal strength/quality, which the UE 102 detects on the C-PSCell 126A of the SN 106A or on a C-PSCell 126B of C-SN 106B, exceeding a certain threshold or otherwise corresponding to an acceptable measurement. For example, when the one or more measurement results the UE 102 obtains on the C-PSCell 126A are above a threshold configured by the MN 104A or the SN 106A or above a pre-determined or pre-configured threshold, the UE 102 determines that the condition is satisfied. When the UE 102 determines that the signal strength/quality on the C-PSCell 126A of the SN 106A is sufficiently good (again, measured relative to one or more quantitative thresholds or other quantitative metrics), the UE 102 can perform a random access procedure on the C-PSCell 126A with the SN 106A to connect to the SN 106A. After the UE 102 successfully completes the random access procedure on the C-PSCell 126A, the C-PSCell 126A becomes a PSCell 126A for the UE 102. The SN 106A then can start communicating data (user-plane data or control-plane data) with the UE 102 through the PSCell 126A. In another example, when the one or more measurement results the UE 102 obtains on the C-PSCell 126B are above a threshold configured by the MN 104A or the C-SN 106B or above a pre-determined or pre-configured threshold, the UE 102 determines that the condition is satisfied. When the UE 102 determines that the signal strength/quality on the C-PSCell 126B of the C-SN 106B is sufficiently good (again, measured relative to one or more quantitative thresholds or other quantitative metrics), the UE 102 can perform a random access procedure on the C-PSCell 126B with the C-SN 106B to connect to the C-SN 106B. After the UE 102 successfully completes the random access procedure on the C-PSCell 126B, the C-PSCell 126B becomes a PSCell 126B for the UE 102 and the C-SN 106B becomes an SN 106B. The SN 106B then can start communicating data (user-plane data or control-plane data) with the UE 102 through the PSCell 126B.

In various configurations of the wireless communication system 100, the base station 104A can be implemented as a master eNB (MeNB) or a master gNB (MgNB), and the base station 106A or 106B can be implemented as a secondary gNB (SgNB) or a candidate SgNB (C-SgNB). The UE 102 can communicate with the base station 104A and the base station 106A or 106B (106A/B) via the same RAT such as EUTRA or NR, or different RATs. When the base station 104A is an MeNB and the base station 106A is an SgNB, the UE 102 can be in EUTRA-NR DC (EN-DC) with the MeNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MeNB and the base station 106A is a C-SgNB for the UE 102, the UE 102 can be in SC with the MeNB. In this scenario, the MeNB 104A may or may not configure the base station 106B as another C-SgNB to the UE 102.

In some cases, an MeNB, an SeNB or a C-SgNB is implemented as an ng-eNB rather than an eNB. When the base station 104A is a Master ng-eNB (Mng-eNB) and the base station 106A is a SgNB, the UE 102 can be in next generation (NG) EUTRA-NR DC (NGEN-DC) with the Mng-eNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an Mng-NB and the base station 106A is a C-SgNB for the UE 102, the UE 102 can be in SC with the Mng-NB. In this scenario, the Mng-eNB 104A may or may not configure the base station 106B as another C-SgNB to the UE 102.

When the base station 104A is an MgNB and the base station 106A/B is an SgNB, the UE 102 may be in NR-NR DC (NR-DC) with the MgNB and the SgNB. In this scenario, the MeNB 104A may or may not configure the base station 106B as a C-SgNB to the UE 102. In this scenario, the SgNB 106A may configure cell 126A as a C-PSCell to the UE 102. When the base station 104A is an MgNB and the base station 106A is a C-SgNB for the UE 102, the UE 102 may be in SC with the MgNB. In this scenario, the MgNB 104A may or may not configure the base station 106B as another C-SgNB to the UE 102.

When the base station 104A is an MgNB and the base station 106A/B is a Secondary ng-eNB (Sng-eNB), the UE 102 may be in NR-EUTRA DC (NE-DC) with the MgNB and the Sng-eNB. In this scenario, the MgNB 104A may or may not configure the base station 106B as a C-Sng-eNB to the UE 102. In this scenario, the Sng-eNB 106A may configure cell 126A as a C-PSCell to the UE 102. When the base station 104A is an MgNB and the base station 106A is a candidate Sng-eNB (C-Sng-eNB) for the UE 102, the UE 102 may be in SC with the MgNB. In this scenario, the MgNB 104A may or may not configure the base station 106B as another C-Sng-eNB to the UE 102.

The base stations 104A, 104B, 106A, and 106B can connect to the same core network (CN) 110 which can be an evolved packet core (EPC) 111 or a fifth-generation core (5GC) 160. The base station 104A can be implemented as an eNB supporting an S1 interface for communicating with the EPC 111, an ng-eNB supporting an NG interface for communicating with the 5GC 160, or as a base station that supports the NR radio interface as well as an NG interface for communicating with the 5GC 160. The base station 106A can be implemented as an EN-DC gNB (en-gNB) with an S1 interface to the EPC 111, an en-gNB that does not connect to the EPC 111, a gNB that supports the NR radio interface as well as an NG interface to the 5GC 160, or a ng-eNB that supports an EUTRA radio interface as well as an NG interface to the 5GC 160. To directly exchange messages during the scenarios discussed below, the base stations 104A, 104B, 106A, and 106B can support an X2 or Xn interface.

As illustrated in Fig. 1B, the base station 104A supports a cell 124A, the base station 104B supports a cell 124B, the base station 106A supports a cell 126A, and the base station 106B supports a cell 126B. The cells 124A and 126A can partially overlap, as can the cells 124A and 124B, so that the UE 102 can communicate in DC with the base station 104A (operating as an MN) and the base station 106A (operating as an SN) and, upon completing an SN change, with the base station 104A (operating as MN) and the SN 104B. More particularly, when the UE 102 operates in DC with the base station 104A and the base station 106A, the base station 104A operates as an MeNB, an Mng-eNB, or an MgNB, and the base station 106A operates as an SgNB, or an Sng-eNB. The cells 124A and 126B can partially overlap. When the UE 102 is in SC with the base station 104A, the base station 104A operates as an MeNB, an Mng-eNB, or an MgNB, and the base station 106B operates as a C-SgNB, or a C-Sng-eNB. When the UE 102 operates in DC with the base station 104A and the base station 106A, the base station 104A operates as an MeNB, an Mng-eNB, or an MgNB, the base station 106A operates as an SgNB or an Sng-eNB, and the base station 106B operates as a C-SgNB or a C-Sng-eNB.

In general, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure also can apply to other suitable radio access and/or core network technologies such as sixth generation (6G) radio access and/or 6G core network or 5G NR-6G DC.

As indicated above, the wireless communication system 100 can support various procedures (*e.g*., DAPS handover, DAPS PSCell change, etc.) and modes of operation *(e.g.,* SC or DC). Example operation of various procedures that can be implemented in the wireless communication system 100 will now be described.

In some implementations, the wireless communication system 100 supports a legacy handover preparation procedure *(i.e.,* a non-DAPS handover preparation procedure). In one scenario, for example, the base station 104A can perform a non-DAPS handover preparation procedure to configure the UE 102 to handover from a cell 124A of the base station 104A to a cell 124B of the base station 104B. In this scenario, the base station 104A and the base station 104B operate as a source base station (S-BS) or a source MN (S-MN), and a target base station (T-BS) or a target MN (T-MN), respectively. In the non-DAPS handover preparation procedure, the base station 104A sends a *Handover Request* message to the base station 104B. In response to the *Handover Request* message, the base station 104B includes configuration parameters configuring radio resources for the UE 102 in a *handover command* message, includes the *handover command* message in a *Handover Request Acknowledge* message, and sends the *Handover Request Acknowledge* message to the base station 104. In turn, the base station 104A transmits the *handover command* message to the UE 102 and subsequently discontinues (or stops) transmitting data to or receiving data from the UE 102.

Upon receiving the *handover command* message, the UE 102 hands over to the base station 104B via cell 124B and communicates with the base station 104B using the configuration parameters in the *handover command* message. Particularly, in response to the *handover command* message, the UE 102 disconnects from the cell 124A (or the base station 104A), performs a random access procedure with the base station 104B via the cell 124B, and transmits a *handover complete* message to the base station 104B via the cell 124B.

In some implementations, the wireless communication system 100 supports a DAPS handover preparation procedure. In one scenario for example, the base station 104A can perform a DAPS handover preparation procedure to configure the UE 102 to hand over from a cell 124A of the base station 104A to a cell 124B of the base station 104B. In this scenario, the base station 104A and the base station 104B operate as an S-BS or an S-MN, and a T-BS or a T-MN, respectively. In the DAPS handover preparation procedure, the base station 104A sends a *Handover Request* message to the base station 104B. In some implementations, the base station 104A can explicitly request DAPS handover in the *Handover Request* message, *e.g.,* by including a DAPS indicator in the *Handover Request* message. In response to the *Handover Request* message, and to accept the request for DAPS handover, the base station 104B includes configuration parameters configuring radio resources for the UE 102 in a *handover command,* includes the *handover command* message in a *Handover Request Acknowledge* message, and sends the *Handover Request Acknowledge* message to the base station 104A. In some implementations, the base station 104B can indicate DAPS handover in the *handover command* message, *e.g.,* by including a DAPS handover configuration or a DAPS handover indicator in the *handover command* message, or can include an indicator in the *Handover Request Acknowledge* message. In turn, the base station 104A transmits the *handover command* message to the UE 102.

Upon receiving the *handover command* message, the UE 102 hands over to the base station 104B via cell 124B and communicates with the base station 104B using the configuration parameters in the *handover command* message. Particularly, in response to the *handover command* message, whereas in the non-DAPS handover preparation procedure the UE 102 disconnects from the cell 124A (or the base station 104), the UE 102 in the DAPS handover preparation procedure maintains the connection to the base station 104 via cell 124, performs a random access procedure with the base station 104B via cell 124B, and transmits a *handover complete* message to the base station 104B via cell 124B.

In maintaining the connection to the base station 104A via cell 124A in the DAPS handover preparation procedure, the UE 102 effectively has two links, *i.e.,* a source MCG link with the base station 104A and a target MCG link with the base station 104B. The UE 102 can continue receiving data *(i.e.,* downlink data) from the base station 104A until the UE 102 receives an indication from the base station 104B to release the source MCG link with the base station 104A. The UE 102 can continue transmitting data *(e.g.,* new uplink data transmission or retransmission of PDCP SDUs) to the base station 104A until the UE 102 either successfully completes the random access procedure with the base station 104B or receives the indication from the base station 106B to release the MCG link with the base station 104A.

In some implementations, in the handover preparation procedure scenarios above, the wireless communication system 100 supports DC operation. In one scenario, for example, after the UE 102 connects to the base station 104A, the base station 104A can perform an SN addition procedure to add the base station 106A as an SN, thereby configuring the UE 102 to operate in DC with the base stations 104A and 106A. At this point, the base stations 104 and 106A operate as an MN and an SN, respectively. Later on, the MN 104A can initiate the non-DAPS or DAPS handover preparation procedures to handover the UE 102 to the T-MN 104B.

In some implementations, the wireless communication system 100 supports a legacy PSCell change preparation procedure *(i.e.,* a non-DAPS PSCell change preparation procedure). In one scenario, for example, while the UE 102 is in DC with the MN 104A and the SN 106A, the MN 104A determines to change the SN of the UE 102 from the base station 106A (which may be referred to as the source SN or S-SN) to the base station 106B (which may be referred to as the target SN or T-SN) as part of the non-DAPS PSCell change procedure. The UE 102 stops communicating with the S-SN 106A via PSCell 126A and attempts to connect to the T-SN 106B via T-PSCell 126B after receiving the configuration for the T-PSCell 126B.

In some implementations, the wireless communication system 100 supports DAPS PSCell change. In one scenario, for example, while the UE 102 is in DC with the MN 104A and the SN 106A, the MN 104A determines to change the SN of the UE 102 from the base station 106A (which may be referred to as the source SN or S-SN) to the base station 106B (which may be referred to as the target SN or T-SN) as part of the DAPS PSCell change procedure. The UE 102 continues communicating with the S-SN 106A via PSCell 126A while attempting to connect to the T-SN 106B via T-PSCell 126B after receiving the configuration for the T-PSCell 126B. After the T-PSCell 126B begins to operate as the PSCell 126B for the UE 102, the UE 102 stops communicating with the S-SN 106A via PSCell 126A.

In different configurations or scenarios of the wireless communication system 100, the base station 104A, 104B can operate as an MeNB, an Mng-eNB, or an MgNB and the base station 106A, 106B can operate as an SgNB or an Sng-eNB. The UE 102 can communicate with the base station 104A or 104B and the base station 106A or 106B via the same radio access technology (RAT), such as EUTRA or NR, or via different RATs.

When the base station 104A is an MeNB and the base station 106A is an SgNB, the UE 102 can be in EUTRA-NR DC (EN-DC) with the MeNB 104A and the SgNB 106A. When the base station 104A is an Mng-eNB and the base station 106A is an SgNB, the UE 102 can be in next generation (NG) EUTRA-NR DC (NGEN-DC) with the Mng-eNB 104A and the SgNB 106A. When the base station 104A is an MgNB and the base station 106A is an SgNB, the UE 102 can be in NR-NR DC (NR-DC) with the MgNB 104A and the SgNB 106A. When the base station 104A is an MgNB and the base station 106A is an Sng-eNB, the UE 102 can be in NR-EUTRA DC (NE-DC) with the MgNB 104A and the Sng-eNB 106A.

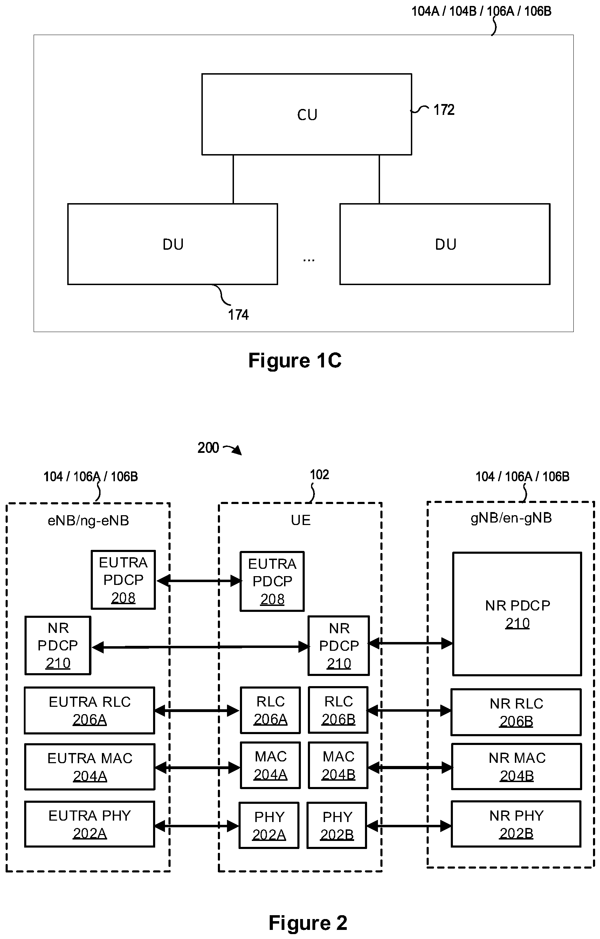

Fig. 1C depicts an example distributed implementation of a base station such as the base station 104A, 104B, 106A, or 106B. The base station in this implementation can include a central unit (CU) 172 and one or more distributed units (DUs) 174. The CU 172 is equipped with processing hardware that can include one or more general-purpose processors such as CPUs and non-transitory computer-readable memory storing machine-readable instructions executable on the one or more general-purpose processors, and/or special-purpose processing units. In one example, the CU 172 is equipped with the processing hardware 130. In another example, the CU 172 is equipped with the processing hardware 140. The processing hardware 140 in an example implementation includes an (C-)SN RRC controller 142 configured to manage or control one or more RRC configurations and/or RRC procedures when the base station 106A operates as an SN or a candidate SN (C-SN). The base station 106B can have hardware same as or similar to the base station 106A. The DU 174 is also equipped with processing hardware that can include one or more general-purpose processors such as CPUs and non-transitory computer-readable memory storing machine-readable instructions executable on the one or more general-purpose processors, and/or special-purpose processing units. In some examples, the processing hardware in an example implementation includes a medium access control (MAC) controller configured to manage or control one or more MAC operations or procedures (*e.g*., a random access procedure) and a radio link control (RLC) controller configured to manage or control one or more RLC operations or procedures when the base station 106A operates as an MN, an SN or a candidate SN (C-SN). The process hardware may include further a physical layer controller configured to manage or control one or more physical layer operations or procedures.

The CU 172 and the DUs 174 in some implementations include separate instances of a Gap configuration controller 134 or 144 to implement CU gap configuration management and DU gap configuration management, respectively.

Fig. 2 illustrates, in a simplified manner, an example radio protocol stack 200 according to which the UE 102 may communicate with an eNB/ng-eNB or a gNB (*e.g*., one or more of the base stations 104A, 104B, 106A, 106B). In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP sublayer 210 over the EUTRA RLC sublayer 206A.

The EUTRA PDCP sublayer 208 and the NR PDCP sublayer 210 receive packets (*e.g*., from an Internet Protocol (IP) layer, layered directly or indirectly over the PDCP layer 208 or 210) that can be referred to as service data units (SDUs), and output packets (*e.g*., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages, for example. On a user plane, the EUTRA PDCP sublayer 208 and the NR PDCP sublayer 210 can provide DRBs to support data exchange.

In scenarios where the UE 102 operates in EUTRA/NR DC (EN-DC), with the base station 104A operating as an MeNB and the base station 106A operating as an SgNB, the wireless communication system 100 can provide the UE 102 with an MN-terminated bearer that uses the EUTRA PDCP sublayer 208, or an MN-terminated bearer that uses the NR PDCP sublayer 210. The wireless communication system 100 in various scenarios can also provide the UE 102 with an SN-terminated bearer, which uses only the NR PDCP sublayer 210. The MN-terminated bearer can be an MCG bearer, a SCG bearer, or a split bearer. The SN-terminated bearer can be, an MCG bearer, an SCG bearer or a split bearer. The MN-terminated bearer can be an SRB *(e.g.,* SRB1 or SRB2) or a DRB. The SN-terminated bearer can an SRB or a DRB.

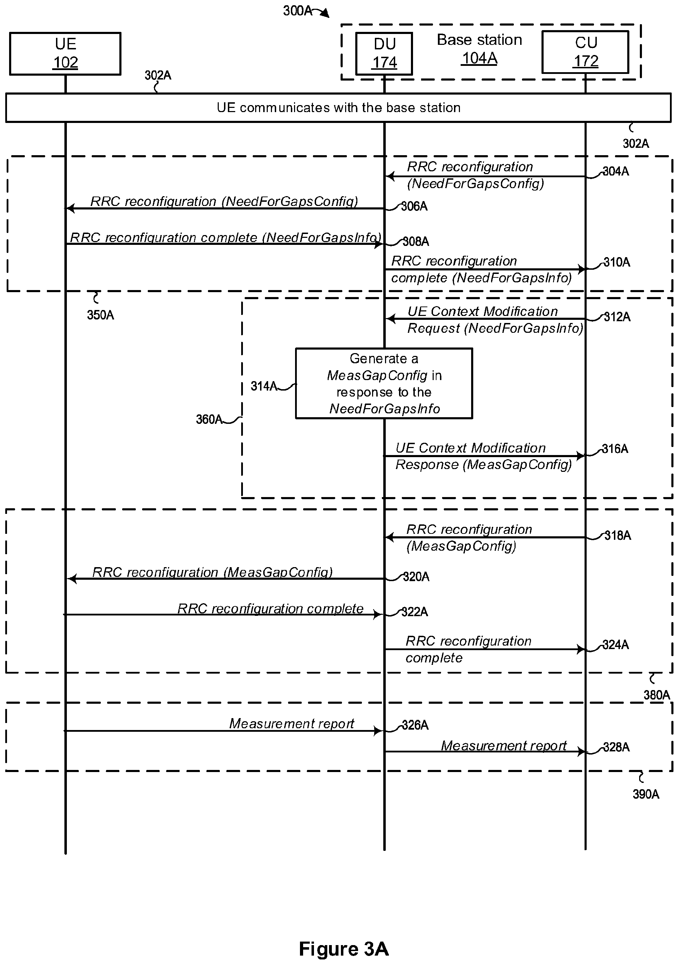

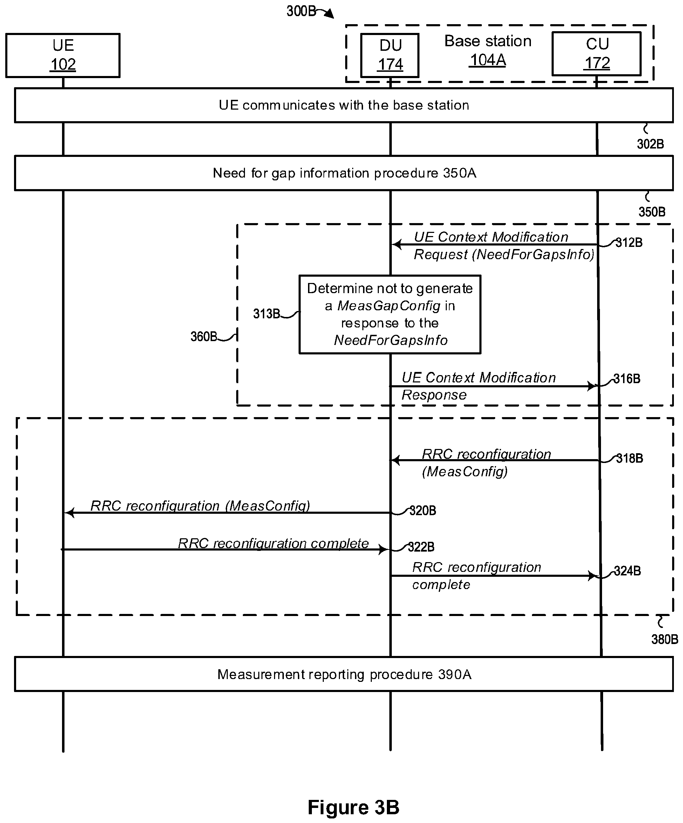

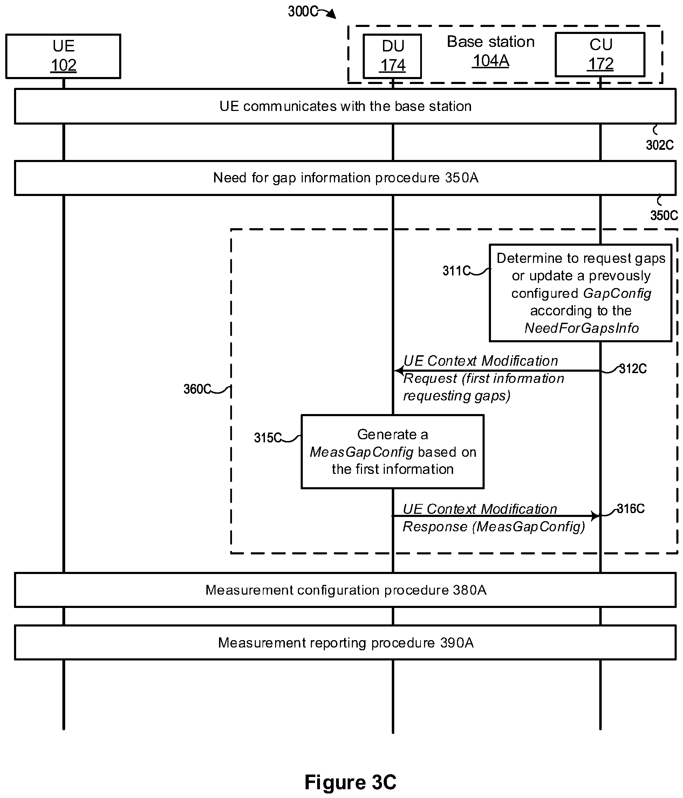

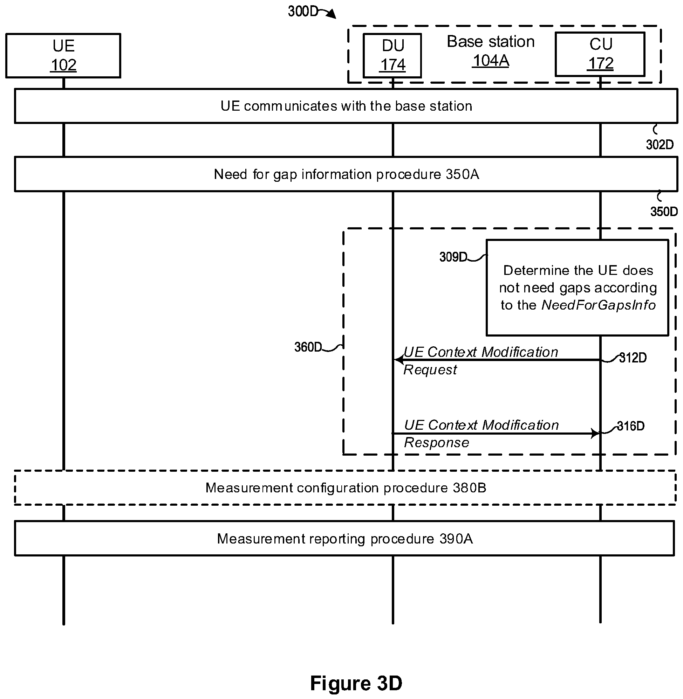

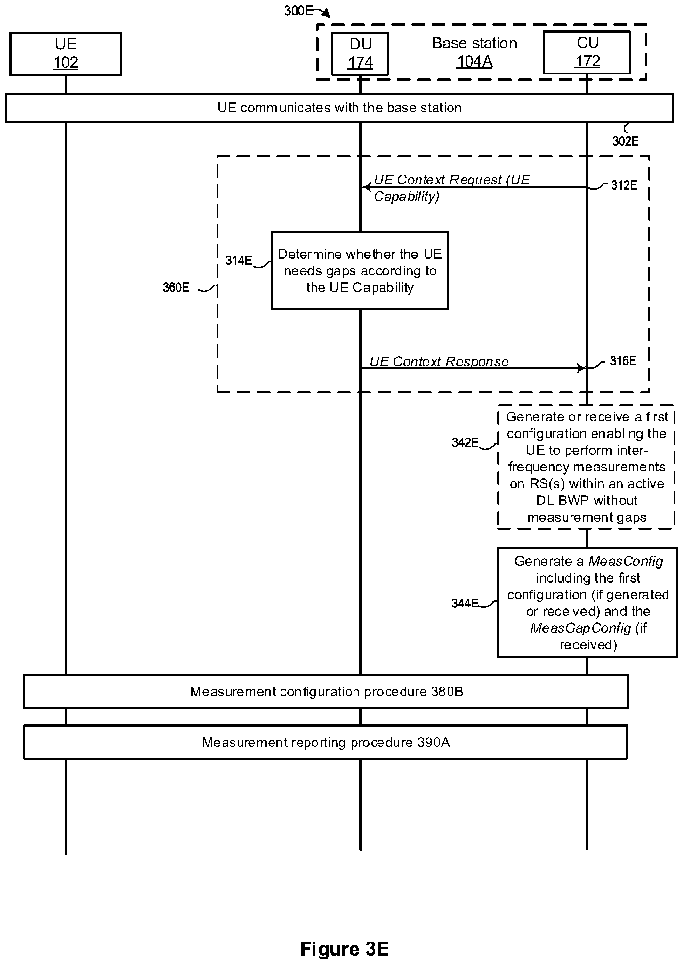

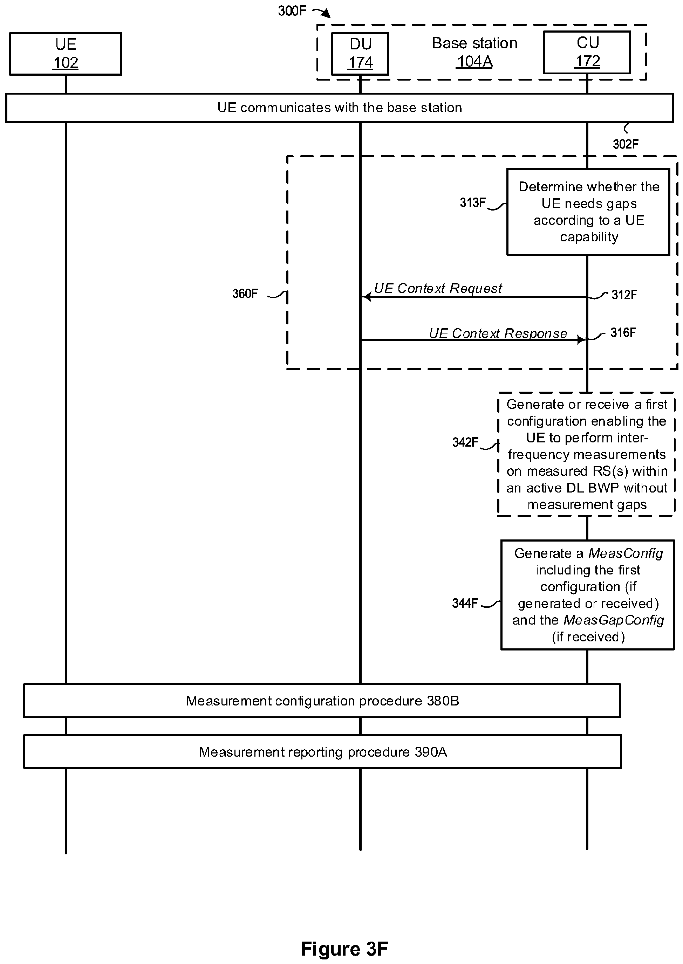

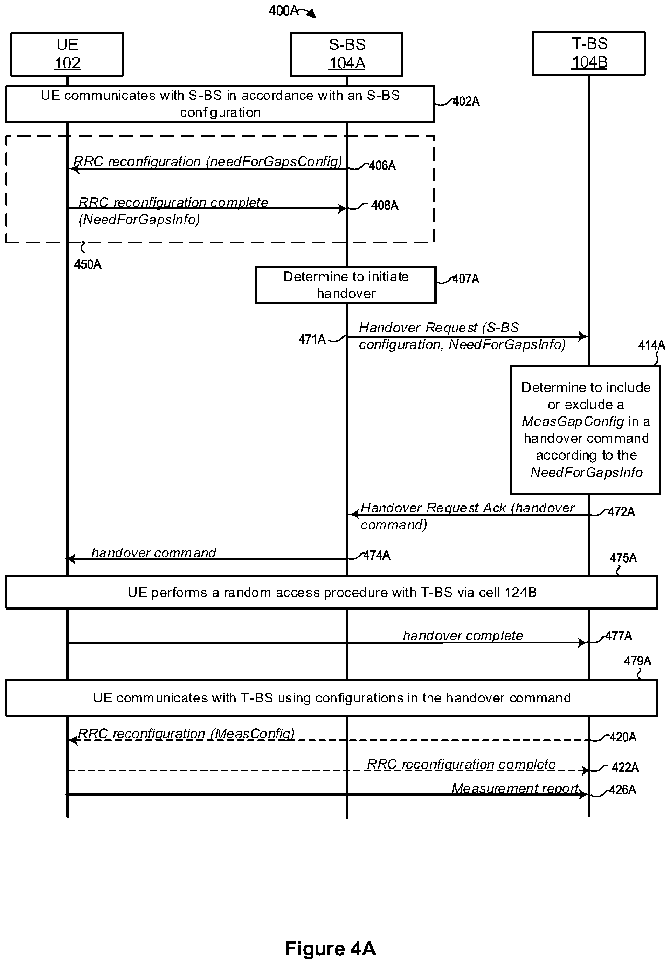

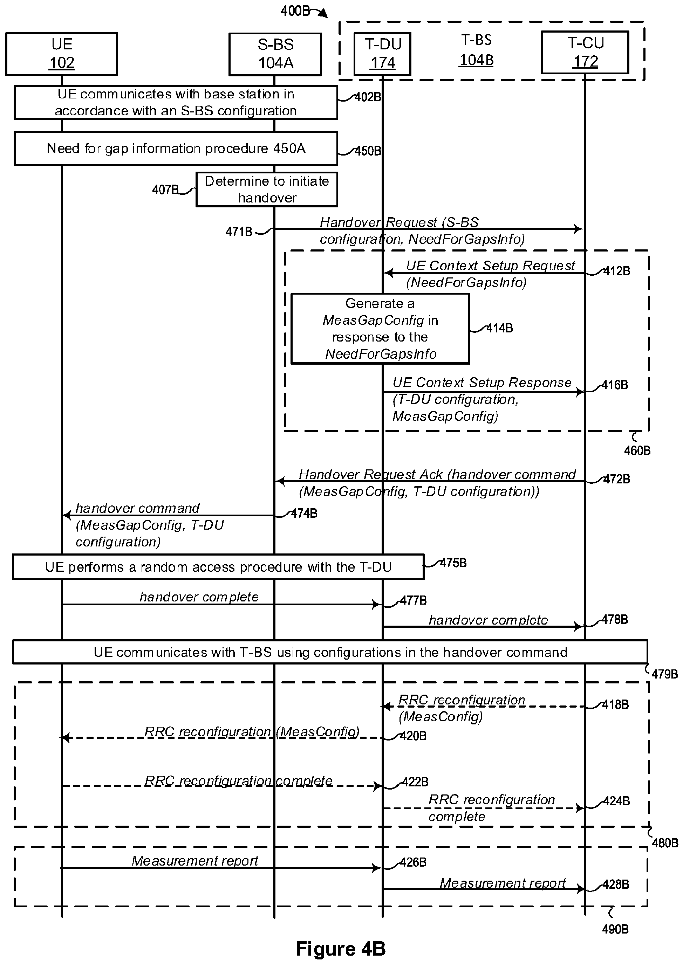

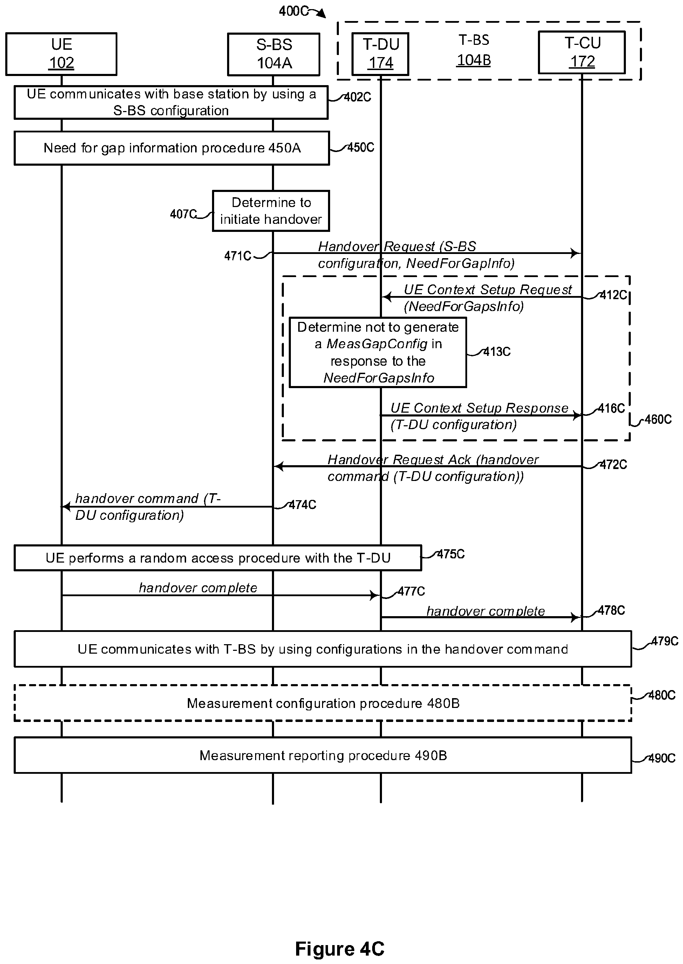

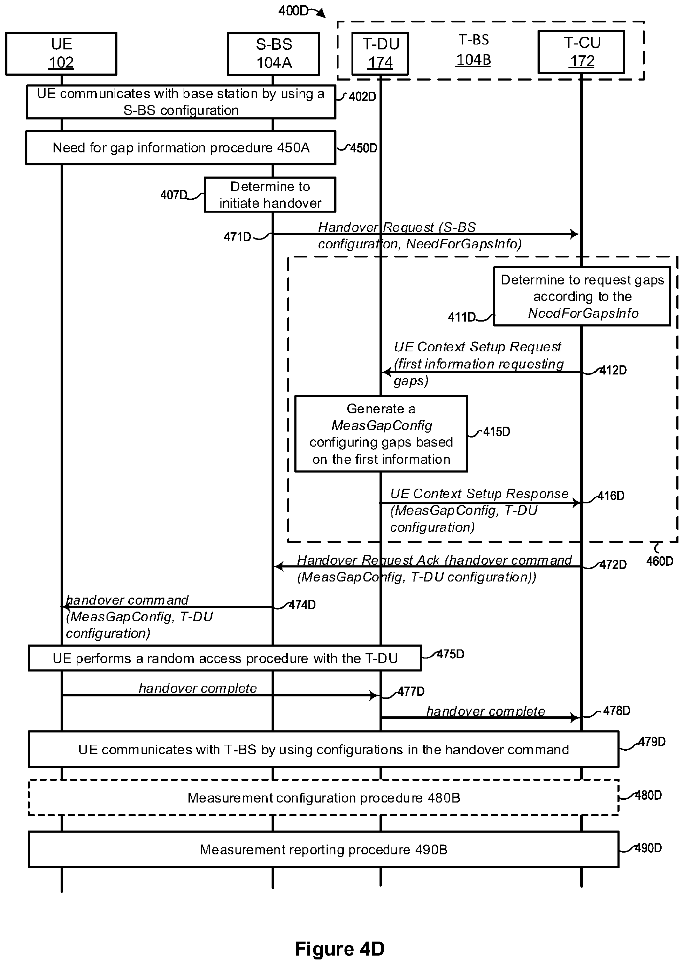

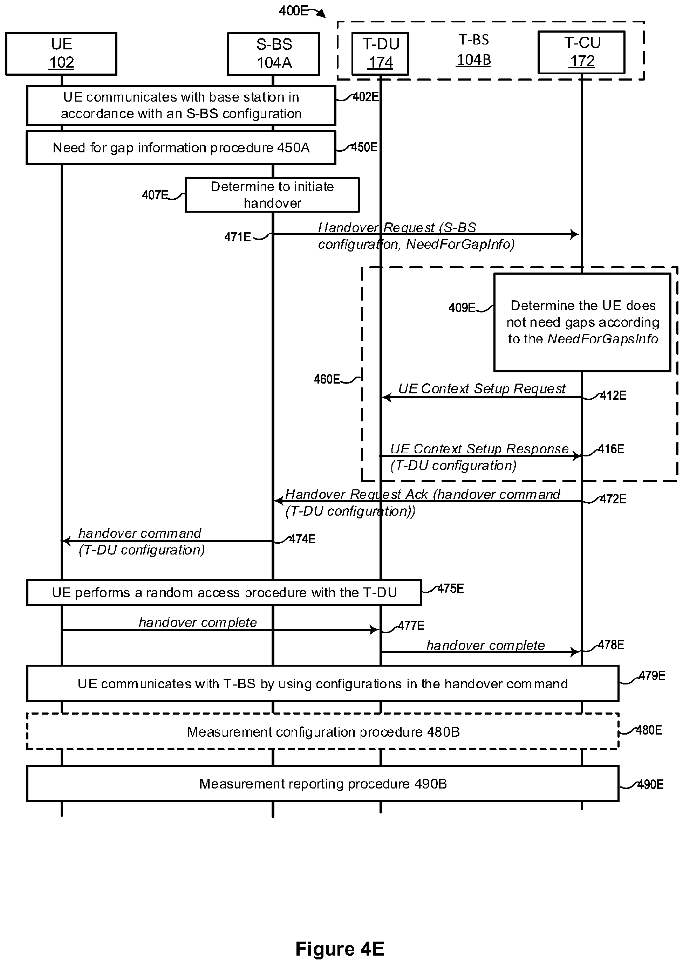

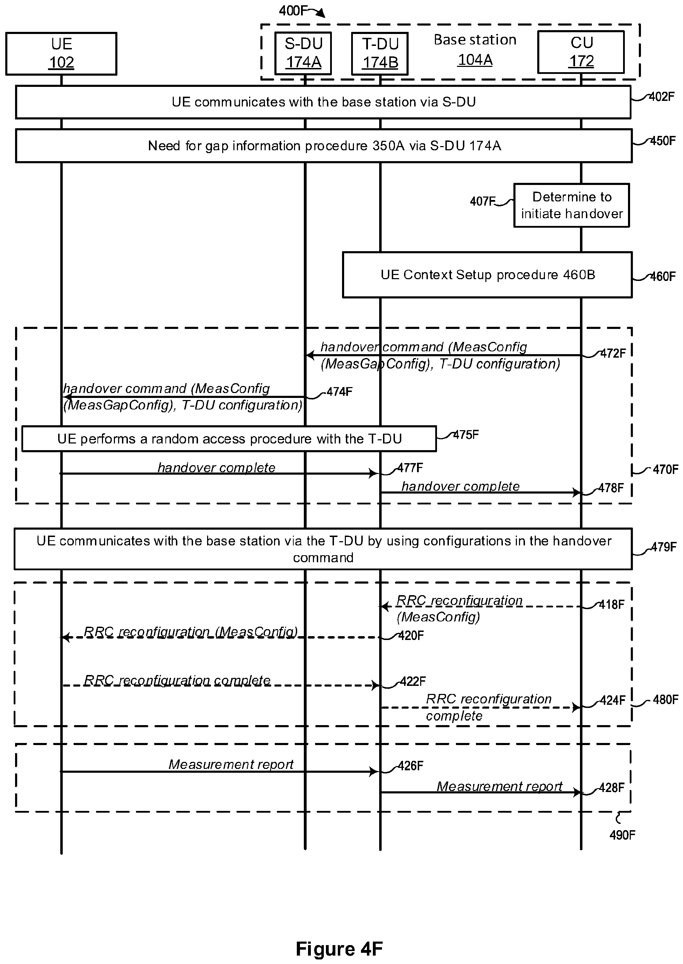

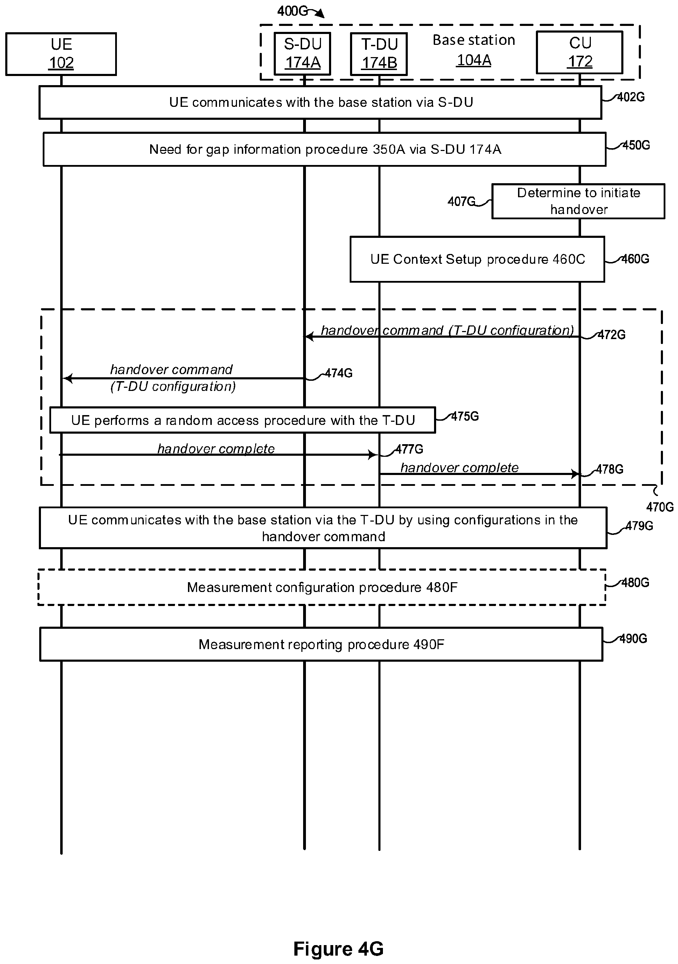

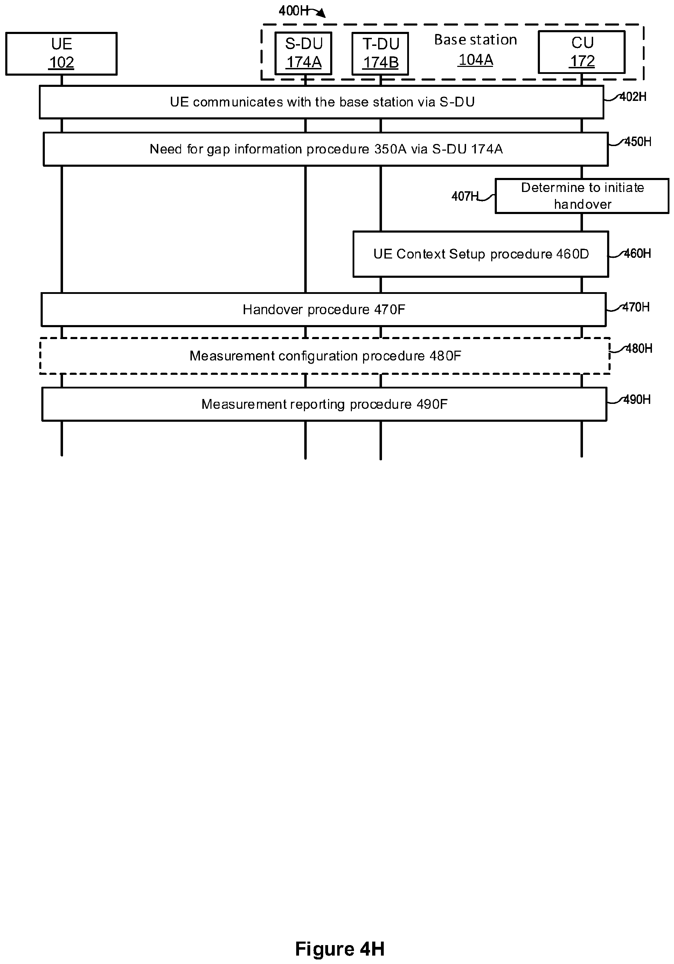

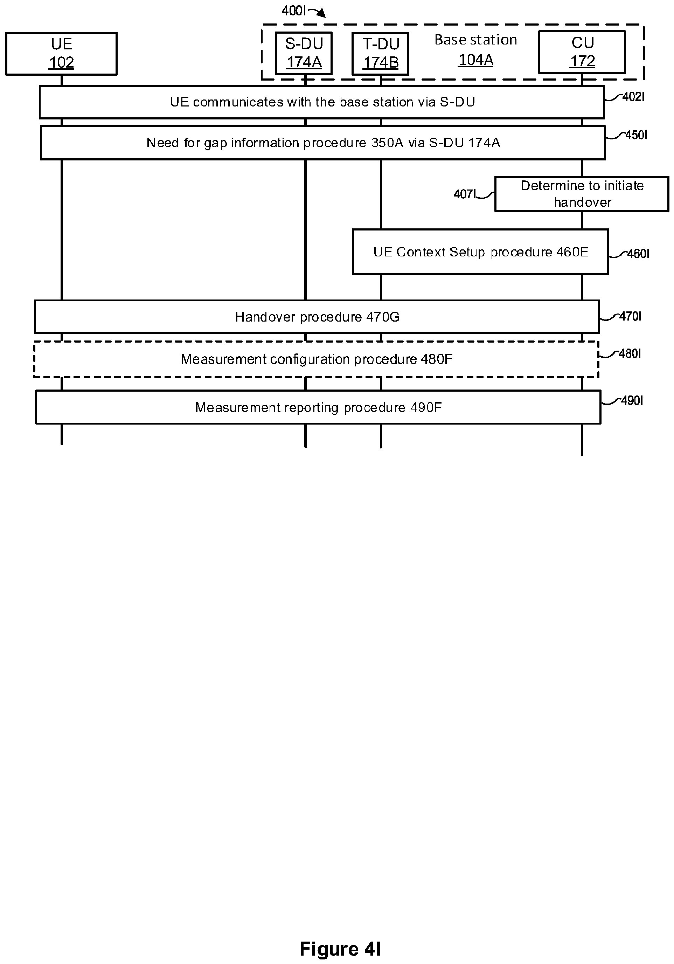

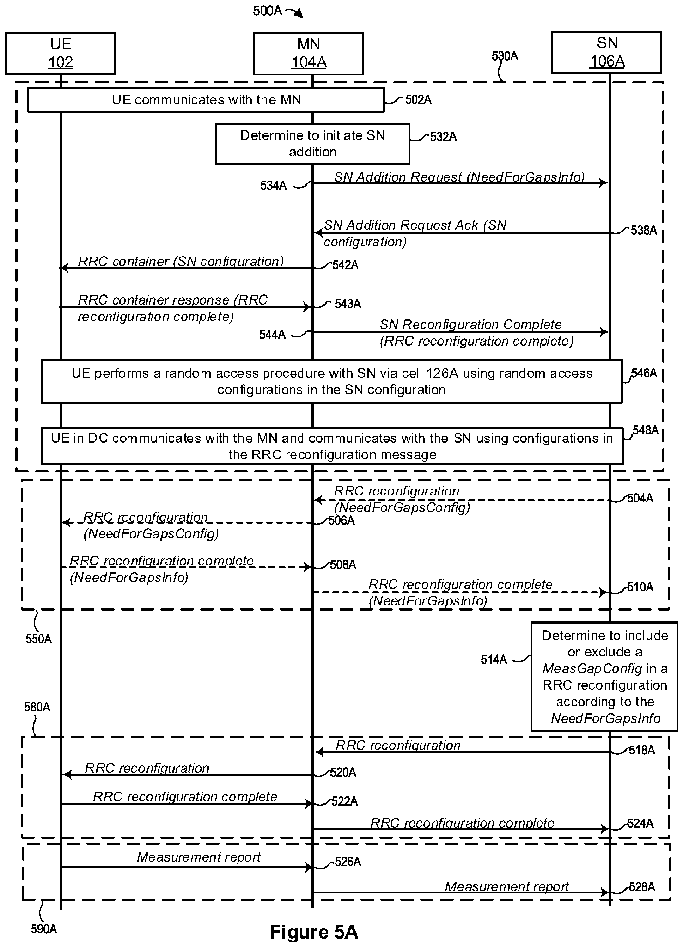

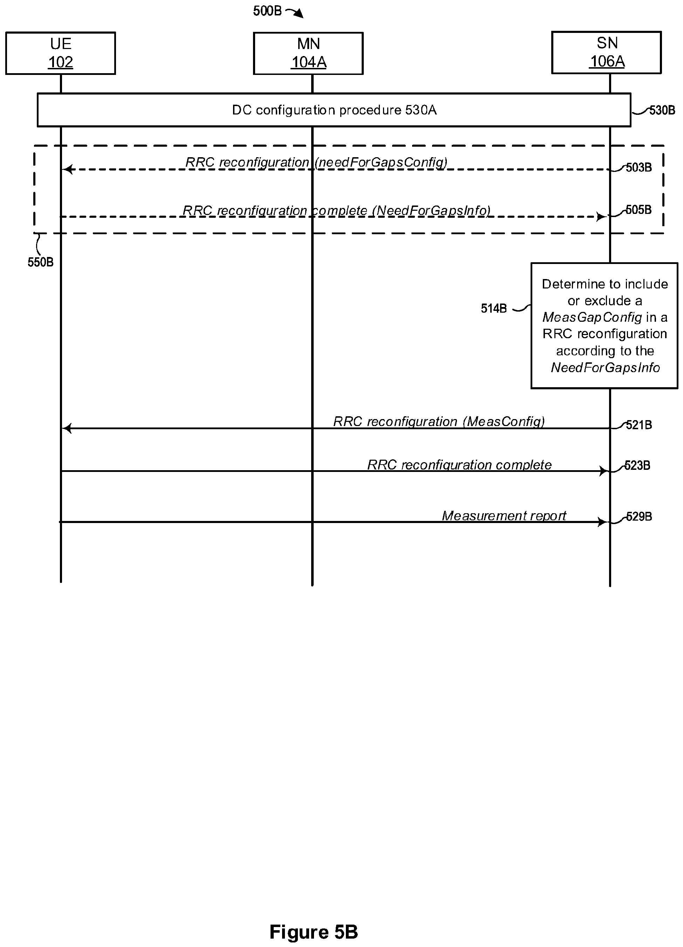

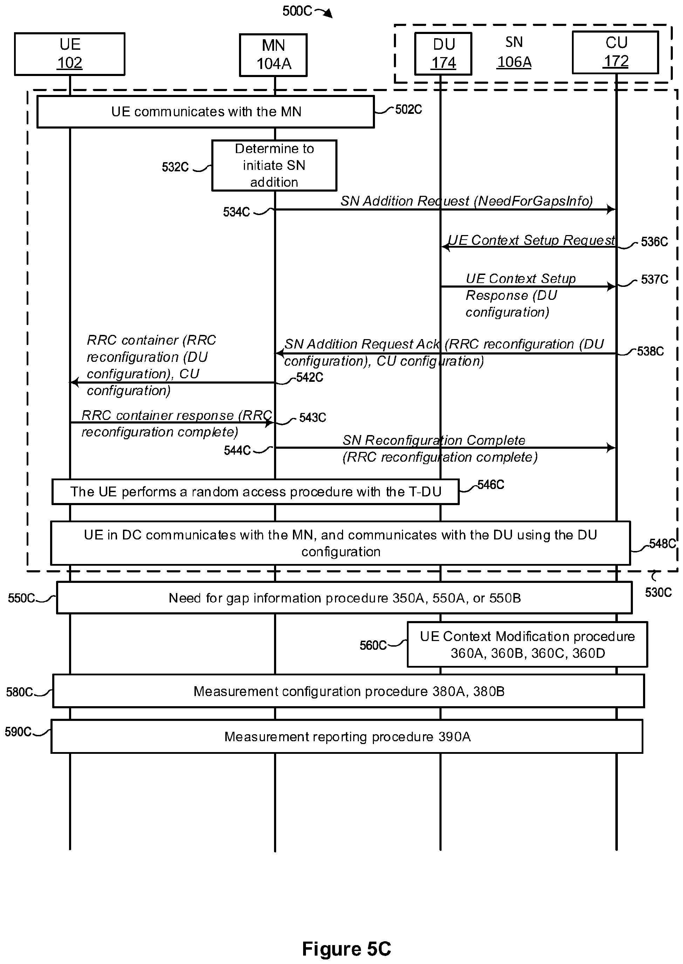

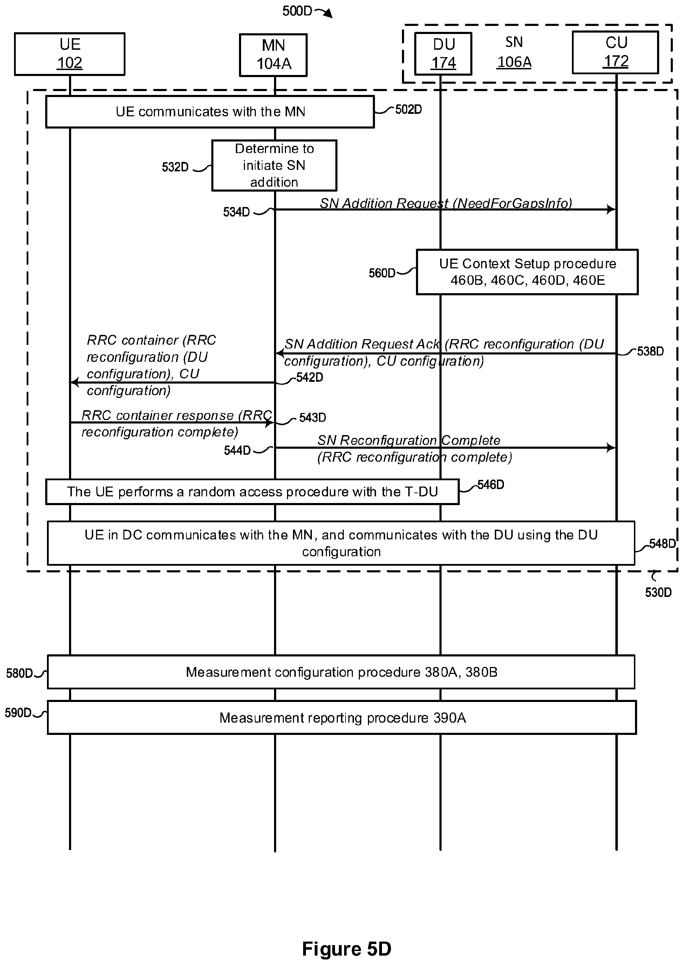

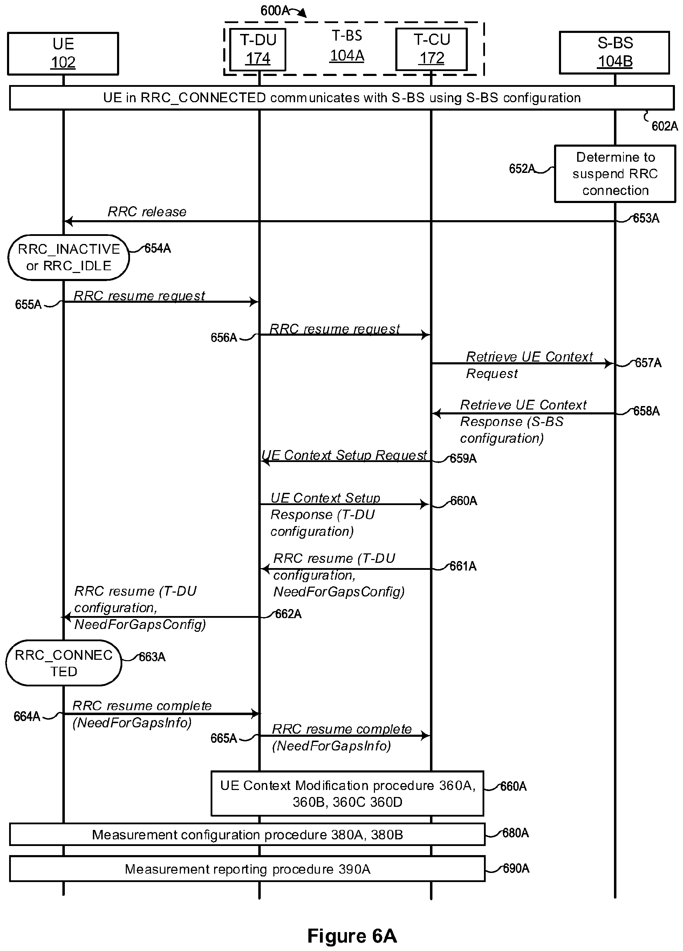

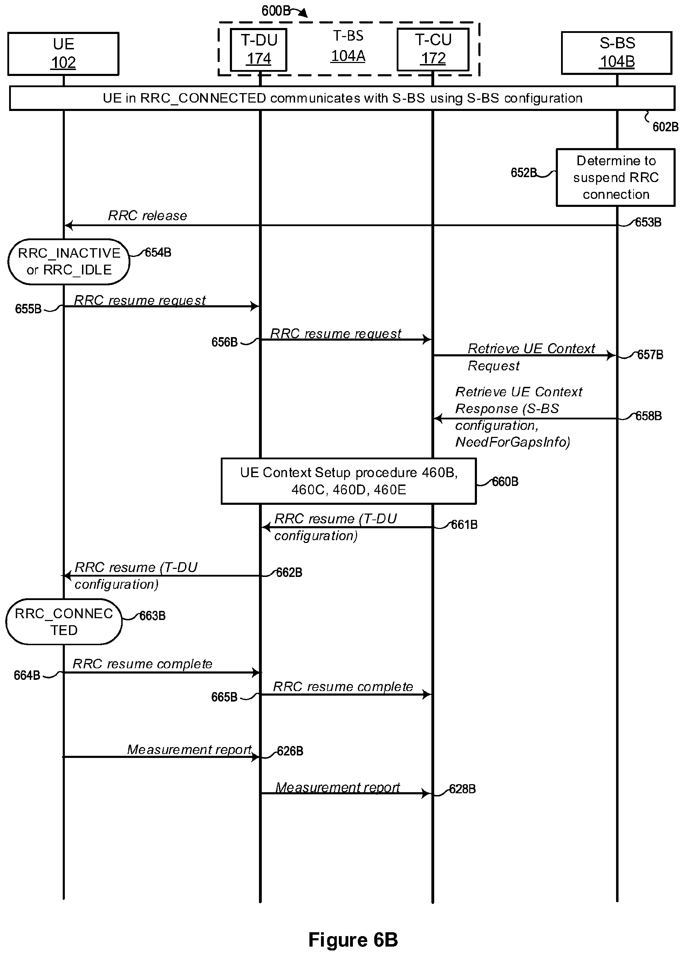

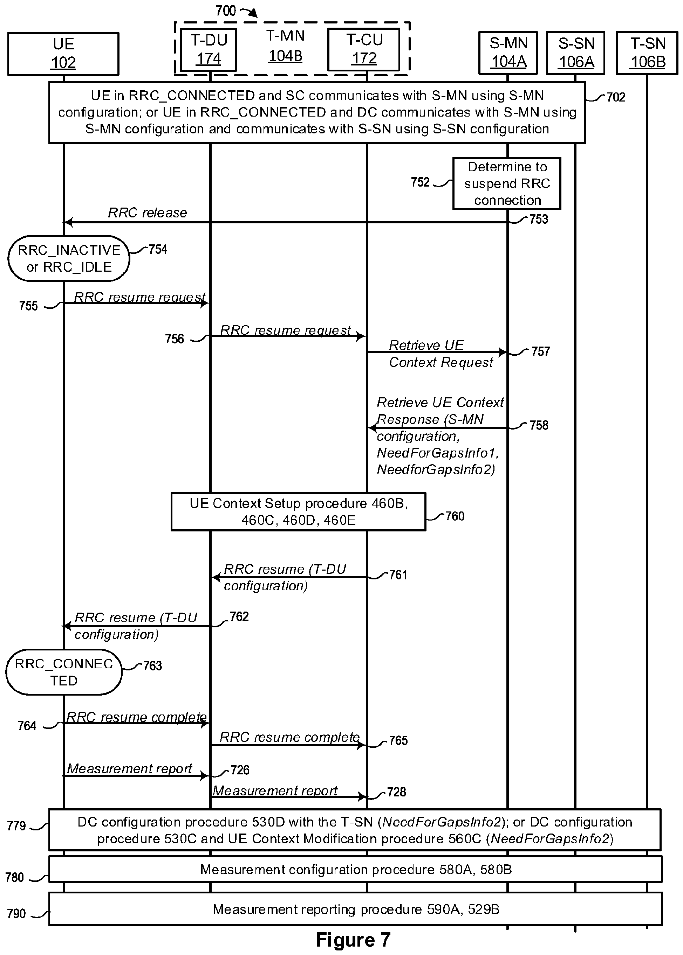

Next, several example scenarios in which a UE and/or a base station manage measurement gap information are discussed with reference to Figs. 3A-7. In particular, Fig. 3 (i.e., 3A through 3D) corresponds to communication scenarios in which a distributed base station having a CU and a DU communicates with a UE. Fig. 4 (*i.e.,* 4A through 4I) corresponds to handover scenarios in which a base station initiates a handover procedure for a UE. Fig. 5 *(i.e.,* 5A through 5D) corresponds to DC scenarios in which a base station initiates an SN addition procedure for a UE. Fig. 6 *(i.e.,* 6A and 6B) and Fig. 7 correspond to resume scenarios in which a base station initiates a Retrieve UE Context procedure for a UE during an RRC resume procedure with the UE.

Referring first to Fig. 3A, the base station 104A in a scenario 300A includes a CU 172 and a DU 174 and provides communication services to the UE 102. Initially, the UE 102 communicates 302A data (*e.g*., uplink (UL) PDUs and/or downlink (DL) PDUs) with the base station 104A (i.e., the CU 172 and DU 174) via the cell 124A. Later in time, the CU 172 initiates an RRC reconfiguration procedure with the UE 102 by sending 304A an RRC reconfiguration including a first need for gaps configuration (*NeedForGapsConfig*) to the DU 174 which in turn transmits 306A the RRC reconfiguration message to the UE 102. The *NeedForGapsConfig* is a configuration the UE 102 can use to report measurement gap requirement information to the RAN 105.

In response to the first *NeedForGapsConfig,* the UE 102 includes a first need for gaps information element *(NeedForGapsInfo)* in an RRC reconfiguration complete message. The *NeedForGapsInfo* IE indicates measurement gap requirement information for the UE 102. The UE 102 transmits 308A the RRC reconfiguration message including the first *NeedForGapsInfo* to the DU 174 which in turn sends 310A the RRC reconfiguration message to the CU 172. The events 304A, 306A, 308A and 310A are collectively referred to in Fig. 3A as a need for gap information procedure 350A.

In some implementations, the CU 172 may indicate one or more frequency bands, for which the UE 102 is to indicate whether gaps are needed to perform measurements, in the first *NeedForGapsConfig.* In one implementation, the CU 172 generates a *requestTargetBandFilterNR* field which includes one or more frequency band indicators *(e.g., FreqBandIndicatorNR* IEs) indicating the one or more frequency bands and includes the *requestTargetBandFilterNR* field in the first *NeedForGapsConfig.* In the first *NeedForGapsInfo,* the UE 102 indicates whether gaps are needed to perform measurements for the one or more frequency bands. In one implementation, in the first *NeedForGapsInfo,* the UE 102 does not indicate whether gaps are needed to perform measurements for one or more additional frequency bands not indicated by the CU 172 in the first *NeedForGapsConfig.* With this implementation, the UE 102 saves power due by not using bits to indicate whether gaps are needed to perform measurements for the one or more additional frequency bands. In another implementation, the UE 102 indicates, in the first *NeedForGapsInfo,* whether gaps are needed to perform measurements for one or more additional frequency bands not indicated by the CU 172 in the first *NeedForGapsConfig.* With this implementation, the CU 172 does not need to initiate another need for gap information procedure (similar to 350A) to request that the UE 102 provide another *NeedForGapsInfo* indicating whether gaps are needed to perform measurements for one or more additional frequency bands.

In other implementations, the CU 172 does not indicate a frequency band in the first *NeedForGapsConfig.* In one such implementation, if the CU 172 does not indicate a frequency band in the first *NeedForGapsConfig,* the UE 102 can determine frequency band(s) for which the UE 102 will indicate measurement gap requirements in the first *NeedForGapsInfo.* The UE 102 can determine the frequency band(s) based on a public land mobile network (PLMN) identity of an operator operating the base station 104A. For example, the UE 102 may store first band information associated with a first PLMN identity, which indicates first frequency band(s) owned by a first operator identified by the first PLMN identity. The UE 102 can generate the first *NeedForGapsInfo* which indicates whether gaps are needed to perform measurements for the first frequency band(s) in the first band information if the base station 104A is operated by the first operator. The UE 102 can store second band information associated to the second PLMN identity, which indicates second frequency band(s) owned by a second operator identified by the second PLMN identity. The UE 102 can generate the first *NeedForGapsInfo* which indicates whether gaps are needed to perform measurements for the second frequency band(s) in the second band information if the base station 104A is operated by the second operator. The first and second frequency band(s) can be completely or partially the same or different.

Alternatively, the UE 102 can directly store a first *NeedForGapsInfo* indicating whether gaps are needed to perform measurements for frequency band(s) owned by a first operator identified by a first PLMN identity, and transmit 322A the RRC reconfiguration complete message including the first *NeedForGapsInfo* if the base station 104A is operated by the first operator. The UE 102 can directly store a second *NeedForGapsInfo* indicating whether gaps are needed to perform measurements for frequency band(s) owned by a second operator identified by a second PLMN identity, and transmit 322A the RRC reconfiguration complete message including the second *NeedForGapsInfo* instead of the first *NeedForGapsInfo* if the base station 104A is operated by the second operator. Note, the stored first/second *NeedForGapsInfo* may or may not in the same format as the first/second *NeedForGapsInfo* transmitted in the RRC reconfiguration message. If the formats are different, the UE 102 converts the stored format to the transmitted format.

In another implementation, if the CU 172 does not indicate a frequency band in the first *NeedForGapsConfig,* the UE 102 indicates whether gaps are needed to perform measurements in the first *NeedForGapsInfo* for all frequency band(s) the UE supports.

In some implementations, the CU 172 transmits 304A the RRC reconfiguration message after the CU 172 activates security for the UE 102. That is, the CU 172 requests that the UE 102 provide a *NeedForGapsInfo* only after activating the security. To activate the security, the CU 172 in one implementation can send a *SecurityModeCommand* message to the DU 174 which in turn transmits the *SecurityModeCommand* message to the UE 102. The UE 102 can send a *SecurityModeComplete* message to the CU 172 via the DU 174. In other implementations, the CU 172 can transmit 304A the *RRC reconfiguration* message before the CU 172 activates the security.

After receiving the first *NeedForGapsInfo,* the CU 172 sends 312A a *UE Context Modification Request* message including the first *NeedForGapsInfo* to the DU 174. In some implementations, the first *NeedForGapsInfo* can be a *NeedForGapsInfo* for NR information element *(NeedForGapsInfoNR)* defined in R2-2004807 or R2-2004811. The DU 174 generates 314A a measurement gap configuration *(MeasGapConfig)* in response to the first *NeedForGapsInfo.* In some implementations, the DU 174 can configure gaps in a gap configuration *(GapConfig)* and includes the *GapConfig* in the *MeasGapConfig* because the DU 174 determines the UE 102 needs gaps to perform measurements. In other implementations, the DU 174 can release a *GapConfig* which was previously configured to the UE 102 at event 302A because the DU 174 determines, based on the *NeedForGapsInfo,* that the UE 102 does not need the *GapConfig* to perform measurements. In such implementations, the *MeasGapConfig* indicates that the UE 102 should release the previously-configured *GapConfig.*

In the *UE Context Modification Request* message, the CU 172 in some implementations includes frequency information indicating at least one carrier frequency for which the CU 172 requests the DU 174 to configure measurement gaps, and/or includes synchronization signal (SS)/physical broadcast channel (PBCH) Block Measurement Time Configuration (SMTC) information for the at least one carrier frequency, in a *UE Context Modification Request* message. The DU 174 generates 314A the *GapConfig* according to the frequency information and/or SMTC information in addition to the *NeedForGapsInfo.* The "carrier frequency" can be referred to as a particular carrier frequency or a particular frequency band in the following description.

The DU 174 sends 316A a *UE Context Modification Response* message including the *MeasGapConfig* to the CU 172 in response to the *UE Context Modification Request* message. In some implementations, the DU 174 does not include the *MeasGapConfig* in the *UE Context Modification Response* message. Instead, the DU 174 sends a *UE Context Modification Required* message including the *MeasGapConfig* to the CU 172 and the CU 172 sends a *UE Context Modification Confirm* message to the DU 174 in response. The events 312A, 314A and 316A are collectively referred to in Fig. 3A as a UE Context Modification procedure 360A.

After the CU 172 receives 316A the *MeasGapConfig,* the CU 172 sends 318A an RRC reconfiguration message including the *MeasGapConfig* to the DU 174 which in turn transmits 320A the RRC reconfiguration message to the UE 102. In response to the RRC reconfiguration message, the UE 102 transmits 322A an RRC reconfiguration complete message to the DU 174 which in turn sends 324A the RRC reconfiguration complete message to the CU 172. The events 318A, 320A, 322A and 324A are collectively referred to in Fig. 3A as a measurement configuration procedure 380A.

After the UE 102 receives the *MeasGapConfig,* the UE 102 can measure one or more carrier frequencies during gaps configured by the *MeasGapConfig.* The UE 102 may be configured by the CU 172 to measure the one or more carrier frequencies before, during or after receiving the *MeasGapConfig.* In some implementations, the CU 172 can include the *MeasGapConfig* in a first measurement configuration (*MeasConfig*) and include the first *MeasConfig* in the RRC reconfiguration message 318A. In the first *MeasConfig,* the CU 172 may configure the UE 102 to measure a first carrier frequency in a frequency band using gaps configured in the *MeasGapConfig.* Alternatively, the CU 172 may perform another measurement configuration procedure similar to event 380A to transmit the UE 102 a second *MeasConfig.* The second *MeasConfig* does not include a *MeasGapConfig* and configures the UE 102 to measure the first carrier frequency in a frequency band using gaps configured in the *MeasGapConfig.* The CU 172 may perform an additional measurement configuration procedure similar to event 380A to transmit the UE 102 a third *MeasConfig,* which does not include a *MeasGapConfig* and configures the UE 102 to measure a second carrier frequency in a frequency band using gaps configured in the *MeasGapConfig.* The first and second carrier frequencies can be in the same frequency band or different frequency bands.

In implementations in which the UE 102 receives (i) a first *MeasConfig* including a *MeasGapConfig,* and (ii) a second *MeasConfig* not including a *MeasGapConfig,* the second *MeasConfig* does not override the previously-received *MeasGapConfig.* The UE 102 can continue to use the *MeasGapConfig* received in the first *MeasConfig* to configure measurement gaps for target frequencies indicated in the second *MeasConfig.*

In some implementations, the CU 172 can include a second *NeedForGapsConfig,* which indicates one or more additional frequency bands, in the RRC reconfiguration message 318A. The UE 102 indicates whether gaps are needed to perform measurements for the one or more additional frequency bands in a third *NeedForGapsInfo,* and includes the third *NeedForGapsInfo* in the RRC reconfiguration complete message 322A. The CU 172 may perform a UE Context Modification procedure similar to event 360A, where the CU 172 provides the third *NeedForGapsInfo* to the DU 174 and receives a *MeasGapConfig* (a second *MeasGapConfig)* from the DU 174. The CU 172 can transmit the second *MeasGapConfig* to the UE 102 in a similar way and the UE 102 can use the second *MeasGapConfig,* as described above.

In other implementations, the CU 172 does not include a *NeedForGapsConfig* in the RRC reconfiguration message 318A and the UE 102 does not include a *NeedForGapsInfo* in the RRC reconfiguration complete message 322A. In such implementations, instead of including a second *NeedForGapsConfig* in the RRC reconfiguration message 318A, the CU 172 can include a second *NeedForGapsConfig* in an additional need for gap information procedure similar to the procedure 350A. The CU 172 can also repeat procedures similar to 360A-380A after performing the additional need for gap information procedure.

The UE 102 applies the *MeasGapConfig* above to perform measurements on a carrier frequency which can be configured by the CU 172 as described above. If the *MeasGapConfig* includes a *GapConfig,* the UE 102 performs measurements during gaps configured by the *GapConfig,* for example. The gaps are periods that the UE 102 uses to perform measurements. In another example, if the *MeasGapConfig* indicates that the UE 102 should release a *GapConfig,* the UE 102 can perform measurements without using gaps. The UE 102 obtains a measurement result from the measurements, includes the measurement result in a measurement report message, and transmits 326A a measurement report message to the DU 174. The DU 174 in turn sends 328A the measurement report message to the CU 172. For example, the measurement result can indicate a value of a reference signal received power (RSRP), reference signal received quality (RSRQ), Received Signal Strength Indicator (RSSI), or signal to noise and interference ratio (SINR). According to the measurement result, the CU 172 can decide whether to configure or release an SCell for the UE 102 or handover the UE 102 to another cell. For example, if the measurement result associated with a cell is above a predetermined threshold, the CU 172 can configure the cell as an SCell for the UE 102. In another example, if the measurement result associated with an SCell exceeds a predetermined threshold, the CU 172 can release the SCell for the UE 102. In yet another example, if the measurement result associated with a cell is above a predetermined threshold, the CU 172 can configure the UE 102 to handover to the cell. The events 326A and 328A are collectively referred to in Fig. 3A as a measurement reporting procedure 390A.

After the need for gap information procedure 350A, the UE 102 may determine to update the *NeedForGapsInfo* the UE 102 previously transmitted 308A to the CU 172. For example, the UE 102 may determine that the UE 102 needs gaps for a particular frequency band when the previous *NeedForGapsInfo* indicated the UE 102 did not require gaps. In another example, the UE 102 may determine that the UE 102 does not need gaps for a particular frequency band when the previous *NeedForGapsInfo* indicated the UE 102 required gaps. To update the *NeedForGapsInfo* provided at event 308A, the UE 102 can send a second *NeedForGapsInfo* in a second RRC reconfiguration complete message in response to a second RRC reconfiguration message received from the CU 172 via the DU 174. In the second RRC reconfiguration message, the CU 172 may include configuration(s), e.g., physical layer configuration, MAC layer configuration, RLC layer configuration, radio bearer configuration and/or measurement configuration. The CU 172 may or may not include the *NeedForGapsConfig* in the second RRC reconfiguration message. The second RRC reconfiguration message and the second RRC reconfiguration complete message can also referred to as a second need for gap information procedure.

After receiving the second *NeedForGapsInfo,* the CU 172 can perform a second UE Context Modification procedure to provide the second *NeedForGapsInfo* to the DU 174, similar to the UE Context Modification procedure 360A. If the DU 174 determines to update the *MeasGapConfig* 316A according to the second *NeedForGapsInfo,* the DU 174 sends a second *MeasGapConfig* to the CU 172 in the second UE Context Modification procedure. Then the CU 172 can send the second *MeasGapConfig* to the UE 102 in a measurement configuration procedure similar to the measurement configuration 380A. If the second *MeasGapConfig* configures gaps, the UE 102 may use the gaps to measure a first carrier frequency (i.e., measure the first carrier frequency during the gaps), in some implementations. If the second *MeasGapConfig* configures gaps and the UE 102 does not need gaps for measuring a second carrier frequency, the UE 102 may not use the gaps to measure the second carrier frequency, in other implementations. The UE 102 measures the second carrier frequency without using gaps. If the second *MeasGapConfig* releases the *GapConfig* configured in the *MeasGapConfig* 318A, the UE 102 releases the *GapConfig* and does not consider gaps configured in the *GapConfig* are available. The UE 102 may measure a particular carrier frequency without using gaps.

In some implementations, the CU 172 can receive a UE capability of the UE 102 from the UE 102 during a UE Capability Transfer procedure at event 302A. In the UE Capability Transfer procedure, the CU 172 sends a *UECapabilityEnquiry* message to the DU 174 which in turn transmits the *UECapabilityEnquiry* message to the UE 102. The UE 102 transmits a *UECapabilityInformation* message including the UE capability to the DU 174 which in turn transmits the *UECapabilityInformation* message to the CU 172. In other implementations, the CU 172 can receive the UE capability in an *Initial UE Context Setup* message or in a *Handover Request* message from a core network (CN) 110 *(e.g.,* MME 114 or AMF 164) at event 302A. In these implementations, the CU 172 transmits a *NeedForGapsConfig* to the UE 102 if the UE capability indicates that the UE 102 supports providing a *NeedForGapsInfo.* For example, the UE can include an *interRAT-NeedForGapsNR* or *nr-NeedForGap-Reporting* field indicating support for providing a *NeedForGapsInfo* in the UE capability. If the UE capability indicates that the UE 102 does not support providing a *NeedForGapsInfo,* the CU 172 does not transmit a *NeedForGapsConfig* to the UE 102. In some implementations, the UE capability can be a *UE-NR-Capability* IE or a *UE-MRDC-Capability* IE. In yet other implementations, the CU 172 can receive the UE capability from another base station *(e.g.,* base station 104B), *e.g.,* during a handover preparation procedure *(e.g.,* in a *Handover Request* message) or a Retrieve UE Context procedure *(e.g.,* in a *Retrieve UE Context Response* message).

In some implementations, the UE 102 may indicate, in the UE capability, one or more frequency bands supported by the UE 102 to communicate with a base station in SC. For example, the UE capability can include a *supportedBandListNR* field which includes one or more *BandNR* IE indicating one or more frequency bands supported by the UE 102. In other implementations, the UE 102 may indicate, in the UE capability, one or more frequency bands supported by the UE 102 for communicating with an MN in DC. For example, the UE capability can include a *supportedBandCombinationList* field (or *BandCombinationList* IE) which includes one or more *FreqBandIndicatorNR* IEs indicating one or more frequency bands supported by the UE 102. In some implementations, the CU 172 can determine (or select) the one or more frequency bands to include in the *NeedForGapsConfig* from the frequency bands supported by the UE 102. In other implementations, the CU 172 can include a frequency band in the *NeedForGapsConfig* that is not supported by the UE 102. If the UE 102 does not support a frequency band indicated in the *NeedForGapsConfig,* the UE 102 in some implementations determines the *NeedForGapsConfig* is valid and ignores the unsupported frequency band. In this case, in one implementation, the UE 102 does not indicate whether gaps are needed for the unsupported frequency band in the *NeedForGapsInfo.* In another implementation, the UE 102 can indicate whether gaps are needed for the unsupported frequency band in the *NeedForGapsInfo* even though the indication is meaningless.

In other implementations, if the UE 102 does not support a frequency band indicated in the *NeedForGapsConfig,* the UE 102 determines the *NeedForGapsConfig* is invalid. In response to the determination, the UE 102 initiates an RRC connection reestablishment procedure. In the RRC connection reestablishment procedure, the UE 102 transmits an *RRCReestablishmentRequest* message to the base station 104A or another base station *(e.g.,* base station 104B). The UE 102 receives a *RRCReestablishment* message from the base station 104A or another base station *(e.g.,* the base station 104B) in response to the *RRCReestablishmentRequest* message. The UE 102 can transmit a *RRCReestablishmentComplete* message to the *RRCReestablishment* message.

To transmit a DL RRC message (*e.g*., the RRC reconfiguration message, the *SecurityModeCommand* message, etc.) to the UE 102 through the DU 174, the CU 172 generates a PDCP PDU including the RRC message and generates a DL interface message (i.e., CU to DU interface message) including the PDCP PDU. The CU 172 sends the DL interface message to the UE 102. The DU 174 extracts the PDCP PDU from the DL interface message and transmits the PDCP PDU to the UE 102 through RLC (206A, 206B), MAC (204A, 204B) and PHY (202A, 202B). In some implementations, the DL interface message is an F1 application protocol (F1AP) message, *e.g.,* a *DL RRC Message Transfer* message, a *UE Context Modification Request* message, or a *UE Context Modification Confirm* message. Similarly, the UE 102 generates a PDCP PDU including a UL RRC message (*e.g*., the RRC reconfiguration complete message, the *SecurityModeComplete* message, etc.) and transmits the PDCP PDU to the DU 174 through RLC (206A, 206B), MAC (204A, 204B) and PHY (202A, 202B). When the DU 174 receives the PDCP PDU from the UE 102, the DU 174 generates a UL interface message (i.e., DU to CU interface message) including the PDCP PDU and sends the UL interface message to the CU 172, which in turn obtains the PDCP PDU from the UL interface message and obtains the UL RRC message from the PDCP PDU. In some implementations, the UL interface message is a F1AP message, *e.g.,* a *UL RRC Message Transfer* message, a *UE Context Modification Response* message, or a *UE Context Modification Required* message.

In some implementations, if the base station 104A is a gNB, the RRC reconfiguration message and the RRC reconfiguration complete message can be an *RRCReconfiguration* message and an *RRCReconfigurationComplete* message, respectively. In other implementations, if the base station 104A is an eNB or an ng-eNB, the RRC reconfiguration message and the RRC reconfiguration complete message can be an *RRCConnectionReconfiguration* message and an *RRCConnectionReconfigurationComplete* message, respectively.

Now referring to Fig. 3B, according to a scenario 300B, the base station 104A includes a CU 172 and a DU 174 and provides communication services to the UE 102. Events in this scenario similar to those discussed above are labeled with the same reference numbers. The differences between the scenarios of Fig. 3A and Fig. 3B are discussed below.

In contrast to event 314A, the DU 174 determines 313B not to generate a *MeasGapConfig* in response to the *NeedForGapsInfo,* i.e., because the DU 174 determines the UE 102 does not need gaps to perform measurements. In response to the determination 313B, the DU 174 does not configure gaps for the UE 102 and generates a *UE Context Modification Response* message excluding a *MeasGapConfig.* The DU 174 sends 316B the *UE Context Modification Response* message to the CU 172 in response to the *UE Context Modification Request* message 312B. The events 312B, 313B and 316B are collectively referred to in Fig. 3B as a UE Context Modification procedure 360B.

After the CU 172 receives 316B the *UE Context Modification Response* message, the CU 172 can generate a *MeasConfig* which configures the UE 102 to perform measurements on a carrier frequency in a frequency band that the UE 102 does not need gaps to measure. The CU 172 sends 318B an RRC reconfiguration message including the *MeasConfig* to the DU 174 which in turn transmits 320B the RRC reconfiguration message to the UE 102. In contrast to the event 318A, the RRC reconfiguration message 318B does not include a *MeasGapConfig.* In response to the RRC reconfiguration message, the UE 102 transmits 322B an RRC reconfiguration complete message to the DU 174 which in turn sends 324B the RRC reconfiguration complete message to the CU 172. The events 318B, 320B, 322B and 324B are collectively referred to in Fig. 3B as a measurement configuration procedure 380B.

Now referring to Fig. 3C, according to a scenario 300C, the base station 104A includes a CU 172 and a DU 174 and provides communication services to the UE 102. Events in this scenario similar to those discussed above are labeled with the same reference numbers. The differences between the scenarios of Fig. 3A and Fig. 3C are discussed below.

In the scenario 300C, the CU 172 analyzes the *NeedForGapsInfo* and determines that the UE 102 needs gaps to perform measurements on at least one carrier frequency. In response, the CU 172 determines 311C to request gaps for the UE 102. In response to the determination 311C, the CU 172 sends 312C to the DU 174 a *UE Context Modification Request* message including first information, where the first information requests gaps for the UE 102. The first information, for example, may be an information element requesting that the DU 174 generate a measurement gap configuration including measurement gaps for the UE 102. In response, the DU 174 generates 315C a *MeasGapConfig* for the UE 102 based on the first information. In some implementations, the DU 174 generates 315C a *MeasGapConfig* including a *GapConfig* configuring gaps for the UE 102 based on the first information. In other implementations, the DU 174 generates 315C a *MeasGapConfig* updating a previously configured *GapConfig* for the UE 102 based on the first information.

In some implementations, the first information includes frequency information indicating at least one carrier frequency for which the CU 172 requests the DU 174 to configure gaps, and/or includes SMTC information for the at least one carrier frequency in a *UE Context Modification Request* message. The DU 174 can generate a *GapConfig* configuring gaps for the UE 102 to measure the at least one carrier frequency and include the *GapConfig* in the *MeasGapConfig* or in the UE Context Modification Response message. In some implementations, the CU 172 can determine the first information according to the *NeedForGapsInfo.* For example, if the CU 172 determines that the UE 102 needs gaps to measure a particular carrier frequency of a frequency band according to the *NeedForGapsInfo,* the CU 172 indicates the particular carrier frequency or the frequency band in the frequency information and/or includes SMTC information for the particular carrier frequency. If the CU 172 determines that the UE 102 does not need gaps to measure a particular carrier frequency according to the *NeedForGapsInfo,* the CU 172 does not indicate the particular carrier frequency or the frequency band in the frequency information and/or include SMTC information for the particular carrier frequency or the frequency band.

In accordance with 3GPP technical specification (TS) 38.473, if the CU 172 includes SMTC information for a frequency in a *UE Context Modification Request* message, then the DU 174 shall generate measurement gaps based on the SMTC information. Thus, the DU 174 generates 315C the *MeasGapConfig* based on the SMTC information. The DU 174 transmits 316C to the CU 172 a *UE Context Modification Response* message including the *MeasGapConfig.* The events 311C, 312C, 315C, and 316C are collectively referred to in Fig. 3C as a UE Context Modification procedure 360C.

In some implementations, the DU 174 generates a *GapConfig* configuring gaps where one or more SS/PBCH transmissions occur on the at least one carrier frequency. The DU 174 includes the *GapConfig* in the *MeasGapConfig* so that the UE 102 can receive or detect the SS/PBCH transmissions in the gaps on the at least one carrier frequency. In one implementation, the at least one carrier frequency can include the first carrier frequency. In another implementation, the at least one carrier frequency can include the first carrier frequency and the second carrier frequency.

Now referring to Fig. 3D, according to a scenario 300D, the base station 104A includes a CU 172 and a DU 174 and provides communication services to the UE 102. Events in this scenario similar to those discussed above are labeled with the same reference numbers. The differences between the scenarios of Fig. 3C and Fig. 3D are discussed below.

In contrast to the scenario 300C, in the scenario 300D the CU 172 analyzes the *NeedForGapsInfo* and determines 309D that the UE does not need gaps to perform measurements on at least one carrier frequency as a result of analyzing the *NeedForGapsInfo.* In response, the CU 172 may send 312D, to the DU 174, a *UE Context Modification Request* message that does not indicate the DU 174 to configure gaps for the UE 102 or that indicates to the DU 174 to release gaps configured in a current *GapConfig* (i.e., previously configured) for the UE 102. In response to the *UE Context Modification Request* message, the DU 174 does not configure gaps for the UE 102 or releases the *GapConfig,* and sends 316D a *UE Context Modification Response* message to the CU 172. In one implementation, the DU 174 generates a new *MeasGapConfig* indicating releasing the current *GapConfig.* In another implementation, the CU 172 generates a new *MeasGapConfig* indicating releasing the current *GapConfig.* In these implementations, the CU 172 can include the new *MeasGapConfig* in the current *MeasConfig* in the RRC reconfiguration message the CU 172 transmits at event 318B. The UE 102 releases the current *GapConfig* in response to the new *MeasGapConfig.* Alternatively, the CU 172 refrains from sending a *UE Context Modification Request* message requesting the DU 174 to configure gaps for the UE 102 in response to the determination 309D. The events 309D, 312D and 316D are collectively referred to in Fig. 3D as a UE Context Modification procedure 360D.

In some implementations, the UE 102 may use gaps configured in the current *GapConfig* to measure a particular carrier frequency before releasing the current *GapConfig.* After releasing the current *GapConfig,* the UE 102 may measure the particular carrier frequency without using gaps.

In some implementations, the CU 172 indicates to the DU 174 to release gaps configured for the UE 102 or to not generate gaps for the UE 102 by excluding SMTC information in the *UE Context Modification Request* message transmits at event 312A. The DU 174 releases the current *GapConfig* (i.e., gaps configured for the UE 102) or does not configure gaps for the UE 102 (e.g., does not generate a *MeasGapConfig* configuring gaps for the UE 102) in response to the *UE Context Modification Request* message excluding SMTC information. In other implementations, the CU 172 includes, in the *UE Context Modification Request* message, an indication to release gaps configured for the UE 102 or to not configure gaps for the UE 102. For example, the indication can be a dedicated IE defined specifically to indicate that the DU 174 should not generate a measurement gap configuration. In yet other implementations, the CU 172 indicates in the *UE Context Modification Request* message to exclude or release (all of) the at least one carrier frequency which the UE uses the gaps (i.e., the current *GapConfig)* to measure. For example, the CU 172 can include in the *UE Context Modification Request* message a *MeasConfig* (or a new or similar IE) excluding or releasing (all of) the at least one carrier frequency which the UE uses the gaps to measure. The DU 174 does not configure gaps for the UE 102 or releases the current *GapConfig* in response to the *UE Context Modification Request* message or the *MeasConfig* IE. That is, if the DU 174 identifies that (all of) the at least one carrier frequency which the UE uses the gaps to measure is released of excluded in a *MeasConfig* in a UE *Context Modification Request* message, the DU 174 does not configure gaps for the UE 102 or releases the current *GapConfig.* Otherwise, the DU 174 either generates a new *GapConfig* configuring gaps for the UE 102, updates the current *GapConfig,* or retains the current *GapConfig* (i.e., does not generate a new *GapConfig).* The DU 172 can include the new *GapConfig* in a *MeasGapConfig* and include the *MeasGapConfig* in the UE *Context Modification Response* message. The new *GapConfig* and the current *GapConfig* can be the same or different. In some implementations, the CU 172 can include a measurement object list (e.g., a *MeasObjectToAddModList* IE or a *MeasObjectToRemoveList* IE) in the *MeasConfig* to exclude or release the (all of) at least one carrier frequency which the UE uses the gaps to measure. For example, the CU 172 excludes the (all of) at least one carrier frequency in the *MeasObjectToAddModList.* In another example, the CU 172 releases the (all of) at least one carrier frequency in the *MeasObjectToRemoveList.*

In some implementations, the UE 102 generates the *NeedForGapsInfo* described above (i.e., with reference to Figs. 3A-3D) for single connectivity (SC) cases. The CU 172 or the DU 174 uses the *NeedForGapsInfo* described in Figs. 3A-3D to determine whether the UE 102 needs gaps only when the UE 102 is SC. For example, the base station 104A determines that the UE in SC is capable of performing measurements on one or more carrier frequencies of a particular frequency band without gaps according to the *NeedForGapsInfo.* In response to the determination, the base station 104A transmits a *MeasConfig* configuring the UE 102 in SC to measure the one or more carrier frequencies without configuring gaps to the UE 102. Later, the base station 104A (i.e., MN 104A) configures the UE in DC as described below with reference to Fig. 5A-5D. The MN 104A transmits a *MeasGapConfig* configuring gaps to the UE 102 which has/is being in DC so that the UE 102 in DC uses gaps configured in the *MeasGapConfig* to perform measurements on the one or more carrier frequencies. That is, the UE 102 in DC is not capable of performing measurements on the one or more carrier frequencies without gaps. Before receiving the *MeasGapConfig,* the UE 102 in DC can suspend performing measurements on the one or more carrier frequencies. The MN 104A can include the *MeasGapConfig* in an RRC message *(e.g.,* an RRC container message 542A or an RRC reconfiguration message generated by the MN 104A) and transmit the RRC message to the UE 102. The UE 102 transmits an RRC response message *(e.g.,* an RRC container response message 543A or an RRC reconfiguration complete message generated by the UE 102) to the MN 104A in response to the RRC message. The MN 104A can release the gaps configured in the *MeasGapConfig* while or after the UE 102 transitions from DC to SC. In some implementations, the MN 104A can be a disaggregated base station consisting of CU 172 and DU 174 or can be an aggregated (or integrated) base station. The UE 102 can additionally transmit a *NeedForGapsInfo* for DC cases to the MN 104A or the MN 104A can receive the *NeedForGapsInfo* for DC cases from another base station (e,g, base station 104B) or the CN 110 (*e.g*., MME 114 or AMF 164). If the MN 104A receives the *NeedForGapsInfo* for DC cases, the MN 104A can determine whether the UE in DC is capable of performing measurements on one or more carrier frequencies of a particular frequency band with or without gaps according to the *NeedForGapsInfo* for DC cases. If the MN 104A determines no gaps are needed, the MN 104A does not transmit a *MeasGapConfig* configuring gaps to the UE 102 which has/is being in DC so that the UE 102 in DC performs measurements on the one or more carrier frequencies.

In other implementations, the UE 102 generates the *NeedForGapsInfo* described above for both SC and DC cases. The base station 104A can use the *NeedForGapsInfo* as described in Figs. 3A-3D to determine whether the UE 102 needs gaps irrespective of the UE 102 is in SC or DC. In yet other implementations, the UE 102 can generate a *NeedForGapsInfo* only for the DC cases as described in Fig. 5A. In some implementations, the MN 104A can be a disaggregated base station consisting of CU 172 and DU 174 or can be an aggregated (or integrated) base station.

Now referring to Fig. 3E, according to a scenario 300E, the base station 104A includes a CU 172 and a DU 174 and provides communication services to the UE 102. Events in this scenario similar to those discussed above are labeled with the same reference numbers. The differences among the scenarios of Fig. 3E and Figs 3A-B are discussed below.

The CU 172 may receive a UE Capability *(e.g.,* a *NeedForGapsInfo* IE, an *interFrequencyMeas-NoGap* field, a *UE-NR-Capability* IE, a *UE-EUTRA-Capability* IE, and/or a *UE-MRDC-Capability* IE) of the UE 102 at event 302E. For example, the CU 172 receives the UE Capability in an *UECapabilityInformation* message from the UE 102 during a UE Capability Enquiry procedure. In another example, the CU 172 can receive the UE Capability from another base station (e.g., base station 104B) or CN 110 (not shown in Fig. 3E).

After receiving the UE Capability, the CU 172 sends 312E a *UE Context Request* message *(e.g., UE Context Modification Request* or *UE Context Setup Request* message) including the UE Capability to the DU 174. The DU 174 can determine 314E whether the UE needs gaps according to the UE Capability. If the DU 174 determines based on the UE Capability that the UE needs gaps for measuring a carrier frequency, the DU 174 generates a *MeasGapConfig* configuring gaps for the UE 102 as described for event 314A and sends 316E a *UE Context Response* message including the *MeasGapConfig.* If the DU 174 determines based on the UE Capability that the UE does not need gaps, the DU 174 does not generate a *GapConfig* for the UE 102 and sends 316E a *UE Context Response* message excluding a *GapConfig,* or alternatively, the DU 174 generates a *MeasGapConfig* releasing a *GapConfig* previously configured for the UE 102 and sends 316E a *UE Context Response* message including the *MeasGapConfig.* The events 312E, 314E, and 316E are collectively referred to in Fig. 3E as a UE Context procedure 360E.

Before or after receiving the *UE Context Response* message, the CU 172 can generate 342E a first configuration enabling the UE 102 to perform inter-frequency measurement on reference signal(s) (RS(s)) within an active DL BWP without measurement gaps. The RS(s) can be channel state information RS(s) (CSI-RS(s)) or synchronization signal and/or physical broadcast channel (PBCH) block (SSB). In some implementations, if the UE Capability includes the *interFrequencyMeas-NoGap* field, the CU 172 can generate 342E the first configuration. In other implementations, if the UE Capability does not include the *interFrequencyMeas-NoGap* field, the CU 172 does not generate 342E the first configuration. Alternatively, the CU 172 may not generate the first configuration and may instead receive 342E the first configuration from the DU 174 in the *UE Context Response* message at event 316E. In some implementations, if the UE Capability includes the *interFrequencyMeas-NoGap* field, the DU 174 can generate the first configuration. In other implementations, if the UE Capability does not include the *interFrequencyMeas-NoGap* field, the DU 174 does not generate 342E the first configuration.

If the CU 172 generates or receives the first configuration, and/or receives the *MeasGapConfig,* the CU 172 generates a *MeasConfig* including the first configuration and/or the *MeasGapConfig.* The CU 172 performs a measurement configuration procedure 380B to send the *MeasConfig* to the UE 102. If the *MeasConfig* includes the *GapConfig* and the UE 102 needs gaps to measure a carrier frequency (i.e., measure RS(s) on the carrier frequency), the UE 102 may use gaps configured in the *GapConfig* to measure the carrier frequency. If the *MeasConfig* includes the *GapConfig* and the UE 102 does not need gaps to measure a carrier frequency (i.e., measure RS(s) on the carrier frequency), the UE 102 may measure the carrier frequency with or without gaps. If the *MeasConfig* excludes a *GapConfig* or releases a *GapConfig* previously configured to the UE 102 and the UE 102 does not need gaps to measure a carrier frequency (i.e., measure RS(s) on the carrier frequency), the UE 102 may measure the carrier frequency without gaps.

In some implementations, the CU 172 can include the first information in the *UE Context Request* message as described for event 312C. The DU 174 can determine whether the UE 102 needs gaps according to the first information and the UE Capability. In some implementations, if the UE Capability indicates that the UE 102 needs gaps to measure a carrier frequency in the frequency information in the first information, the DU 174 determines that the UE 102 needs gaps to measure the carrier frequency. If the UE Capability indicates that the UE 102 does not need gaps to measure all of carrier frequency(ies) in the frequency information, the DU 174 determines the UE 102 does not need gaps.

In other implementations, if the UE Capability does not include an *interFrequencyMeas-NoGap* field or the frequency information indicates that frequency location(s) of the RS(s) are not within an active DL BWP of the UE 102, the DU 174 determines that the UE 102 needs gaps to measure the carrier frequency. If the UE Capability includes an *interFrequencyMeas-NoGap* field and the frequency information indicates that frequency location(s) of the RS(s) are within an active DL BWP of the UE 102, the DU 174 determines that the UE 102 does not need gaps. Alternatively, if the UE Capability includes an *interFrequencyMeas-NoGap* field and the frequency information indicates that frequency location(s) of the RS(s) are within all DL BWP(s) (which can be active and/or inactive) of the UE 102, the DU 174 determines that the UE 102 does not need gaps. If the UE Capability includes an *interFrequencyMeas-NoGap* field and the frequency information indicates that frequency location(s) of the RS(s) are not within one of all DL BWP(s) (which can be active and/or inactive) of the UE 102, the DU 174 determines that the UE 102 need gaps.

In some implementations, the DU 174 may still generate a *MeasGapConfig* configuring gaps according to the SMTC information of a carrier frequency in the first information, even though the UE Capability indicates that the UE 102 does not need gaps. The DU 174 determines locations of gaps to align with the location of the RS(s) in time domain as much as possible, so that the UE 102 can quickly search, receive, identity or measure the RS(s) according to the gaps. In one implementation, the time location of the RS(s) and the time location of the gaps can partially or complete overlap. In another implementation, the time location of the RS(s) are close to the time location of the gaps.

Next referring to Fig. 3F, according to a scenario 300F, the base station 104A includes a CU 172 and a DU 174 and provides communication services to the UE 102. Events in this scenario similar to those discussed above are labeled with the same reference numbers. The differences among the scenarios of Fig. 3F and Figs 3C-E are discussed below.

In contrast to the Fig. 3E, the CU 172 determines 313F whether the UE 102 needs gaps according to the UE Capability. If the CU 172 determines the UE 102 needs gaps, the CU 172 can send 312F a *UE Context Request* message *(e.g.,* a *UE Context Setup Request* or *UE Context Setup Response* message) to the DU 174, similar to event 312C. In response, the DU 174 sends 316F a *UE Context Response* message including the *MeasGapConfig* configuring gaps for the UE 102 to the CU 172, similar to the event 316C. If the CU 172 determines that the UE 102 does not need gaps, the CU 172 can send 312F a *UE Context Request* message *(e.g.,* a *UE Context Setup Request* or *UE Context Setup Response* message) to the DU 174, similar to event 312D. In response, the DU 174 sends 316F a *UE Context Response* message including the *MeasGapConfig* configuring gaps for the UE 102 to the CU 172, similar to the event 316D. The events 313F, 312F, and 316F are collectively referred to in Fig. 3F as a UE Context procedure 360F.

In some implementations, the CU 172 can determine whether the UE 102 needs gaps according to the first information and the UE Capability. In some implementations, if the UE Capability indicates that the UE 102 needs gaps to measure a carrier frequency in the frequency information in the first information, the CU 172 determines the UE 102 needs gaps to measure the carrier frequency. If the UE Capability indicates that the UE 102 does not need gaps to measure all of carrier frequency(ies) in the frequency information, the CU 172 determines the UE 102 does not need gaps.

In other implementations, if the UE Capability does not include an *interFrequencyMeas-NoGap* field or the frequency information indicates frequency location(s) of the RS(s) are not within an active DL BWP of the UE 102, the CU 172 determines that the UE 102 needs gaps to measure the carrier frequency. If the UE Capability includes an *interFrequencyMeas-NoGap* field and the frequency information indicates that frequency location(s) of the RS(s) are within an active DL BWP of the UE 102, the CU 172 determines that the UE 102 does not need gaps. Alternatively, if the UE Capability includes an *interFrequencyMeas-NoGap* field and the frequency information indicates that frequency location(s) of the RS(s) are within all DL BWP(s) (which can be active and/or inactive) of the UE 102, the CU 172 determines that the UE 102 does not need gaps. If the UE Capability includes an *interFrequencyMeas-NoGap* field and the frequency information indicates that frequency location(s) of the RS(s) are not within one of all DL BWP(s) (which can be active and/or inactive) of the UE 102, the CU 172 determines that the UE 102 need gaps.

In some implementations, the CU 174 may still send the *UE Context Request* message to the DU 174 to request that the DU 172 configure gaps for the UE 102, even though the UE Capability indicates that the UE 102 does not need gaps. In response to the *UE Context Request* message, the DU 174 determines locations of gaps to align with location of the RS(s) in time domain as much as possible. Therefore, the UE 102 can quickly search, receive, identity or measure the RS(s) according to the gaps.

In Fig 3 (i.e., any one of Figs 3A-3F), the DU 174 in some implementations does not include the *MeasGapConfig* in the *UE Context Response* message. Instead, the DU 174 sends a *UE Context Modification Required* message including the *MeasGapConfig* to the CU 172 and the CU 172 sends a *UE Context Modification Confirm* message to the DU 174 in response. In Fig. 3, the CU 172 in some implementations may send the first information and the UE Capability in different *UE Context Request* messages to the DU 174. In response to each of the different *UE Context Request* messages, the DU 174 sends a *UE Context Response* message to the CU 172. In Fig. 3, the DU 172 may or may not include a DU configuration in the *UE Context Response* message. The UE Context procedure (e.g., UE Context Setup procedure or UE Context Modification procedure) 360E or 360F can apply to Fig.4 *(e.g.,* any one of Figs 4B-4I), Fig. 5 *(e.g.,* any one of Figs 5C-5D) or Fig. 6 *(e.g.,* Fig. 6A-6B) below.

Figs. 3A-3F depict measurement gap configuration techniques that the base station 104A can implement. Figs. 4A-4I depict handover scenarios in which one or more base station(s) can implement the techniques discussed above. More particularly, Figs. 4A-4E depict techniques for managing measurement gap configurations involving handover from a source base station (S-BS) to a target base station (T-BS), and Figs. 4F-4I depict using similar techniques in scenarios involving handover within a distributed base station (*e.g*., handover from a source DU (S-DU) to a target DU (T-DU)).

Now referring to Fig. 4A, a scenario 400A involves a handover scenario. In this scenario, the base station 104A operates as a source base station (S-BS), and the base station 104B operates as a target base station (T-BS).

Initially, the UE 102 communicates 402A data *(e.g.,* uplink (UL) data PDUs and/or downlink (DL) data PDUs) with the S-BS 104A using an S-BS configuration. In some scenarios, the UE 102 communicates 402A data in SC with the S-BS 104A, or communicates 402A data in DC with the S-BS 104A operating as an MN and an SN *(e.g.,* the base station 106A) not shown in Fig. 4A. Then, the S-BS 104A initiates an RRC reconfiguration procedure with the UE 102 by sending 404A an RRC reconfiguration including a first *NeedForGapsConfig* to the UE 102, similar to events 304A and 306A. In response to the first *NeedForGapsConfig,* the UE 102 includes a first *NeedForGapsInfo* in an RRC reconfiguration complete message. The UE 102 transmits 408A the RRC reconfiguration message including the first *NeedForGapsInfo* to the S-BS 104A, similar to events 308A and 310A. The events 406A and 408A are collectively referred to in Fig. 4A as a need for gap information procedure 450A.

Later in time, the S-BS 104A determines 407A to initiate handover for the T-BS 104B and the UE 102 to communicate, *e.g.,* blindly or in response to detecting a suitable event. For example, the determination 407A can occur in response to the S-BS 104A receiving one or more measurement results from the UE 102 that are above (or below) one or more predetermined thresholds, or calculating a filtered result (from the measurement result(s)) that is above (or below) a predetermined threshold. In another example, the suitable event can be that the UE 102 is moving toward the T-BS 104B. In yet another example, the suitable event can be one or more measurement results, generated or obtained by the S-BS 104A based on measurements of signals received from the UE 102, being above (or below) one or more predetermined thresholds.

After determining 407A to initiate handover, the S-BS 104A sends 471A a *Handover Request* message including the S-BS configuration and the first *NeedForGapsInfo* to the T-BS 104B. In response to the *Handover Request* message, the T-BS 104B determines 414A to include or exclude a *MeasGapConfig* in a handover command according to the first *NeedForGapsInfo,* similar to the determination made by the CU 172 or the DU 174 in events 314A, 313B, 311C, or 309D. If the T-BS 104B determines to include a first *MeasGapConfig* according to the first *NeedForGapsInfo,* the T-BS 104B can include the first *MeasGapConfig* in a first *MeasConfig* and include the first *MeasConfig* in the handover command message, in one implementation. In another implementation, the T-BS 104B can include the first *MeasConfig* in an RRC reconfiguration message, as discussed below with reference to event 420A.

The T-BS 104B includes the handover command message in a *Handover Request Acknowledge* message and sends 472A the *Handover Request Acknowledge* message to the S-BS 104A in response to the *Handover Request* message. In turn, the S-BS 104A transmits 474A the handover command message to the UE 102. The handover command message can include one or more random access configurations needed by the UE 102 to handover to the T-BS 104B, and in some implementations, includes additional fields, such as a mobility field *(e.g., mobilityControlInfo* field or a *reconfigurationWithSync* field), which can include some or all of the random access configurations. The handover command message can also include multiple configuration parameters. The multiple configuration parameters can configure zero, one, or more radio bearers, including SRB(s) and/or DRB(s). The multiple configuration parameters can also configure zero, one or more SCells, configure PCell 124B, and/or configure a physical layer configuration, a MAC configuration, and an RLC configuration.

In attempting to perform the handover, the UE 102 initiates 475A a random access procedure with the T-BS 104B via a target cell *(e.g.,* PCell 124B) covered by the T-BS 104B, *e.g.,* using one or more random access configurations in the handover command message received 472A from the S-BS 104A. After gaining access to a channel, the UE 102 transmits 477A a handover complete message to the T-BS 104B via the target cell during or after successfully completing the random access procedure. After the UE 102 successfully completes the random access procedure (i.e., the T-BS 104B identifies the UE 102 during the random access procedure), the UE 102 communicates 479A control signals and data *(e.g.,* UL data PDUs or DL data PDUs) with the T-BS 104B via the target cell using configurations in the handover command message.

In implementations where the T-BS 104B does not include the first *MeasConfig* in the handover command at event 472A, after receiving 477A the handover complete message, the T-BS 104B can transmit 420A an RRC reconfiguration message including the first *MeasConfig* to the UE 102. In response, the UE 102 transmits 422A an RRC reconfiguration complete message to the T-BS 104B. The first *MeasConfig* configures the UE 102 to measure at least one carrier frequency. If the T-BS 104B included the first *MeasConfig* in the handover command message at event 472A, then events 420A and 422A may not be needed or alternatively the T-BS 104B can include another *MeasConfig* configuring the UE 102 to measure an additional carrier frequency in the RRC reconfiguration message at event 420A. If the first *MeasGapConfig* configures gaps, the UE 102 may perform measurements on the additional carrier frequency by using gaps configured in the first *MeasGapConfig.* Otherwise, the UE 102 may perform measurements on the additional carrier frequency without gaps.

If the first *MeasGapConfig* transmitted in the handover command message (at 472A-474A) or the RRC reconfiguration message (at 420A) includes a *GapConfig,* the UE 102 can perform measurements on at least one carrier frequency using gaps in the *GapConfig.* If the first *MeasGapConfig* is not included in the handover command message or the RRC reconfiguration message, the UE 102 can perform measurements on the at least one carrier frequency without gaps. If the first *MeasGapConfig* releases a *GapConfig* which was configured by the S-BS 104A, the UE 102 can perform measurements on the at least one carrier frequency without gaps. The UE 102 obtains a measurement result from the measurements and transmits 426A a measurement report message including the measurement result to the T-BS 104B. For example, the measurement result can indicate a value of a reference signal received power (RSRP), reference signal received quality (RSRQ), Received Signal Strength Indicator (RSSI), or signal to noise and interference ratio (SINR) and/or indicate a reporting event. According to the measurement result, the T-BS 104B can decide whether to configure an SCell to the UE 102 or handover the UE 102 to another cell. For example, if the measurement result associated with a cell is above a predetermined threshold, the T-BS 104B can configure the cell as an SCell to the UE 102. In another example, if the measurement result associated with a cell is above a predetermined threshold, the T-BS 104B can configure the UE 102 to handover to the cell.

After the handover, the T-BS 104B can transmit to the UE 102 a first RRC reconfiguration message including a second *NeedForGapsConfig* which indicates one or more additional frequency bands, in some implementations. The UE 102 indicates whether gaps are needed to perform measurements for the one or more additional frequency bands in a second *NeedForGapsInfo,* and includes the second *NeedForGapsInfo* in a first RRC reconfiguration complete message and transmits the first RRC reconfiguration complete message to the T-BS 104B in response to the first RRC reconfiguration message. Based on the second *NeedForGapsInfo,* the T-BS 104B can determine whether to generate a *MeasGapConfig* configuring gaps for the UE 102 to measure a carrier frequency in the one or more additional frequency bands. If the T-BS 104B determines the UE 102 needs gaps to measure a carrier frequency in the one or more additional frequency bands, the T-BS 104B generates a second *MeasGapConfig* configuring gaps.

The T-BS 104B can transmit a second RRC reconfiguration message including a second *MeasConfig* to the UE 102, wherein the second *MeasConfig* can configure a particular carrier frequency in one of the one or more additional carrier frequency bands. The UE 102 transmits a second RRC reconfiguration complete message to the T-BS 104B in response to the second RRC reconfiguration message. In one implementation, the T-BS 104B can include the second *MeasGapConfig* in the second *MeasConfig* or the second RRC reconfiguration message. In another implementation, the T-BS 104B does not include the second *MeasGapConfig* in the second RRC reconfiguration message. In this implementation, the T-BS 104B can transmit a third RRC reconfiguration message including the second *MeasGapConfig* to the UE 102 and in response, the UE 102 transmits a third RRC reconfiguration complete message to the T-BS 104B. Thus, the UE 102 can use the gaps in the second *MeasGapConfig* to perform measurements on the particular carrier frequency. If the T-BS 104B determines the UE 102 does not need gaps to measure the particular carrier frequency based on the second *NeedForGapsInfo,* the T-BS 104B does not generate a *MeasGapConfig* for the UE 102 to measure the particular carrier frequency. The UE 102 performs measurements on the particular carrier frequency without using gaps. The UE 102 obtains a measurement result from the measurements and transmits a measurement report message to the T-BS 104B. The T-BS 104B can transmit the second RRC reconfiguration message before or after the third RRC reconfiguration message.

In some implementations, the S-BS 104A can include the first *NeedForGapsConfig* (transmitted to the UE 102 at event 406A) in the *Handover Request* message the S-BS 104A transmits 471A to the T-BS 104B. Based on the *NeedForGapsConfig,* the T-BS 104B can determine the frequency bands for which the S-BS 104A requested measurement gap capability information.

In some implementations, if the S-BS 104A is a gNB, the RRC reconfiguration message 406A and the RRC reconfiguration complete 408A message can be an *RRCReconfiguration* message and an *RRCReconfigurationComplete* message, respectively. In other implementations, if the S-BS 104A is an eNB or an ng-eNB, the RRC reconfiguration message 406A and the RRC reconfiguration complete message 408A can be an *RRCConnectionReconfiguration* message and an *RRCConnectionReconfigurationComplete* message, respectively.

In some implementations, if the T-BS 104B is a gNB, the RRC reconfiguration message and the RRC reconfiguration complete message exchanged between the UE 102 and the T-BS 104B can be an *RRCReconfiguration* message and an *RRCReconfigurationComplete* message, respectively. In some implementations, if the T-BS 104B is an eNB or an ng-eNB, the RRC reconfiguration message and the RRC reconfiguration complete message exchanged between the UE 102 and the T-BS 104B can be an *RRCConnectionReconfiguration* message and an *RRCConnectionReconfigurationComplete* message, respectively.

In some implementations, if the T-BS 104B is a gNB, the handover command message and the handover complete message can be an *RRCReconfiguration* message and an *RRCReconfigurationComplete* message, respectively. If the S-BS 104A is an eNB or ng-eNB, the S-BS 104A can include the *RRCReconfiguration* in a *MobilityFromEUTRACommand* message and transmits 474 the *MobilityFromEUTRACommand* message to the UE 102. In some implementations, if the T-BS 104B is an eNB or an ng-eNB, the handover command message and the handover complete message can be an *RRCConnectionReconfiguration* message and an *RRCConnectionReconfigurationComplete* message, respectively. If the S-BS 104A is an gNB, the S-BS 104A can include the *RRCConnectionReconfiguration* in a *MobilityFromNRCommand* message and transmits 474 the *MobilityFromNRCommand* message to the UE 102.

Although the S-BS 104A and the T-BS 104B are interconnected via an X2 or Xn interface in the example systems of Figs. 1A and 1B, in other scenarios the S-BS 104A and the T-BS 104B may not have an interface (i.e., an X2 or Xn interface). In these cases, the S-BS 104A can transmit a *Handover Required* message including the S-BS configuration and the *NeedForGapsInfo* to the CN 110 (e.g., MME 114 or AMF 164) instead of transmitting 471A the *Handover Request* message. The CN 110 includes the S-BS configuration and the *NeedForGapsInfo* in a *Handover Request* message generated by the CN 110 as described for the *Handover Request* message 471A. The CN 110 sends the generated *Handover Request* message to the T-BS 104B. That is, the *Handover Required* message and the CN generated *Handover Request* message can be used instead of the *Handover Request* message 471A. The T-BS 104B generates a *Handover Request Acknowledge* message which includes the handover command message, and sends the *Handover Request Acknowledge* message to the CN 110 in response to the *Handover Request* message received from the CN 110. The CN 110 sends a *Handover Confirm* message including the handover command message to the S-BS 104A in response to the *Handover Required* message. That is, the *Handover Request Acknowledge* message and the CN generated *Handover Confirm* message can be used instead of the *Handover Request Acknowledge* message 472A.

Now referring to Fig. 4B, a scenario 400B involves a handover scenario. In this scenario, the base station 104A operates as a source base station (S-BS), and the base station 104B operates as a target base station (T-BS) consisting of a T-CU 172 and a T-DU 174. Events in this scenario similar to those discussed above are labeled with the same reference numbers. The differences between the scenarios of Fig. 4A and 4B are discussed below.

In the scenario 400B, the S-BS 104A sends 471B a *Handover Request* message including the S-BS configuration and the first *NeedForGapsInfo* to the T-CU 172. In response to the *Handover Request* message, the T-CU 172 sends 412B a *UE Context Setup Request* message including the first *NeedForGapsInfo* to the T-DU 174 for the UE 102. The T-DU 174 generates 414B a first *MeasGapConfig* in response to the first *NeedForGapsInfo.* The T-DU 174 also generates a T-DU configuration in response to the *UE Context Setup Request* message. In some implementations, the T-DU 174 can configure gaps in a *GapConfig* and includes the *GapConfig* in the first *MeasGapConfig* because the T-DU 174 determines the UE 102 needs gaps to perform measurements. In other implementations, the T-DU 174 can release a *GapConfig* which was configured to the UE 102 at event 402B because the T-DU 174 determines the UE 102 does not need the *GapConfig* to perform measurements.

The T-CU 172 can include the S-BS configuration in the *UE Context Setup Request* message. In some implementations, the T-DU 174 generates the T-DU configuration as a full T-DU configuration *(i.e.,* a complete and self-contained configuration). In other implementations, the T-DU 174 generates the T-DU configuration as a delta T-DU configuration which augments a portion of the S-BS configuration. The T-DU configuration can include one or more random access configurations needed by the UE 102 to handover to the T-DU 174, and in some implementations, includes additional fields, such as a mobility field *(e.g., mobilityControlInfo* field or a *reconfigurationWithSync* field), which can include some or all of the random access configurations. The T-DU configuration can also include multiple configuration parameters. The multiple configuration parameters can configure PCell 124B, and/or configure a physical layer configuration, a MAC configuration, and an RLC configuration.

In response to the *UE Context Setup Request* message, the T-DU 174 sends 416B a *UE Context Setup Response* message including the T-DU configuration and the first *MeasGapConfig* to the T-CU 172. The events 412B, 414B, and 416B are collectively referred to in Fig. 4B as a UE Context Setup procedure 460B. The UE Context Setup procedure 460B is generally similar to the UE Context Modification procedure 360A, except that the messages exchanged in procedure 460B are UE Context Setup messages rather than UE Context Modification messages.

In response to the *UE Context Setup Response* message, the T-CU 172 generates a handover command message that includes the T-DU configuration and the first *MeasGapConfig,* and includes the handover command message in a *Handover Request Acknowledge* message. In one implementation, the T-CU 172 can include the first *MeasGapConfig* in a first *MeasConfig* in the handover command message. The T-CU 172 sends 472B the *Handover Request Acknowledge* message to the S-BS 104A in response to the *Handover Request* message. In turn, the S-BS 104A transmits 474B the handover command message to the UE 102. In response to the handover command message, the UE 102 performs 475B a random access procedure with the T-DU 174, *e.g.,* using one or more random access configurations in the T-DU configuration. The UE 102 transmits 477B a handover complete message to the T-DU 174 during or after successfully completing the random access procedure, which in turn sends 478B the *handover complete* message to the T-CU 172. After the T-DU 174 identifies the UE 102 during the random access configuration *(e.g.,* the UE 102 succeeds in the contention resolution during the random access procedure), the UE 102 communicates 479B control signals and data with the T-DU 174 using the T-DU configuration and communicates 479B control messages and data with the T-CU 172 via the T-DU 174.

After receiving the handover complete message, the T-CU 172 can send 418B an RRC reconfiguration message including a first *MeasConfig* to the T-DU 174. The T-DU 174 in turn transmits 420B the RRC reconfiguration message to the UE 102. In response, the UE 102 transmits 422B an RRC reconfiguration complete message to the T-DU 174, which in turn sends 424B sends the RRC reconfiguration complete message to the T-CU 172. The events 418B, 420B, 422B and 424B are collectively referred to in Fig. 4B as a measurement configuration procedure 480B. The T-CU 172 can include the first *MeasGapConfig* in the first *MeasConfig* in the RRC reconfiguration message instead of the handover command message. The first *MeasConfig* in the RRC reconfiguration message can configure the UE 102 to measure at least one carrier frequency. If the first *MeasConfig* in the handover command configures the UE 102 to measure the at least one carrier frequency, the measurement configuration procedure 480B may not be needed or alternatively the T-CU 172 can include another *MeasConfig* configuring the UE 102 to measure an additional carrier frequency in the RRC reconfiguration message at event 418A. If the first *MeasGapConfig* configures gaps, the UE 102 may perform measurements on the additional carrier frequency by using gaps configured in the first *MeasGapConfig.* Otherwise, the UE 102 may perform measurements on the additional carrier frequency without gaps.

The UE 102 can perform measurements on the at least one carrier frequency using the *GapConfig* in the first *MeasGapConfig.* The UE 102 obtains a measurement result from the measurements and transmits 426B a measurement report message including the measurement result to the T-CU 174, which in turn transmits 428B the measurement report message to the T-CU 172. For example, the measurement result can indicate a value of a reference signal received power (RSRP), reference signal received quality (RSRQ), Received Signal Strength Indicator (RSSI), or signal to noise and interference ratio (SINR) and/or indicate a reporting event. According to the measurement result, the T-CU 172 can decide whether to configure an SCell to the UE 102 or handover the UE 102 to another cell. For example, if the measurement result associated with a cell is above a predetermined threshold, the T-CU 172 can configure the cell as an SCell to the UE 102. In another example, if the measurement result associated with a cell is above a predetermined threshold, the T-CU 172 can configure the UE 102 to handover to the cell. The events 426B and 428B are collectively referred to in Fig. 4B as a measurement reporting procedure 490B.

To transmit a DL RRC message (*e.g*., the RRC reconfiguration message, etc.) to the UE 102 through the T-DU 174, the T-CU 172 generates a PDCP PDU including the RRC message and generates an DL interface message (i.e., CU to DU interface message) including the PDCP PDU. The T-CU 172 sends the DL interface message to the UE 102. The T-DU 174 extracts the PDCP PDU from the DL interface message and transmits the PDCP PDU to the UE 102 through RLC (206A, 206B), MAC (204A, 204B) and PHY (202A, 202B). In some implementations, the DL interface message is an F1 application protocol (F1AP) message, *e.g.,* a *DL RRC Message Transfer* message, *UE Context Setup Request* message, *UE Context Modification Request* message, or *UE Context Modification Confirm* message. Similarly, the UE 102 generates a PDCP PDU including a UL RRC message *(e.g.,* the RRC reconfiguration complete message, the handover complete message, etc.) and transmits the PDCP PDU to the T-DU 174 through RLC (206A, 206B), MAC (204A, 204B) and PHY (202A, 202B). When the T-DU 174 receives the PDCP PDU from the UE 102, the T-DU 174 generates an UL interface message (i.e., DU to CU interface message) including the PDCP PDU and sends the UL interface message to the T-CU 172, which in turn obtains the PDCP PDU from the UL interface message and obtains the UL RRC message from the PDCP PDU. In some implementations, the UL interface message is a FlAP message, *e.g.,* an *Initial UL RRC Message Transfer* message, *UL RRC Message Transfer* message, *UE Context Setup Response* message, *UE Context Modification Response* message, or *UE Context Modification Required* message.

After the handover, the T-CU 172 can generate a first RRC reconfiguration message including a second *NeedForGapsConfig* which indicates one or more additional frequency band, in some implementations. The T-CU 172 sends the first RRC reconfiguration message to the T-DU 174 which in turn transmits the first RRC reconfiguration message to the UE 102. The UE 102 indicates whether gaps are needed to perform measurements for the one or more additional frequency bands in a second *NeedForGapsInfo,* includes the second *NeedForGapsInfo* in a first RRC reconfiguration complete message, and transmits the first RRC reconfiguration complete message to the T-DU 174 in response to the first RRC reconfiguration message. The T-DU 174 in turn sends the first RRC reconfiguration complete message to the T-CU 172. The T-CU 172 may perform a UE Context Modification procedure similar to event 360A, 360B, 360C or 360D with the T-DU 174. If the T-CU 172 receives a second *MeasGapConfig* from the T-DU 174 in the UE Context Modification procedure, the T-CU 172 can include the second *MeasGapConfig* in a second *MeasConfig.* The T-CU 172 can transmit a second RRC reconfiguration message including the second *MeasConfig* to the UE 102. The UE 102 transmits a second RRC reconfiguration complete message to the T-DU 174 in response to the second RRC reconfiguration message. The T-DU 174 in turn sends the second RRC reconfiguration complete message to the T-CU 172. In one implementation, the T-CU 172 can configure the UE 102 to measure a particular carrier frequency in one of the one or more additional carrier frequency bands in the second *MeasConfig.* In another implementation, the T-CU 172 can send a third RRC reconfiguration message including a third *MeasConfig* to the T-DU 174, wherein the third *MeasConfig* configures the UE 102 to measure the particular carrier frequency. The DU 174 in turn transmits the third RRC reconfiguration message to the UE 102. The UE 102 transmits a third RRC reconfiguration complete message to the T-DU 174 in response to the third RRC reconfiguration message. The T-DU 174 in turn sends the third RRC reconfiguration complete message to the T-CU 172. If the second *MeasGapConfig* configures gaps, the UE 102 can use the gaps in the second *MeasGapConfig* to perform measurements on the particular carrier frequency. Otherwise, the UE 102 performs measurements on the particular carrier frequency without using a gap. The UE 102 obtains a measurement result from the measurements and transmits a measurement report message to the T-BS 104B.

In some implementations, the S-BS 104A can include the first *NeedForGapsConfig* (transmitted to the UE during a need for gap information procedure 450B) in the *Handover Request* message the S-BS 104A transmits 471B to the T-CU 172. Based on the *NeedForGapsConfig,* the T-CU 172 can determine the frequency bands for which the S-BS 104A requested measurement gap capability information.

Although the S-BS 104A and the T-CU 172 are interconnected via an X2 or Xn interface in the example systems of Figs. 1A and 1B, in other scenarios the S-BS 104A and the T-CU 172 may not have an interface (i.e., an X2 or Xn interface). In these cases, the S-BS 104A can transmit a *Handover Required* message including the S-BS configuration and the *NeedForGapsInfo* to the CN 110 *(e.g.,* MME 114 or AMF 164) instead of transmitting 471B the *Handover Request* message. The CN 110 includes the S-BS configuration and the *NeedForGapsInfo* in a *Handover Request* message generated by the CN 110 as described for the *Handover Request* message 471B. The CN 110 sends the generated *Handover Request* message to the T-CU 172. That is, the *Handover Required* message and the CN generated *Handover Request* message can be used instead of the *Handover Request* message 471B. The T-CU 172 generates a *Handover Request Acknowledge* message which includes the handover command message, and sends the *Handover Request Acknowledge* message to the CN 110 in response to the *Handover Request* message received from the CN 110. The CN 110 sends a *Handover Confirm* message including the handover command message to the S-BS 104A in response to the *Handover Required* message. That is, the *Handover Request Acknowledge* message and the CN generated *Handover Confirm* message can be used instead of the *Handover Request Acknowledge* message 472B.

Now referring to Fig. 4C, a scenario 400C involves a handover scenario. In this scenario, the base station 104A operates as a source base station (S-BS), and the base station 104B operates as a target base station (T-BS). Events in this scenario similar to those discussed above are labeled with the same reference numbers. The differences between the scenarios of Fig. 4C and Figs. 4A-4B are discussed below.

In contrast to event 414B, the T-DU 174 determines 413C not to generate a *MeasGapConfig* in response to the first *NeedForGapsInfo,* i.e., because the T-DU 174 determines the UE 102 does not need gaps to perform measurements. In response to the determination 413C, the T-DU 174 does not configure gaps for the UE 102 and generates a *UE Context Setup Response* message excluding a *MeasGapConfig.* The T-DU 174 includes a T-DU configuration in the *UE Context Setup Response* message. The T-DU 174 sends 416C the *UE Context Setup Response* message to the T-CU 172 in response to the *UE Context Setup Request* message 412C. The events 412C, 413C and 416C are collectively referred to in Fig. 4C as a UE Context Setup procedure 460C. The UE Context Setup procedure 460C is generally similar to the UE Context Modification procedure 360B, except that the messages exchanged in the procedure 460C are UE Context Setup messages rather than UE Context Modification messages.

In response to the *UE Context Setup Response* message, the T-CU 172 generates a handover command message that includes the T-DU configuration, and includes the handover command message in a *Handover Request Acknowledge* message. The T-CU 172 sends 472C the *Handover Request Acknowledge* message to the S-BS 104A in response to the *Handover Request* message.

As described for Fig. 4B, the T-CU 172 can include the first *MeasConfig* in the handover command message or in the RRC reconfiguration message. The first *MeasConfig* can configure the UE 102 to measure at least one carrier frequency. In contrast to Fig. 4B, the T-CU 172 neither includes a *MeasGapConfig* in the handover command message nor in the RRC reconfiguration message in the measurement configuration procedure 480B because the T-DU 174 does not generate a *MeasGapConfig* at 413C. The UE 102 can perform measurements on the at least one carrier frequency without gaps.

Now referring to Fig. 4D, a scenario 400D involves a handover scenario. In this scenario, the base station 104A operates as a source base station (S-BS), and the base station 104B operates as a target base station (T-BS) consisting of a T-CU 172 and a T-DU 174. Events in this scenario similar to those discussed above are labeled with the same reference numbers. The differences between the scenarios of Fig. 4D and Figs. 4A-4C are discussed below.

In the scenario 400D, the S-BS 104A sends 471D a *Handover Request* message including the S-BS configuration and the first *NeedForGapsInfo* to the T-CU 172. The T-CU 172 analyzes the *NeedForGapsInfo* and determines that the UE 102 needs gaps to perform measurements on at least one carrier frequency. In response, the T-CU 172 determines 411D to request gaps for the UE 102 according to the *NeedForGapsInfo.* In response to the determination 411D, the T-CU 172 sends 412D the *UE Context Setup Request* message including the first information requesting gaps for the UE 102 to the T-DU 174. In response, the DU 174 generates 415D a *MeasGapConfig* configuring gaps for the UE 102 based on the first information. The T-DU 174 transmits 416D a *UE Context Modification Response* message including the *MeasGapConfig* to the T-CU 172. The T-CU 172 also can include T-DU configuration in the *UE Context Setup Response* message. The events 411D, 412D, 415D, and 416D are collectively referred to in Fig. 4D as a UE Context Setup procedure 460D. The UE Context Setup procedure 460D is generally similar to the UE Context Modification procedure 360C, except that the messages exchanged in the procedure 460D are UE Context Setup messages rather than UE Context Modification messages.

After the UE Context Setup procedure 460D, the scenario 400D proceeds in a similar manner as the scenario 400B after the UE Context Setup procedure 460B. In response to the *UE Context Setup Response* message, the T-CU 172 generates a handover command message that includes the T-DU Configuration, and includes the handover command message in a *Handover Request Acknowledge* message. The T-CU 172 sends 472D the *Handover Request Acknowledge* message to the S-BS 104A in response to the *Handover Request* message.

As described for Fig. 4B, the T-CU 172 can include the *MeasGapConfig* in a *MeasConfig* and include the *MeasConfig* in either the handover command (transmitted at the event 472D) or an RRC Reconfiguration message (transmitted during the measurement configuration procedure 480D).

Now referring to Fig. 4E, a scenario 400E involves a handover scenario. In this scenario, the base station 104A operates as a source base station (S-BS), and the base station 104B operates as a target base station (T-BS) consisting of a T-CU 172 and a T-DU 174. Events in this scenario similar to those discussed above are labeled with the same reference numbers. The differences between the scenarios of Fig. 4E and Fig. 4D are discussed below.

In contrast to the scenario 400D, in the scenario 400E the T-CU 172 analyzes the *NeedForGapsInfo* and determines 409E that the UE does not need gaps to perform measurements on at least one carrier frequency as a result of analyzing the *NeedForGapsInfo.* In response, the T-CU 172 does not request the DU 174 to configure gaps for the UE 102 or indicates the DU 174 to release the configured gaps for the UE 102. The T-CU 172 sends, to the T-DU 174, 412E the *UE Context Setup Request* message that does not indicate to the T-DU 174 to configure gaps for the UE 102 or that indicates the T-DU 174 is to release gaps configured in a current *GapConfig* (previously configured) for the UE 102. In response to the *UE Context Setup Request* message, the DU 174 does not configure gaps for the UE 102 or releases the current *GapConfig,* and send 416E a *UE Context Modification Response* message to the CU 172. In one implementation, the T-DU 174 generates a new *MeasGapConfig* indicating releasing the current *GapConfig.* In another implementation, the T-CU 172 generates a new *MeasGapConfig* indicating releasing the current *GapConfig.* In these implementations, the T-CU 172 can include the new *MeasGapConfig* in the *MeasConfig* in the handover command message 472E. The UE 102 releases the current *GapConfig* in response to the new *MeasGapConfig.* Alternatively, the CU 172 refrains from sending a *UE Context Modification Request* message requesting the DU 174 to configure gaps for the UE 102 in response to the determination 409E. The events 409E, 412E, and 416E are collectively referred to in Fig. 4E as a UE Context Setup procedure 460E.

The UE Context Setup procedure 460E is generally similar to the UE Context Modification procedure 360D, except that the messages exchanged in procedure 460E are UE Context Setup messages rather than UE Context Modification messages. After the UE Context Setup procedure 460E, the scenario 400E proceeds in a similar manner as the scenario 400C after the UE Context Setup procedure 460C. The T-CU 172 does not include a *MeasGapConfig* in a handover command (transmitted at event 472E) or an RRC Reconfiguration message (transmitted during measurement configuration procedure 480E), because the T-DU 174 does not generate a *MeasGapConfig.*

Figs. 4F-4I depict techniques for managing measurement gap configurations involving handover within a distributed base station (*e.g*., handover from a source DU (S-DU) to a target DU (T-DU). Figs. 4F-4I depict similar techniques as Figs. 4B-4E, respectively, except that the Figs. 4F-4I involve handover within a distributed base station rather than from a source base station to a target base station.

Now referring to Fig. 4F, a scenario 400F involves a handover from an S-DU to a T-DU. In this scenario, the base station 104A includes a CU 172, an S-DU 174A, and a T-DU 174B. Events in this scenario similar to those discussed above are labeled with the same reference numbers. The differences between the scenarios of Fig. 4F and Figs. 4B-4E are discussed below.

In the scenario 400F, the UE 102 initially communicates 402F data *(e.g.,* UL data PDUs and/or DL data PDUs) with the base station 104 via the S-DU 174A. The base station 104 performs a need for gap information procedure 450F with the UE 102 via the S-DU 174A to obtain a *NeedForGapsInfo* from the UE 102. The need for gap information procedure 450F is generally similar to the need for gap information procedure 350A, with the S-DU 174A in the procedure 450F performing similar functions as the DU 174 in the procedure 350A.

Next, the CU 172 initiates 407F handover from the S-DU 174A to the T-DU 174B. The CU 172 and the T-DU 174B perform a UE Context Setup procedure 460F. The procedure 460F is similar to the UE Context Setup procedure 460B, with the T-DU 174B performing similar functions as the T-DU 174 in the procedure 460B.

After the UE Context Setup procedure 460F, the CU 172 sends 472F a *handover command* message including a *MeasConfig* including a *MeasGapConfig* to the S-DU 174A. The *handover command* message also includes a *T-DU configuration* for the T-DU 174B. The S-DU 174A transmits 474F the handover command message to the UE 102, which performs 475F a random access procedure with the T-DU 174B. After the random access procedure successfully completes, the UE 102 sends 477F a *handover complete* message to the T-DU 174B, which sends 478F the *handover complete* message to the CU 172. The events 472F, 474F, 475F, 477F, and 478F are collectively referred to in Fig. 4F as a handover procedure 470F.

After the handover procedure 470F, the UE communicates 479F with the base station 104A via the T-DU 174B in accordance with the *MeasConfig* and *T-DU configuration* in the *handover command* message.

In some implementations, as described with respect to Fig. 4B and Fig. 4D, the CU 172 may include the *MeasConfig* including the *MeasGapConfig* in an RRC reconfiguration message and transmit 418F the RRC reconfiguration message to the T-DU 174B after the handover. The T-DU 174B can transmit 420F the RRC reconfiguration message to the UE 102. In response, the UE 102 transmits 422F an *RRC* reconfiguration complete message to the T-DU 174B, which in turn transmits 424F the *RRC* reconfiguration complete message to the CU 172. The events 418F, 420F, 422F, and 424F are collectively referred to in Fig. 3F as a measurement configuration procedure 480F.

The UE 102 applies the *MeasGapConfig* to perform measurements on a frequency in accordance with the *MeasGapConfig.* The UE 102 transmits 426F a measurement report message including the measurement results to the T-DU 174B, which in turn transmits 426F the measurement report message to the CU 172. The events 426F and 428F are collectively referred to in Fig. 3F as a measurement reporting procedure 490F.

Now referring to Fig. 4G, a scenario 400G involves a handover from an S-DU to a T-DU. In this scenario, the base station 104A includes a CU 172, an S-DU 174A, and a T-DU 174B. Events in this scenario similar to those discussed above are labeled with the same reference numbers. The differences between the scenarios of Fig. 4G and Figs. 4B-4F are discussed below.

In contrast to Fig. 4F, after the CU 172 initiates 407G handover from the S-DU 174A to the T-DU 174B, the CU 172 and the T-DU 174B perform a UE Context Setup procedure 460G. The UE Context Setup procedure 460G is similar to the UE Context Setup procedure 460C, with the T-DU 174B performing similar functions as the T-DU 174 in the procedure 460C.

After the UE Context Setup procedure 460G, the CU 172 sends 472G a *handover command* message including a *T-DU configuration* to the S-DU 174A. The *handover command* message does not include a *MeasGapConfig* because the T-DU 174B does not generate a *MeasGapConfig* during the UE Context Setup procedure 460G. The S-DU 174A sends 474G the *handover command* to the UE 102, which performs 475G a random access procedure with the T-DU 174B. After the random access procedure successfully completes, the UE 102 sends 477G a *handover complete* message to the T-DU 174B, which sends 478G the *handover complete* message to the CU 172. The events 472G, 474G, 475G, 477G, and 478G are collectively referred to in Fig. 4G a handover procedure 470G.

After the handover procedure 470G, the UE communicates 479G with the base station 104A via the T-DU 174B in accordance with the *T-DU configuration* in the *handover command* message.

In some implementations, the base station 104A and the UE 102 may also perform a measurement configuration procedure 480G. The measurement configuration procedure 480G is similar to the measurement configuration procedure 480F, except that any *MeasConfig* included in the RRC reconfiguration messages will not include a *MeasGapConfig* because the T-DU 174B does not generate a *MeasGapConfig* during the UE Context Setup procedure 460G.

Now referring to Fig. 4H, a scenario 400H involves a handover from an S-DU to a T-DU. The scenario 400H is generally similar to the scenario 400F, and events similar to those discussed above are labeled with the same reference numbers. However, in contrast to Fig. 4F, in scenario 400H, the CU 172 and the T-DU 174B perform a UE Context Setup procedure 460H rather than the UE Context Setup procedure 460F. The UE Context Setup procedure 460H is similar to the UE Context Setup procedure 460D, with the T-DU 174B performing similar functions as the T-DU in the procedure 460D.

Now referring to Fig. 4I, a scenario 400I involves a handover from an S-DU to a T-DU. The scenario 400I is generally similar to the scenario 400G, and events similar to those discussed above are labeled with the same reference numbers. However, in contrast to Fig. 4G, in scenario 400I, the CU 172 and the T-DU 174B perform a UE Context Setup procedure 460I rather than the UE Context Setup procedure 460G. The UE Context Setup procedure 460I is similar to the UE Context Setup procedure 460E, with the T-DU 174B performing similar functions as the T-DU in the procedure 460E.

Figs. 5A-5D depict techniques for managing measurement gap configurations in scenarios in which the UE operates in dual connectivity (DC) with an MN and an SN. The scenarios depicted by Figs. 3A-3D and 4A-4I can also correspond to DC scenarios, with the base station 104A (and/or the base station 104B, as in Figs. 4A-4E) operating as an MN. However, the Figs. 5A-5D are relevant to functionality than an SN can implement. Even if the UE 102 has already provided a *NeedForGapsInfo* IE to the MN 104A, the UE 102 and the base stations 104A, 106A, and 106B may still perform the techniques discussed below with reference to Figs. 5A-5D. The measurement gap capability of the UE 102 may depend on whether the UE 102 is operating in SC or in DC. For example, when operating in DC, the UE 102 may need to use a receiver to communicate with an SN that the UE used to measure gaps while the UE 102 operated in SC.

Referring next to Fig. 5A, the base station 104A in a scenario 500A operates as an MN, and the base station 106A operates as an SN. Initially, the UE 102 communicates 502A data (*e.g.,* UL Data PDUs and/or DL Data PDUs) with MN 104A. In one case, the UE 102 in SC with the MN 104A communicates 502A data with the MN 104A. In another case, the UE 102 communicates 502A in DC with the MN 104A and SN 106B. In this case, the SN 106B is a source SN (S-SN) and the SN 106A is a target SN (T-SN).

Later in time, the MN 104A can determine 532A that it should initiate an SN Addition procedure to configure the base station 106A as an SN for the UE 102. In one implementation, the MN 104A can make this determination based on one or more measurement results received from the UE 102, for example, or another suitable event. In another implementation, the MN 104A receives from the S-SN 106B an *SN Change Required* message requesting an SN change to the T-SN 106A, and makes this determination in response to the *SN Change Required* message. In response to the determination 532A, the MN 104 sends 534A an *SN Addition Request* message to the SN 106A to initiate an SN Addition procedure. In response to receiving 534A the *SN Addition Request* message, the SN 106A includes an SN configuration in an *SN Addition Request Acknowledge* message for the UE 102. The SN 106A then sends 538C the *SN Addition Request Acknowledge* message to the MN 104, in response to the *SN Addition Request* message.

In some implementations, the MN 104A can include a first *NeedForGapsInfo* in the *SN Addition Request* message if the MN 104A stores the first *NeedForGapsInfo.* For example, the MN 104A can receive the first *NeedForGapsInfo* from the UE 102 by performing a need for gap information procedure similar to the need for gap information procedure 450A. In another example, the MN 104A can receive the first *NeedForGapsInfo* from another base station (*e.g*., base station 104B or S-SN 106B) in an interface message, *e.g.,* an Xn interface message, *Handover Request* message, *SN Change Required* message, or *Retrieve UE Context Response* message. In another example, the MN 104A can receive the first *NeedForGapsInfo* from the CN 110 *(e.g.,* MME 114 or AMF 164). In other implementations, the *SN Addition Request* message does not include a *NeedForGapsInfo.*

If the *SN Addition Request* message includes the first *NeedForGapsInfo,* the SN 106A can determine to include or exclude a *MeasGapConfig* in the SN configuration according to the first *NeedForGapsInfo,* similar to the determination made by the CU 172 or the DU 174 in events 414B, 413C, 411D, or 409E. If the SN 106A determines to include a *MeasGapConfig* in an RRC reconfiguration message according to the first *NeedForGapsInfo,* the SN 106A can include a first *MeasGapConfig* in the SN configuration. Otherwise, the SN 106A does not include a *MeasGapConfig* in the SN configuration.

The MN 104A includes the SN configuration in an RRC container message and transmits 542A the RRC container message to the UE 102. In response to the RRC container message, the UE 102 transmits 543A an RRC container response message to the MN 104A. The UE 102 can include an RRC reconfiguration complete message in the RRC container response message. The MN 104A transmits 544A an *SN Reconfiguration Complete* message including the RRC reconfiguration complete message to the SN 106A. In response to the SN configuration, the UE 102 performs 546A a random access procedure with the SN 106A via cell 126A (i.e., PSCell) to connect to the SN 106A, *e.g.,* using one or more random access configurations in the SN configuration. After the UE 102 successfully completes the random access procedure (i.e., the SN 106A identifies the UE 102 during the random access procedure), the UE 102 communicates 548A control signals and data (*e.g.*, UL data PDUs or DL data PDUs) with the SN 106A via the PSCell 126A using configurations in the SN configuration. The events 502A, 532A-548A are collectively referred to in Fig. 5A as a DC configuration procedure 530A.

After the SN 106A connects to the UE 102, the SN 106A can send 504A an RRC reconfiguration message including a second *NeedForGapsConfig* to the MN 104A which in turn transmits 506A the RRC reconfiguration message to the UE 102. In response to the second *NeedForGapsConfig,* the UE 102 includes a second *NeedForGapsInfo* in an RRC reconfiguration complete message. The UE 102 transmits 508A the RRC reconfiguration complete message to the MN 104A in response to the RRC reconfiguration message. The MN 104A in turn sends 510A the RRC reconfiguration complete message to the SN 106A. The events 504A, 506A, 508A and 510A are collectively referred to in Fig. 5A as a need for gap information procedure 550A.

In some implementations, the SN 106A may indicate one or more frequency bands, for which the UE 102 is to indicate whether gaps are needed to perform measurements, in the second *NeedForGapsConfig.* In one implementation, the SN 106A generates a *requestTargetBandFilterNR* field which includes one or more frequency band indicators (*e.g., FreqBandIndicatorNR* IEs) indicating the one or more frequency bands and includes the *requestTargetBandFilterNR* field in the second *NeedForGapsConfig.* In the second *NeedForGapsInfo,* the UE 102 indicates whether gaps are needed to perform measurements for the one or more frequency bands. In one implementation, in the second *NeedForGapsInfo,* the UE 102 does not indicate whether gaps are needed to perform measurements for one or more additional frequency bands not indicated by the SN 106A in the second *NeedForGapsConfig.* With this implementation, the UE 102 saves power by not using bits to indicate whether gaps are needed to perform measurements for the one or more additional frequency bands. In another implementation, the UE 102 indicates, in the second *NeedForGapsInfo,* whether gaps are needed to perform measurements for one or more additional frequency bands not indicated by the SN 106A in the second *NeedForGapsConfig.* With this implementation, the SN 106A does not need to initiate another need for gap information procedure (similar to 550A) to request the UE 102 to provide another *NeedForGapsInfo* indicating whether gaps are needed to perform measurements for one or more additional frequency bands.

In other implementations, the SN 106A does not indicate a frequency band in the second *NeedForGapsConfig.* In one such implementation, if the SN 106A does not indicate a frequency band in the second *NeedForGapsConfig,* the UE 102 can determine frequency band(s) for which the UE 102 will indicate measurement gap requirements in the second *NeedForGapsInfo.* The UE 102 can determine the frequency band(s) based on a PLMN identity of an operator operating the MN 104A or the SN 106A. For example, the UE 102 may store first band information associated with a first PLMN identity, which indicates first frequency band(s) owned by a first operator identified by the first PLMN identity. The UE 102 can generate the second *NeedForGapsInfo* which indicates whether gaps are needed to perform measurements for the first frequency band(s) in the first band information if the MN 104A or the SN 106A is operated by the first operator. The UE 102 may store second band information associated to a second PLMN identity, which indicates second frequency band(s) owned by a first operator identified by the first PLMN identity. The UE 102 can generate the second *NeedForGapsInfo* which indicates whether gaps are needed to perform measurements for the second frequency band(s) in the second band information if the MN 104A or the SN 106A is operated by the second operator.

Alternatively, the UE 102 can directly store a second *NeedForGapsInfo* indicating whether gaps are needed to perform measurements for frequency band(s) owned by a first operator identified by a first PLMN identity, and transmits 534A the RRC reconfiguration complete message including the second *NeedForGapsInfo* if the base station 104A or the SN 106A is operated by the first operator. The UE 102 can directly store a third *NeedForGapsInfo* indicating whether gaps are needed to perform measurements for frequency band(s) owned by a second operator identified by a second PLMN identity, and transmits 534A the RRC reconfiguration complete message including the second *NeedForGapsInfo* if the MN 104A or the SN 106A is operated by the second operator. Note, the stored second/third *NeedForGapsInfo* may or may not in the same format as the second/third *NeedForGapsInfo* transmitted in the RRC reconfiguration message. If the formats are different, the UE 102 converts the stored format to the transmitted format.

In another implementation, if the SN 106A does not indicate a frequency band in the second *NeedForGapsConfig,* the UE 102 indicates whether gaps are needed to perform measurements in the second *NeedForGapsInfo* for all frequency band(s) the UE supports.

Thus, the SN 106A can receive the first *NeedForGapsInfo* for the UE 102 from the MN 104A in an *SN Addition Request* message (as in event 534A), or can receive the second *NeedForGapsInfo* via the need for gap information procedure 550A. In some implementations, the SN 106A may receive both the first *NeedForGapsInfo* and the second *NeedForGapsInfo.* For example, the SN 106A may request 504A measurement gap capability information relating to different frequencies than the first *NeedForGapsInfo.* In other implementations, the SN 106A receives either the first *NeedForGapsInfo* or the second *NeedForGapsInfo.*

After the SN 106A connects to the UE 102 or after the need for gap information procedure 550A (if performed), the SN 106A can determine 514A to include or exclude a *MeasGapConfig* in an RRC reconfiguration message based on the first *NeedForGapsInfo* (if received at event 534A) or the second *NeedForGapsInfo* 510A (if received at event 510A), similar to the determination made by the CU 172 or the DU 174 in events 314A, 313B, 311C, or 309D. If the SN 106A determines to include a *MeasGapConfig* in an RRC reconfiguration message based on the first/second *NeedForGapsInfo,* the SN 106A can include a second *MeasGapConfig* in the RRC reconfiguration message. Otherwise, the SN 106A does not include a *MeasGapConfig* in the RRC reconfiguration message. The SN 106A sends 518A the RRC reconfiguration message to the MN 104A which in turn transmits 520A the RRC reconfiguration message to the UE 102. In response to the RRC reconfiguration message, the UE 102 transmits 522A an RRC reconfiguration complete message to the MN 104A which in turn sends 524A the RRC reconfiguration complete message to the SN 106A. The events 518A, 520A, 522A and 524A are collectively referred to in Fig. 5A as a measurement configuration 580A.

After the UE 102 receives the second *MeasGapConfig,* the UE 102 can measure one or more carrier frequencies during gaps configured by the second *MeasGapConfig.* The UE 102 may be configured by the SN 106A to measure the one or more carrier frequencies before, during or after receiving the second *MeasGapConfig.* In some implementations, the SN 106A can include the second *MeasGapConfig* in a first measurement configuration (*MeasConfig*) and include the first *MeasConfig* in the RRC reconfiguration message 518A. In the first *MeasConfig,* the SN 106A may configure the UE 102 to measure a first carrier frequency in a frequency band using gaps configured in the second *MeasGapConfig.* Alternatively, the SN 106A may perform another measurement configuration procedure similar to event 380A to transmit to the UE 102 a second *MeasConfig.* The second *MeasConfig* does not include a *MeasGapConfig* and configures the UE 102 to measure the first carrier frequency in a frequency band using gaps configured in the second *MeasGapConfig.* The SN 106A may perform an additional measurement configuration procedure similar to event 580A to transmit the UE 102 a third *MeasConfig,* which does not include a *MeasGapConfig* and configures the UE 102 to measure a second carrier frequency in a frequency band using gaps configured in the second *MeasGapConfig.* The first and second carrier frequencies can be in the same frequency band or different frequency bands. In other implementations, the SN 106A may include the second *MeasConfig* in the SN configuration instead of a RRC reconfiguration message in a measurement configuration procedure.

In implementations in which the UE 102 receives (i) a first *MeasConfig* including a *MeasGapConfig,* and (ii) a second *MeasConfig* not including a *MeasGapConfig,* the second *MeasConfig* does not override the previously-received *MeasGapConfig.* The UE 102 can continue to use the *MeasGapConfig* received in the first *MeasConfig* to configure measurement gaps for target frequencies indicated in the second *MeasConfig.*

In some implementations, the SN 106A can include a third *NeedForGapsConfig,* which indicates one or more additional frequency bands, in the RRC reconfiguration message 518A. The UE 102 indicates whether gaps are needed to perform measurements for the one or more additional frequency bands in a fourth *NeedForGapsInfo,* and includes the fourth *NeedForGapsInfo* in the RRC reconfiguration complete message 522A. The SN 106A may determine to whether to generate a *MeasGapConfig* according to the fourth *NeedForGapsInfo* as described above. If the SN 106A generates a third *MeasGapConfig,* the SN 106A can transmit the third *MeasGapConfig* to the UE 102 in a similar way and the UE 102 can use the third *MeasGapConfig,* as described above.

In other implementations, the SN 106A does not include a *NeedForGapsConfig* in the RRC reconfiguration message 518A and the UE 102 does not include a *NeedForGapsInfo* in the RRC reconfiguration complete message 522A. In such implementations, instead of including a third *NeedForGapsConfig* in the RRC reconfiguration message 518A, the SN 106A can include a third *NeedForGapsConfig* in an additional need for gap information procedure similar to the procedure 550A. The SN 106A can also repeat procedures similar to 514A-580A after performing the additional need for gap information procedure.

The UE 102 applies the *MeasGapConfig* above to perform measurements on a carrier frequency which can be configured by the SN 106A as described above. If the *MeasGapConfig* includes a *GapConfig,* the UE 102 performs measurements on gaps configured by the *GapConfig,* for example. In another example, if the *MeasGapConfig* indicates that the UE 102 should release a *GapConfig,* the UE 102 can perform measurements without using gaps. The UE 102 obtains a measurement result from the measurements, includes the measurement result in a measurement report message, and transmits 526A a measurement report message to the MN 104A. The MN 104A in turn sends 528A the measurement report message to the SN 106A. For example, the measurement result can indicate a value of a reference signal received power (RSRP), reference signal received quality (RSRQ), Received Signal Strength Indicator (RSSI), or signal to noise and interference ratio (SINR). According to the measurement result, the SN 106A can decide whether to configure or release an SCell for the UE 102 or change the PSCell 126A to another cell *(e.g.,* cell 124B). For example, if the measurement result associated to a cell is above a predetermined threshold, the SN 106A can configure the cell as an SCell for the UE 102. In another example, if the measurement result associated with an SCell is above a predetermined threshold, the SN 106A can release the SCell for the UE 102. In yet another example, if the measurement result associated with a cell is above a predetermined threshold, the SN 106A can configure the UE 102 to change the PSCell 126A to the cell. The events 526A and 528A are collectively referred to in Fig. 5A as a measurement reporting procedure 590A.

In some implementations, the MN 104A can receive a UE capability of the UE 102 from the UE 102, the core network 110, or another base station (*e.g.*, base station 104B) as described for Fig. 3A. The MN 104A can include the UE capability in the *SN Addition Request* message. In some implementations, the MN 104A can include UE capability in a *CG-ConfigInfo* IE and include the *CG-ConfigInfo* IE in the *SN Addition Request* message.

In some implementations, the UE 102 may indicate, in the UE capability, one or more frequency bands supported by the UE 102 for communicating with an SN. For example, the UE capability can include a *supportedBandListNR* field which includes one or more *BandNR* IEs indicating one or more frequency bands supported by the UE 102. In another example, the UE capability can include a *supportedBandCombinationList* field (or *BandCombinationList* IE) which includes one or more *FreqBandIndicatorNR* IEs indicating one or more frequency bands supported by the UE 102. In some implementations, the SN 106A can determine (or select) the one or more frequency bands to include in the *NeedForGapsConfig* from the frequency bands supported by the UE 102. In other implementations, the SN 106A can include a frequency band in the *NeedForGapsConfig* that is not supported by the UE 102. If the UE 102 does not support a frequency band indicated in the *NeedForGapsConfig,* the UE 102 in some implementations determines the *NeedForGapsConfig* is valid and ignores the frequency band. In this case, in one implementation, the UE 102 does not indicate whether gaps are needed for the unsupported frequency band in the *NeedForGapsInfo.* In another implementation, the UE 102 can indicate whether gaps are needed for the unsupported frequency band in the *NeedForGapsInfo* even though the indication is meaningless.

In other implementations, if the UE 102 does not support a frequency band indicated in the *NeedForGapsConfig,* the UE 102 determines the *NeedForGapsConfig* is invalid. In response to the determination, the UE 102 initiates an RRC connection reestablishment procedure. In the RRC connection reestablishment procedure, the UE 102 transmits an *RRCReestablishmentRequest* message to the MN 104A or another base station *(e.g.,* base station 104B). The UE 102 receives a *RRCReestablishment* message from the MN 104A or another base station *(e.g.,* the base station 104B) in response to the *RRCReestablishmentRequest* message. The UE 102 can transmit a *RRCReestablishmentComplete* message to the *RRCReestablishment* message.

The SN configuration can include one or more configuration parameters for the UE 102 to communicate with the SN 106A. The SN configuration can include one or more random access configurations needed by the UE 102 to connect to the SN 106A, and in some implementations, includes additional fields, such as a mobility field (*e.g., mobilityControlInfo* field or a *reconfigurationWithSync* field), which can include some or all of the random access configurations. The multiple configuration parameters can also configure zero, one or more SCells, configure PCell 124B, and/or configure a physical layer configuration, a MAC configuration, and a RLC configuration. For example, the SN configuration can include a *CellGroupConfig* IE. In some implementations, the SN configuration can be an RRC reconfiguration message.

In some implementations, if the SN 106A is a gNB, the RRC reconfiguration message and the RRC reconfiguration complete message can be an *RRCReconfiguration* message and an *RRCReconfigurationComplete* message, respectively. In other implementations, if the SN 106A is an eNB or an ng-eNB, the RRC reconfiguration message and the RRC reconfiguration complete message can be an *RRCConnectionReconfiguration* message and an *RRCConnectionReconfigurationComplete* message, respectively.

In some implementations, if the MN 104A is a gNB, the RRC container message and the RRC container response message can be an *RRCReconfiguration* message and an *RRCReconfigurationComplete* message, respectively. In other implementations, if the MN 104A is an eNB or an ng-eNB, the RRC container message and the RRC container response message can be an *RRCConnectionReconfiguration* message and an *RRCConnectionReconfigurationComplete* message, respectively.

Referring now to Fig. 5B, a scenario 500B also involves a DC scenario in which the base station 104A operates as an MN, and the base station 106A operates as an SN. Events in this scenario similar to those discussed above are labeled with the same reference numbers. The differences between the scenarios of Fig. 5B and Fig. 5A are discussed below.

In Fig. 5B, the SN 106A, MN 104A, and the UE 102 may perform a DC configuration procedure 530B, which is generally similar to the DC configuration procedure 530A. As in Fig. 5A, the SN 106A may receive a first *NeedForGapsInfo* from the MN 104A during the DC Configuration procedure 530B.

Next, in contrast to the need for gap information procedure 550A, the SN 106A may receive a second *NeedForGapsInfo* directly from the UE 102. The SN 106A transmits 503B an RRC reconfiguration message including a second *NeedForGapsConfig* to the UE 102. The event 503B is generally similar to the event 504A, except that the SN 106A transmits 503B the RRC reconfiguration message to the UE 102 rather than to the MN 104A. In response, the UE 102 transmits 505B an RRC reconfiguration complete message including a second *NeedForGapsInfo* to the SN 106A. The events 503B and 505B are collectively referred to herein as a need for gap information procedure 550B.

Similarly to Fig. 5B, the SN 106A can receive both the first *NeedForGapsInfo* at event 530B and the second *NeedForGapsInfo* at event 550B, or can receive either the first *NeedForGapsInfo* or the second *NeedForGapsInfo.* Based on the first or the second *NeedForGapsInfo,* the SN 106A can determine 514B to include or exclude a *MeasGapConfig* in an RRC reconfiguration message, similar to the determinations made by the CU 172 or the DU 174 in events 314A, 313B, 311C, or 309D.

If the SN 106A determines to include a *MeasGapConfig* based on the first or the second *NeedForGapsInfo,* the SN 106A can include a second *MeasGapConfig* in an RRC reconfiguration message. Otherwise, the SN 106A does not include a *MeasGapConfig* in the RRC reconfiguration message. The SN 106 sends 521B the RRC reconfiguration message to the UE 102, and the UE 102 transmits 523B an RRC reconfiguration complete message to the SN 106A in response. The UE 102 can perform measurements in accordance with the *MeasGapConfig* and transmit 529B the measurement results to the SN 106A in a measurement report.

Referring now to Fig. 5C, a scenario 500C also involves a DC scenario in which the base station 104A operates as an MN, and the base station 106A operates as an SN. Events in this scenario similar to those discussed above are labeled with the same reference numbers. The scenario 500C is generally similar to the scenario 500A, but with the SN 106A implementing the techniques as a distributed base station including a CU 172 and a DU 174.

In particular, the CU 172 receives 534C an *SN Addition Request* message, which may include a first *NeedForGapsInfo,* from the MN 104A. The CU 172 transmits 536C a *UE Context Setup Request* message to the DU 174. In response, the DU 174 generates a *DU configuration* and transmits 537C a *UE Context Setup Response* message including the *DU configuration* to the CU 172. The CU 172 transmits 538C an *SN Addition Request Acknowledgement* message containing an RRC reconfiguration and a *CU configuration* to the MN 104A. The RRC reconfiguration includes the *DU configuration.* The MN 104 in turn transmits 542C an RRC container message including the *DU configuration* and the *CU configuration* to the UE 102. In response, the UE 102 transmits 543C an RRC container response message to the MN 104A, and the MN 104 transmits 544C an *SN Reconfiguration Complete* message to the CU 172.

The UE 102 then performs 546C a random access procedure with the SN 106A via the DU 174. After the UE 102 successfully completes the random access procedure, the UE 102 communicates 548C control signals and data *(e.g.,* UL data PDUs or DL data PDUs) with the SN 106A. The events 502C, 532C-548C are collectively referred to in Fig. 5C as a DC configuration procedure 530C.

After the SN 106A connects to the UE 102, the SN 106A may receive a second *NeedForGapsInfo* in a need for gap information procedure 550C. The need for gap information procedure 550C can be similar to the need for gap information procedures 350A, 550A, or 550B, for example. In some implementations, the SN 106A receives both the first *NeedForGapsInfo* and the second *NeedForGapsInfo.* In other implementations, the SN 106A receives the first *NeedForGapsInfo* or the second *NeedForGapsInfo.*

Based on the first *NeedForGapsInfo* (received by the SN 106A at event 534C), or the second *NeedForGapsInfo* (received by the SN 106A at event 550C), the SN 106A determines in a UE Context Modification procedure 560C whether to generate or not generate a *MeasGapConfig* for the UE 102. The CU 172 and the DU 174 of the SN 106A can make this determination using the techniques discussed with reference to events 360A, 360B, 360C, or 360D. The SN 106A transmits a *MeasConfig,* which may or may not include a *MeasGapConfig,* to the UE 102 via a measurement configuration procedure 580C, which may be similar to the measurement configuration procedures 380A or 380B. Based on the *MeasConfig,* the UE 102 can perform measurements and transmit a measurement report including the measurement results to the SN 106A in a measurement reporting procedure 590C, which may be similar to the measurement reporting procedure 390A.

Referring now to Fig. 5D, a scenario 500D also involves a DC scenario in which the base station 104A operates as an MN, and the base station 106A operates as an SN. Events in this scenario similar to those discussed above are labeled with the same reference numbers. The scenario 500D is generally similar to the scenario 500C, but with the SN 106A performing a UE context setup procedure during a DC configuration procedure rather than after a DC configuration procedure.

More particularly, after the CU 172 receives 534D an *SN Addition Request* including a first *NeedForGapsInfo,* the CU 172 and the DU 174 of the SN 106A perform a UE Context Setup procedure 560D. The UE Context Setup procedure 560D may be similar to the UE Context Setup procedures 460B, 460C, 460D, and 460E. Events 538D-548D may then proceed in a similar manner as events 538C to 548C. The events 502D, 532D-548D are collectively referred to herein as a DC configuration procedure 530D.

After the DC configuration procedure 530D, the SN 106A transmits a *MeasConfig,* which may or may not include a *MeasGapConfig,* to the UE 102 via a measurement configuration procedure 580D or in the RRC reconfiguration message 538D, which may be similar to the measurement configuration procedures 380A or 380B. Based on the *MeasConfig,* the UE 102 can perform measurements and transmit a measurement report including the measurement results to the SN 106A in a measurement reporting procedure 590D, which may be similar to the measurement reporting procedure 390A.

Figs. 6A, 6B, and 7 depict RRC resume scenarios in which a DU and a CU can implement the techniques discussed above for managing measurement gap capability information.

Now referring to Fig. 6A, a scenario 600A involves an RRC resume scenario in which the base station 104A operates as a T-BS of an RRC resume procedure and includes a T-DU 174 and a T-CU 172. The base station 106A operates as a S-BS of the RRC resume procedure. Initially, the UE 102 operates in an RRC connected state and communicates 602A with the S-BS 104B in accordance with an S-BS configuration. The S-BS 104B determines 652A to suspend the RRC connection between the S-BS 104B and the UE 102. Accordingly, the S-BS 104B transmits 653A an *RRC release* message to the UE 102. In response, the UE 102 transitions 654A to a state with a suspended RRC connection (*e.g., an RRC_INACTIVE* state or an *RRC_IDLE* state).

To resume an RRC connection with the RAN 105, the UE 102 transmits 655A an *RRC resume request* message to the T-BS 104B by transmitting the *RRC resume request* message to the T-DU 174. The T-DU sends 656A the *RRC resume request* message to the T-CU 172. The T-CU 172 then transmits 657A a *Retrieve UE Context Request* message to the S-BS 104B. In response, the S-BS 104B transmits 658A a *Retrieve UE Context Response* message including an *S-BS configuration* to the T-CU 172.

Next, the T-CU 172 sends 659A a *UE Context Setup Request* message to the T-DU 174, which in turn transmits 660A a *UE Context Setup Response* message including a *T-DU configuration* to the T-CU 172. The T-CU 172 sends 661A an *RRC resume* message including the *T-DU configuration* and a *NeedForGapsConfig* to the T-DU 174, which in turn sends 662A the *RRC resume* message to the UE 102.

In response to the *RRC resume* message, the UE 102 transitions 663A to a connected state (*e.g., RRC_CONNECTED*) and transmits 664A an *RRC resume complete* message including a *NeedForGapsInfo* to the T-DU 174. The UE 102 generates the *NeedForGapsInfo* in accordance with the *NeedForGapsConfig,* as discussed above with reference to Fig. 3A.

The T-DU 174 transmits 665A the *RRC resume complete* message including the *NeedForGapsInfo* to the T-CU 172. The T-BS 104A then performs a UE Context Modification procedure 660A, which may be similar to any one of UE Context Modification procedures 360A, 360B, 360C, or 360D. The T-BS 104A perform the measurement configuration procedure 380A, which may be similar to measurement configuration procedure 380A or 380B. The UE 102 can transmit a measurement report to the T-BS 104A in a measurement reporting procedure 690A, which may be similar to the measurement reporting procedure 390A.

Now referring to Fig. 6B, a scenario 600B also involves an RRC resume scenario in which the base station 104A operates as a T-BS of an RRC resume procedure and includes a T-DU 174 and a T-CU 172. The base station 104B operates as a S-BS of an RRC resume procedure. Fig. 6B is generally similar to Fig. 6A, but with the S-BS 104B rather than the UE 102 providing a *NeedForGapsInfo* to the T-BS 104A.

The scenario 600B begins in a similar manner as the scenario 600A. However, after receiving 657B the *Retrieve UE Context Request* message, the S-BS 104B transmits 658B a *Retrieve UE Context Response* message including both an *S-BS configuration* and a *NeedForGapsInfo* to the T-CU 172. The S-BS 104B may store a *NeedForGapsInfo* received previously, for example, during an earlier need for gap information procedure such as the need for gap information procedure 450A.

The T-CU 172 and the T-DU 174 of the T-BS 104A can determine, based on the *NeedForGapsInfo,* whether to generate a *MeasGapConfig* during a UE Context Setup procedure 660B, which may be similar to any one of the UE Context Setup procedures 460B, 460C, 460D, or 460E. Following the UE Context Setup procedure 660B, the T-CU 172 transmits 661B an *RRC resume* message including a *T-DU configuration* to the T-DU 174, which in turn transmits 662B the *RRC resume* message to the UE 102. The T-CU 172 may or may not include a *MeasGapConfig* in the *RRC resume* message, depending on whether the T-DU 174 generated a *MeasGapConfig* during the UE Context Setup procedure 660B. In some implementations, even if the T-DU 174 generated a *MeasGapConfig* during the UE Context Setup procedure 660B, the T-CU 172 determines not to include the *MeasGapConfig* in the *RRC resume* message. Instead, the T-CU 172 may send a later RRC message, such as an RRC reconfiguration message, including the *MeasGapConfig* to the UE 102 via the T-DU 174. If the T-BS 104B does not generate a *MeasGapConfig,* the T-BS 104B may still transmit (at event 662B or in a later RRC message) a *MeasConfig* that does not include a *MeasGapConfig* to the UE 102.

In response to the *RRC resume* message, the UE 102 transitions 663B to a connected state (*e.g.,* RRC_CONNECTED) and transmits 664B an *RRC resume complete* message to the T-DU 174, which in turn transmits 665B the *RRC resume complete* message to the T-CU 172.

After resuming the RRC connection with the T-BS 104B and after receiving a *MeasConfig,* which may or may not include a *MeasGapConfig,* from the T-BS 104B (either at event 662B or by receiving another RRC message), the UE 102 performs measurements in accordance with the *MeasConfig.* The UE 102 includes the measurement results in a measurement report message and transmits 626B the measurement report message to the T-DU 174, which in turn transmits 628B the measurement report message to the T-CU 172.

Fig. 7 depicts a scenario 700 involving an RRC resume scenario when a UE is operating in dual connectivity with an MN and an SN. The base station 104A operates as an S-MN and the base station 106A operates as an S-SN of the RRC resume scenario. The base station 104B operates as a T-MN and the base station 106B operates as a T-SN of the RRC resume scenario. The T-MN 104B includes both a T-DU 174 and a T-CU 172.

Initially, the UE 102 operates in an RRC connected state and (1) communicates 702 in SC with the S-MN 104A using an S-MN configuration, or (2) communicates 702 in DC with the S-MN 104A using an S-MN configuration and with the S-SN 106A using an S-SN configuration. The S-MN 104A determines 752 to suspend the RRC connection between the S-MN 104A and the UE 102. Accordingly, the S-MN 104A transmits 753 an *RRC release* message to the UE 102. In response, the UE 102 transitions 754 to a state with a suspended RRC connection (*e.g.,* an *RRC_INACTIVE* state or an *RRC_IDLE* state).

To resume an RRC connection with the RAN 105, the UE 102 transmits 755 an *RRC resume request* message to the T-DU 174. The T-DU sends 756 the *RRC resume request* message to the T-CU 172, which then transmits 757 a *Retrieve UE Context Request* message to the S-MN 104A. In response, the S-MN 104A transmits 758 a *Retrieve UE Context Response* message including an *S-MN configuration* to the T-CU 172.

The *UE Context Response* message also includes a first *NeedForGapsInfo* (*i.e., NeedForGapsInfo1*) and a second *NeedForGapsInfo* (*i.e., NeedForGapsInfo2*)*.* The *NeedForGapsInfo1* is to be used by the T-MN 104B for configuring measurement gaps for the UE 102, and the *NeedForGapsInfo2* is to be used by the T-SN 106B for configuring measurement gaps for the UE 102.

Based on the *NeedForGapsInfo1*, the T-CU 172 and the T-DU 174 of the T-MN perform a UE Context Setup procedure 760, which can be similar to any one of UE Context Setup procedures 460B, 460C, 460D, or 460E. The T-CU 172 then transmits 761 an *RRC resume* message to the T-DU 174. The *RRC resume* message includes a *T-DU configuration,* and may also include a *MeasGapConfig,* depending on whether the T-DU 174 generated a measurement gap configuration during the UE Context Setup procedure 760. After the UE 102 receives the *MeasGapConfig,* the UE 102 can measure one or more carrier frequencies during gaps configured by the *MeasGapConfig.* The UE 102 may be configured by the CU 172 to measure the one or more carrier frequencies during or after receiving the *MeasGapConfig.* For example, the CU 172 includes a first *MeasConfig* configuring the UE 102 to measure a carrier frequency in the RRC resume message. The CU 172 can include the *MeasGapConfig* in the first *MeasConfig.*

The T-DU 174 transmits 762 the *RRC resume* message to the UE 102. In response, the UE 102 transitions 763 to a connected state (*e.g., RRC_CONNECTED*) and transmits 764 an *RRC resume complete* message to the T-DU 174. The T-DU 174 transmits 765 the *RRC resume complete* message to the T-CU 172.

In some implementations, even if the T-DU generated a *MeasGapConfig* during the UE Context Setup procedure 760, the T-CU 172 determines not to include the *MeasGapConfig* in the *RRC resume* message. Instead, the T-CU 172 may send a later RRC message, such as an RRC reconfiguration message, including the *MeasGapConfig* to the UE 102 via the T-DU 174. If the T-MN 104B does not generate a *MeasGapConfig,* the T-MN 104B may still transmit (at event 762 or in a later RRC message) a second *MeasConfig* that does not include a *MeasGapConfig* to the UE 102. The second *MeasConfig* can configure the UE 102 to measure carrier frequencies.

After resuming the RRC connection with the T-MN 104B and after receiving a *MeasConfig,* which may or may not include a *MeasGapConfig,* from the T-MN 104B (either at event 762 or by receiving another RRC message), the UE 102 performs measurements in accordance with the *MeasConfig.* The UE 102 includes the measurement results in a measurement report message and transmits 726 the measurement report message to the T-DU 174, which in turn transmits 728 the measurement report to the T-CU 172.

In addition, the UE 102, the T-MN 104B, and the T-SN 106B can perform 779 (i) the DC configuration procedure 530D using the *NeedForGapsInfo2,* or (ii) the DC configuration procedure 530C using the *NeedForGapsInfo2* and the UE Context Modification procedure 560C, in order to provide the *NeedForGapsInfo2* to the T-SN 106B. For example, the T-MN 104B can provide the *NeedForGapsInfo2* in an *SN Addition Request* to the T-SN 106B, as in events 534C and 534D. In one implementation, the T-SN 106B can perform the UE Context Setup procedure 560D, included within the DC Configuration procedure 530D. In another implementation, the T-SN 106B can complete the DC Configuration procedure 530D, and later perform the UE Context Setup procedure 560C.

The T-SN 106B can then perform a measurement configuration procedure 780, which is similar to the measurement configuration procedure 580A, 580B if the T-SN 106B generated a *MeasGapConfig* at event 779, or to the measurement configuration procedure 380B if the T-SN 106B did not generate a *MeasGapConfig* at event 779. The UE 102 reports the results of measurements that the UE performs in accordance with a *MeasConfig,* which may or may not include a *MeasGapConfig,* to the T-SN 106B via a measurement reporting procedure 790, which is similar to the measurement reporting procedure 590A or 529B.

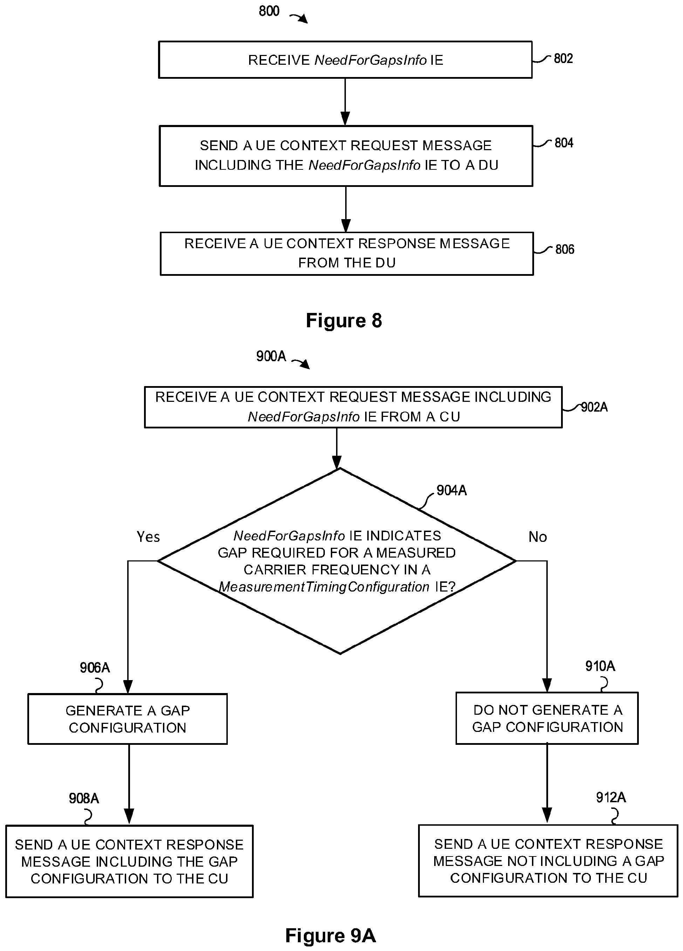

For further clarity, several example methods which the devices operating in the systems of Figs. 1A-1C can implement are discussed next with reference to Figs. 8-16.

Fig. 8 is a flow diagram depicting an example method 800, implemented in a CU *(e.g.,* the CU 172), for managing measurement gap capability information. At block 802, the CU receives a *NeedForGapsInfo* IE (*e.g.,* event 310A during procedure 350A or any one of events 350B-D, 471B-E, 450F-I, 534C, 550C, 534D, 665A, 658B, or 758). At block 804, the CU sends a *UE Context Request* message including the *NeedForGapsInfo* IE to a DU (*e.g.,* the DU 174) *(e.g.,* any one of events 312A-D during the procedures 360A-D, respectively; 412B-E during the procedures 460B-E, respectively; 460F-I, 560C-D, 660A-B, 760, 779). Depending on the implementation and/or scenario, the *UE Context Request* can be a *UE Context Modification Request* or a *UE Context Setup Request.*

At block 806, the CU receives a *UE Context Response* message *(e.g.,* a *UE Context Modification Response* or a *UE Context Setup Response)* from the DU *(e.g.,* any one of events 316A-D during the procedures 360A-D, respectively; 416B-E during the procedures 460B-E, respectively; 460F-I, 560C-D, 660A-B, 760, 779). Depending on whether the DU generated a measurement gap configuration based on the *NeedForGapsInfo,* the *UE Context Response* message may or may not include a measurement gap configuration.

Fig. 9A is a flow diagram depicting an example method 900A, implemented in a DU (*e.g*., the DU 174) for determining whether to generate a measurement gap configuration. At block 902A, the DU receives a *UE Context Request* message *(e.g.,* a *UE Context Modification Request* or a *UE Context Setup Request)* including a *NeedForGapsInfo* IE from a CU *(e.g.,* the CU 172) *(e.g.,* any one of events 312A-D during the procedures 360A-D, respectively; 412B-E during the procedures 460B-E, respectively; 460F-I, 560C-D, 660A-B, 760, 779).

Next, at block 904A, the DU determines whether the *NeedForGapsInfo* indicates that the UE requires gaps to measure a carrier frequency included in a *MeasurementTimingConfiguration* IE. If the *NeedForGapsInfo* indicates that the UE requires measurement gaps, the flow proceeds to block 906A. Otherwise, the flow proceeds to block 910A.

At block 906A, the DU generates a measurement gap configuration that the UE is to use to perform measurements on the carrier frequency (*e.g.*, any one of events 314A of procedure 360A, 315C of procedure 360C, 414B of procedure 460B, 415D of procedure 460D). At block 908A, the DU sends a *UE Context Response* message *(e.g.,* a *UE Context Modification Response* or a *UE Context Setup Response)* including the measurement gap configuration to the CU (*e.g.*, any one of events 316A, 316C, 416B, 416D).

Alternatively, if the flow proceeds to block 910A, the DU does not generate a measurement gap configuration (*e.g.*, event 313B of procedure 350B, procedure 360D, event 413C of procedure 460C, procedure 460E). If the DU receives SMTC information together with the *NeedForGapsInfo,* the DU can ignore the SMTC information. At block 912A, the DU sends a *UE Context Response* message *(e.g.,* a *UE Context Modification Response* or a *UE Context Setup Response)* not including a measurement gap configuration to the CU (*e.g.,* any one of events 316B, 316D, 416C, 416E).

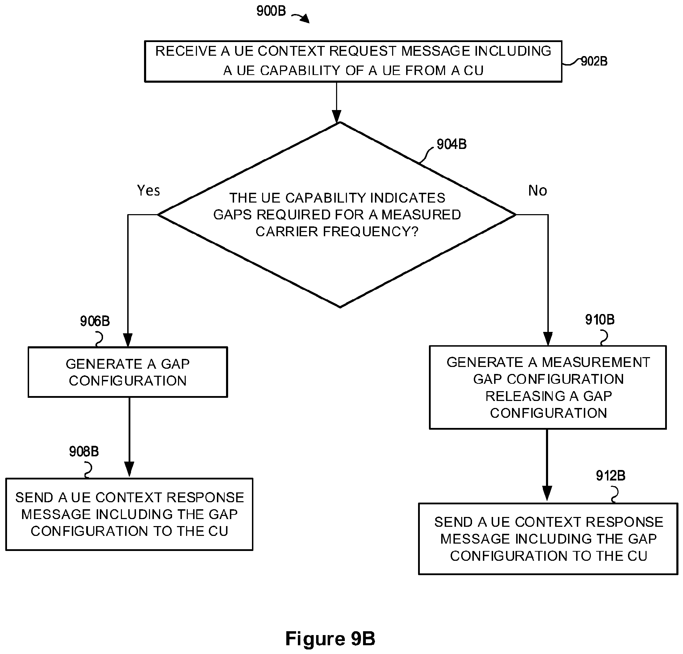

Fig. 9B is a flow diagram depicting an example method 900B, implemented in a DU (*e.g.*, the DU 174) for determining whether to generate a measurement gap configuration. At block 902B, the DU receives a *UE Context Request* message *(e.g.,* a *UE Context Modification Request* or a *UE Context Setup Request*) including a UE Capability (*e.g.,* a *NeedForGapsInfo* IE, an *interFrequencyMeas-NoGap* field, a *UE-NR-Capability* IE, a *UE-EUTRA-Capability* IE, and/or a *UE-MRDC-Capability* IE) from a CU *(e.g.,* the CU 172) (*e.g.*, any one of events 312A-F during the procedures 360A-F, respectively; 412B-E during the procedures 460B-E, respectively; 460F-I, 560C-D, 660A-B, 760, 779).

Next, at block 904B, the DU determines whether the UE Capability indicates that the UE requires gaps to measure a carrier frequency. If the UE Capability indicates that the UE requires measurement gaps, the flow proceeds to block 906B. Otherwise, the flow proceeds to block 910B.

At block 906B, the DU generates a measurement gap configuration that the UE is to use to perform measurements on the carrier frequency (*e.g*., any one of events 314A of procedure 360A, 315C of procedure 360C, 414B of procedure 460B, 415D of procedure 460D, 314E of procedure 360E). At block 908B, the DU sends a *UE Context Response* message *(e.g.,* a *UE Context Modification Response* or a *UE Context Setup Response)* including the measurement gap configuration to the CU (*e.g.*, any one of events 316A, 316C, 416B, 416D, 316E).

Alternatively, if the flow proceeds to block 910B, the DU generates a measurement gap configuration which releases a gap configuration (*e.g.*, any one of events 314A of procedure 360A, 315C of procedure 360C, 414B of procedure 460B, 415D of procedure 460D, 314E of procedure 360E). If the DU receives frequency information indicating the carrier frequency, and/or SMTC information together with the UE Capability, the DU can ignore the frequency information and/or SMTC information. At block 912B, the DU sends a *UE Context Response* message (*e.g.,* a *UE Context Modification Response* or a *UE Context Setup Response*) including the measurement gap configuration to the CU (*e.g.,* any one of events 316A, 316C, 416B, 416D, 316E). In alternatives to the blocks 910B and 912B, the DU does not generate a gap configuration configuring gaps for the UE and sends a *UE Context Response* message (*e.g.,* a *UE Context Modification Response* or a *UE Context Setup Response*) excluding a measurement gap configuration to the CU.

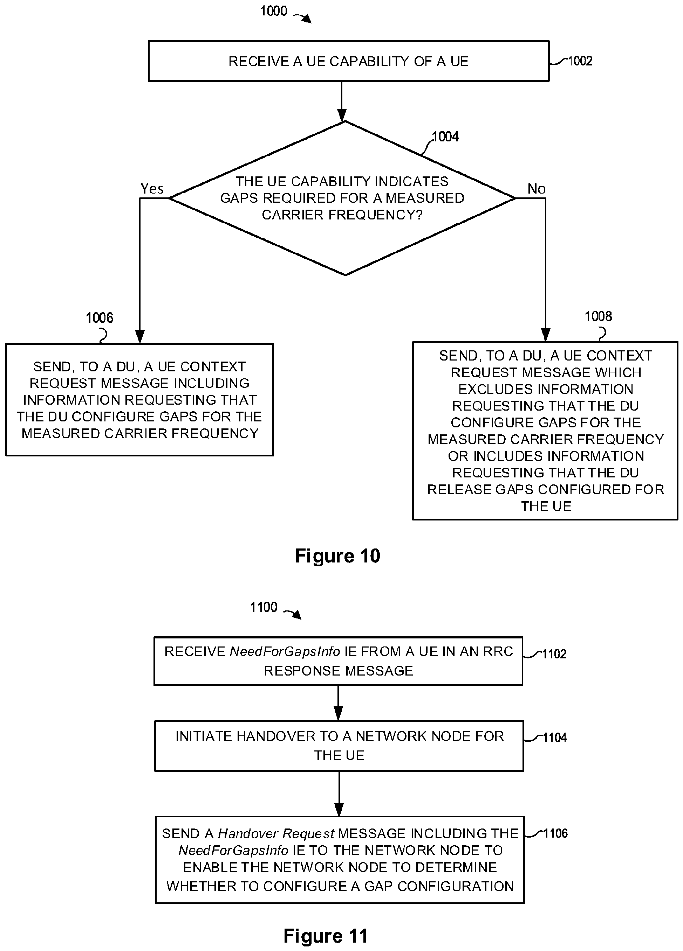

Fig. 10 is a flow diagram depicting an example method 1000, implemented in a CU *(e.g.,* the CU 172) for determining whether to request gaps for a UE *(e.g.,* the UE 102) in a message to a DU (*e.g*., the DU 174). At block 1002, the CU receives a UE Capability (e.g., a *NeedForGapsInfo* IE, an *interFrequencyMeas-NoGap* field, a *UE-NR-Capability* IE, a *UE-EUTRA-Capability* IE, and/or a *UE-MRDC-Capability* IE) of the UE (*e.g.,* event 310A during procedure 350A or any one of events 350B-D, 471B-E, 450F-I, 534C, 550C, 534D, 665A, 658B, or 758).

At block 1004, the CU determines whether the UE Capability indicates that a UE requires measurement gaps to perform a measurement on a carrier frequency. If the UE does require measurement gaps, then the flow proceeds to block 1006. Otherwise, the flow proceeds to block 1008. At block 1006, the CU determines to include information requesting that a DU configure gaps for the measured carrier frequency in a *UE Context Request* message and sends the *UE Context Request* message to the DU *(e.g.,* events 311C and 312C, events 411D and 412D or events 1709D and 1712D). Alternatively, at block 1008, the CU determines to exclude information requesting that a DU configure gaps for the measured carrier frequency from a *UE Context Request* message or include information (*e.g*., an indication or *MeasConfig*) requesting that a DU release gaps previously configured for the UE in a *UE Context Request* message and sends the *UE Context Request* message to the DU (*e.g.*, events 309D and 312D, events 409E and 412E or events 1709D and 1712D).

Fig. 11 is a flow diagram depicting an example method 1100, implemented in an S-BS (*e.g*., the S-BS 104A), for managing measurement gap capability information during handover scenarios. The method begins at block 1102, where the S-BS receives a *NeedForGapsInfo* IE from a UE (e.g., the UE 102), in an *RRC Response* message *(e.g.,* event 408A during procedure 450A, or any one of events 450B-E).

At block 1104, the S-BS initiates handover to a network node for the UE. The network node can be, for example, a T-BS *(e.g.,* the T-BS 104B) *(e.g.,* event 407A), or a T-CU *(e.g.,* the CU 172) *(e.g.,* any one of events 407B-E). At block 1106, the S-BS sends a *Handover Request* message including the *NeedForGapsInfo* to the network node to enable the network node to determine whether to configure a measurement gap configuration (*e.g*., any one of events 471A-E).

In some implementations, the method 1100 can be implemented by a CU (*e.g*., the CU 172). At 1102, the CU receives a *NeedForGapsInfo* IE from a UE (*e.g.,* the UE 102), via an S-DU (*e.g.,* the S-DU 174A) (*e.g.,* any one of events 450F-450I). At block 1104, the CU initiates handover from the S-DU to a T-DU (*e.g.,* the T-DU 174B) (*e.g.,* any one of events 407F-I). With the T-DU, the CU performs a UE Context Setup procedure (*e.g.,* any one of events 460F-I). At block 1106, the CU sends a *handover command* to the S-DU, which may or may not include a measurement gap configuration, depending on the outcome of the UE Context Setup procedure *(e.g.,* 472F during procedure 470F, event 472 during procedure 470G, or any one of events 470H-I).

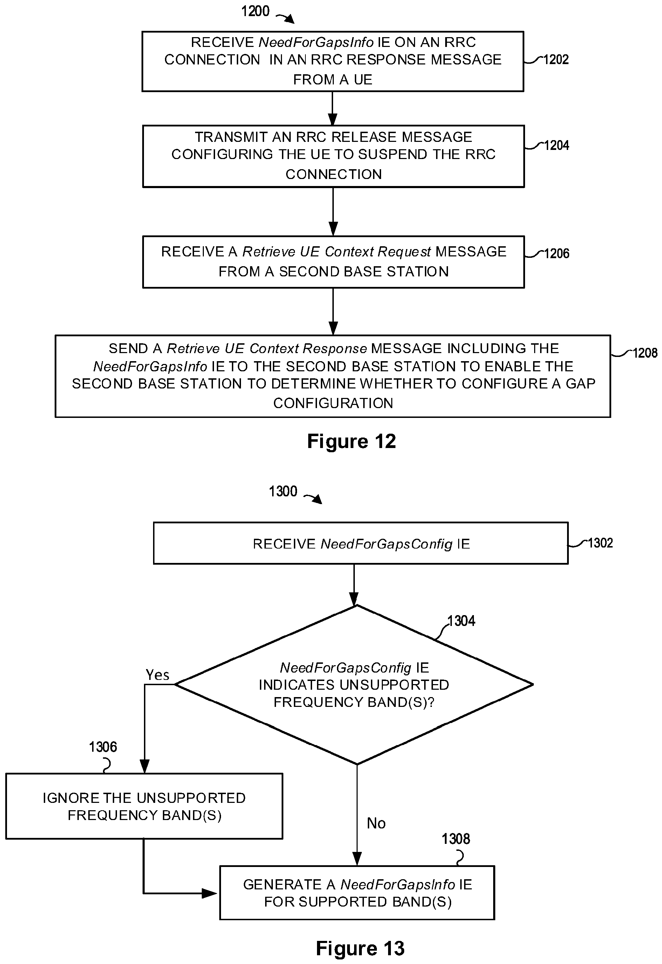

Fig. 12 is a flow diagram depicting an example method 1200, implemented in an S-BS (*e.g.*, the S-BS 104B), for managing measurement gap capability information following suspending an RRC connection. The method 1200 begins at block 1202, where the S-BS receives a *NeedForGapsInfo* IE on an RRC connection in an *RRC Response* message from a UE *(e.g.,* the UE 102) *(e.g.,* any one of events 602A-B, 702).

At block 1204, the S-BS transmits an *RRC Release* message configuring the UE to suspend the RRC connection (*e.g*., any one of events 653A-B, 753). At block 1206, the S-BS receives a *Retrieve UE Context Request* message from a second base station *(e.g.,* any one of events 657A-B, 757). At block 1208, the S-BS sends a *Retrieve UE Context Response* message including the *NeedForGapsInfo* to the second base station to enable to second base station to determine whether to configure a measurement gap configuration (*e.g*., any one of events 658A-B, 758).

Fig. 13 is a flow diagram depicting an example method 1300, implemented in a UE *(e.g.,* the UE 102) for generating measurement gap capability information. At block 1302, the UE 102 receives a *NeedForGapsConfig* IE (*e.g.,* event 306A during the procedure 350A, procedures 350B-D, event 406A during the procedure 450A, procedures 450B-I, event 506A during the procedure 550A, event 503B during the procedure 550B, procedure 550C, or event 662A). At block 1304, the UE determines whether the *NeedForGapsConfig* indicates one or more frequency band(s) that the UE does not support. If so, the flow proceeds to block 1306. Otherwise, the flow proceeds immediately to block 1308.

At block 1306, the UE ignores the unsupported frequency band(s). Next, at block 1308, the UE generates a *NeedForGapsInfo* IE for bands indicated in the *NeedForGapsConfig* that the UE does support.

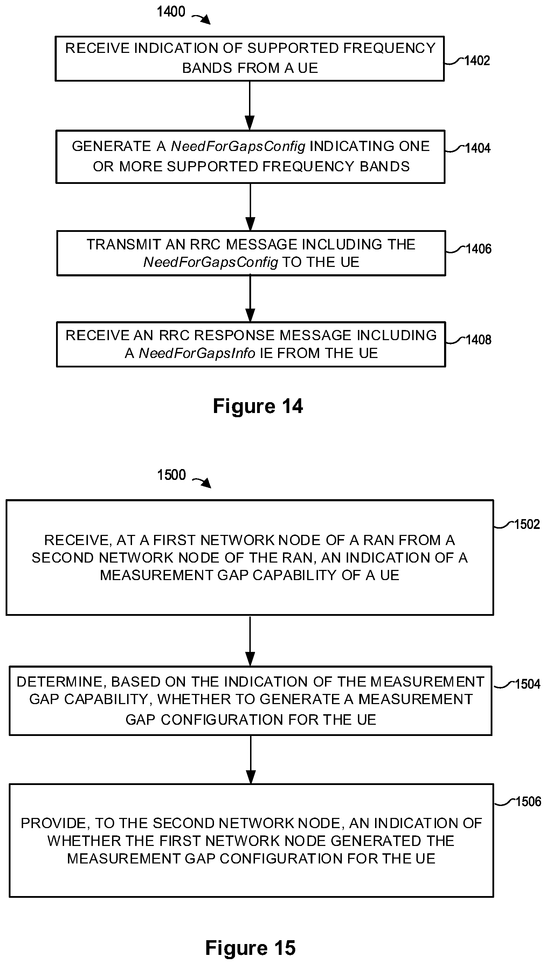

Fig. 14 is a flow diagram depicting an example method 1400, implemented in a base station *(e.g.,* the base stations 104A-B or 106A-B) for requesting measurement gap capability information from a UE *(e.g.,* the UE 102). At block 1402, the base station receives, from the UE, an indication of frequency bands that the UE supports (*e.g*., any one of events 302A-D, 402A-I, 502A, 502C-D, 602A-B, 702). At block 1404, the base station generates a *NeedForGapsConfig* indicating one or more frequency band(s) that the UE supports, and the base station transmits an RRC message including the *NeedForGapsConfig* to the UE *(e.g.,* event 306A during the procedure 350A, procedures 350B-D, event 406A during the procedure 450A, procedures 450B-I, event 506A during the procedure 550A, event 503B during the procedure 550B, procedure 550C, or event 662A). At block 1406, the base station receives an RRC response message including a *NeedForGapsInfo* IE from the UE *(e.g.,* event 308A during the procedure 350A, procedures 350B-D, event 408A during the procedure 450A, procedures 450B-I, event 508A during the procedure 550A, event 505B during the procedure 550B, procedure 550C, or event 664A).

Fig. 15 is a flow diagram of an example method 1500 for managing measurement gap information, which can be implemented in a first network node (*e.g.*, a DU 174 or a base station) of a RAN (*e.g*., the RAN 105). At block 1502, the first network node receives, from a second network node of the RAN, an indication of a measurement gap capability (*e.g*., a *NeedForGapsInfoNR* IE, an *interFrequencyMeas-NoGap-r16* IE, first information requesting that the first network node configure measurement gaps for the UE or indicating that the first network node should not generate measurement gaps or should release previously configured measurement gaps, or a *UE Context Request* including or excluding measurement timing information, such as SMTC information) of the UE in communication with the RAN (*e.g*., 312A-F, 471A, 412B-E, 510A).

At block 1504, the first network node determines, based on the indication of the measurement gap capability, whether to generate a measurement gap configuration (*e.g.*, a *MeasGapConfig*) for the UE *(e.g.,* any one of events 314A, 313B, 315C, 360D, 414A, 414B, 413C, 415D, procedure 460E, 514A).

At block 1506, the first network node provides, to the second network node, an indication of whether the first network node generated the measurement gap configuration for the UE (*e.g.,* a message including or excluding a *MeasGapConfig*) (*e.g.,* any one of events 316A-D, 472A, 416B-E, 518A). The first network node may generate and provide a first configuration to the second node, where the first configuration is a configuration that enables the UE to perform inter-frequency measurement on reference signal(s) (RS(s)) within an active DL BWP without measurement gaps (*e.g.*, events 342E or 342F).

In an aspect similar to the example method 1500, a first network node can receive an indication of a measurement gap capability of a UE from the UE. For example, when the first network node operates as an SN to provide DC to the UE, the SN can receive an indication of a measurement gap capability (*e.g.,* a *NeedForGapsInfoNR* IE) from a second network node (*e.g.,* from an MN, as in procedure 530B) and/or directly from the UE (*e.g.,* event 505B). The SN can determine, based on the indication of the measurement gap capability, whether to generate a measurement gap configuration for the UE (*e.g.*, event 514B). The SN can provide an indication of whether the SN generated the measurement gap configuration by transmitting a message (*e.g.*, a message including or excluding a *MeasGapConfig)* directly to the UE (*e.g.,* event 521B).

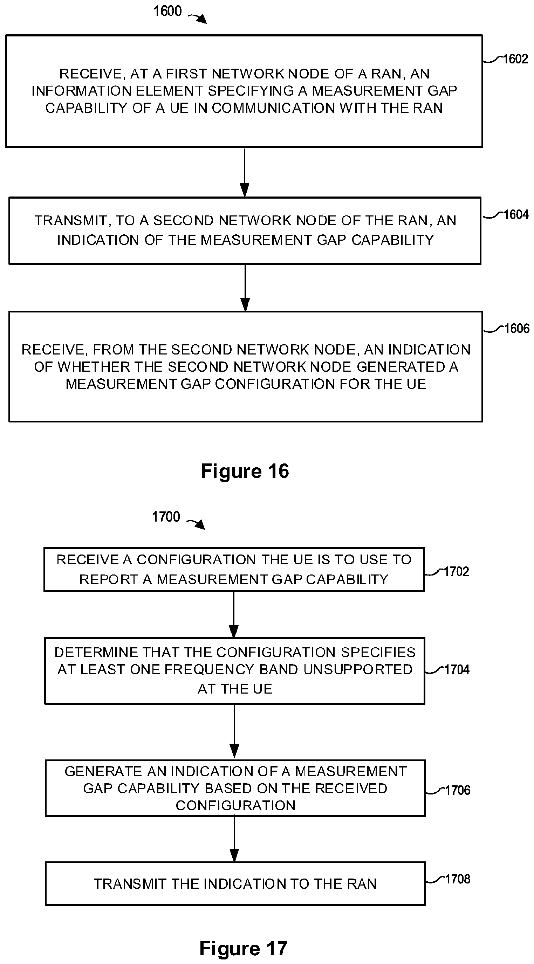

Fig. 16 is a flow diagram of another example method 1600 for managing measurement gap information, which can be implemented in a first network node (*e.g.*, a CU 172 or a base station). At block 1602, the first network node receives information element specifying a measurement gap capability *(e.g.,* a *NeedForGapsInfoNR* IE, or an *interFrequencyMeas-NoGap-r16* IE) of a user equipment (UE) in communication with the RAN (*e.g.*, events 302E or 302F, or any one of events 310A during the procedure 350A, 350B-D, 408A, 471B-D, 502A, 502C, 665A, 658B, 758).

At block 1604, the first network node transmits, to a second network node, an indication of the measurement gap capability (*e.g.,* a *NeedForGapsInfoNR* IE, an *interFrequencyMeas-NoGap-r16* IE, first information requesting that the second network node configure measurement gaps for the UE or indicating that the second network node should not generate measurement gaps or should release previously configured measurement gaps, or a *UE Context Request* including or excluding measurement timing information, such as SMTC information) (*e.g*., any one of events 312A-F, 471A, 412B-E, 534A, 510A, 534C, 534D). At block 1606, receives, from the second network node, an indication of whether the second network node generated a measurement gap configuration for the UE (*e.g.*, a message including or excluding a *MeasGapConfig*) *(e.g.,* any one of events 316A-D, 472A, 416B-E, 518A, 538D). Alternatively or in addition, the first network node may receive a first configuration from the second network node, or generate a first configuration if the first network node does not receive the first configuration, where the first configuration is a configuration that enables the UE to perform inter-frequency measurement on reference signal(s) (RS(s)) within an active DL BWP without measurement gaps (*e.g*., events 342E or 342F).

Fig. 17 is a flow diagram of an example method 1700 for managing gap measurement, which can be implemented in a UE (*e.g.*, the UE 102) of this disclosure. At block 1702, the UE receives a configuration the UE is to use to report a measurement gap capability (*e.g., a NeedForGapsConfig*) (*e.g.,* any one of events 306A of procedure 350A, 406A of procedure 450A, 506A of procedure 550A, 503B of procedure 550B, 662A).

Next, at block 1704, the UE determines that the configuration specifies at least one frequency band that is unsupported at the UE (*e.g.,* block 1302 of Fig. 13). At block 1706, the UE generates an indication of a measurement gap capability (*e.g.,* a *NeedForGapsInfoNR* IE) based on the received configuration (*e.g.*, block 1308 of Fig. 13).

At block 1708, the UE transmits the indication of the measurement gap capability to the RAN *(e.g.,* any one of events 308A of procedure 350A, 408A of procedure 450A, 508A of procedure 550A, 505B of procedure 550B, 664A).

The following description may be applied to the description above.

A user device in which the techniques of this disclosure can be implemented (*e.g.*, the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (*e.g.*, code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured *(e.g.,* as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g.*, as encompassed within a general-purpose processor or other programmable processor) that is temporarily configured by software to perform certain operations. The decision to implement a hardware module in dedicated and permanently configured circuitry, or in temporarily configured circuitry (*e.g.*, configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method (1500) in a first network node of a radio access network (105), RAN, for managing measurement gap information, wherein the first network node is a distributed unit (174), DU, of a distributed base station (104A) or a target base station (104B) in a handover procedure, and a second network node of the RAN is a central unit (172), CU, of the distributed base station (104A) or a source base station (104A) in the handover procedure, respectively, the method comprising:
receiving (1502), at the first network node from the second network node, an information element that specifies a measurement gap capability of a user equipment (102), UE, in communication with the RAN (105);
determining (1504), by the first network node and based on the information element, whether to generate a measurement gap configuration for the UE (105); and
providing (1506), to the second network node, an indication as to whether the first network node has generated the measurement gap configuration for the UE (102).

2. The method of claim 1, further comprising:
generating, by the first network node and in response to the determining (1504), the measurement gap configuration for the UE (102),
wherein the providing (1506) includes:
transmitting a message including the measurement gap configuration to the second network node.

3. The method of claim 1, wherein the providing (1506) includes:
in response to determining to not generate the measurement gap configuration, transmitting a measurement configuration that does not include the measurement gap configuration.

4. The method of any one of the preceding claims, wherein:
the first network node and the second network node correspond to the distributed unit (174) and the central unit (172), respectively; and
the receiving (1502) includes receiving the information element in a request to modify or to set up a context of the UE (102).

5. The method of any one of claims 1-3, wherein:
the first network node and the second network node correspond to the target base station (104B) and the source base station (104A), respectively; and
the receiving (1502) includes: receiving the information element in a request to perform the handover procedure.

6. A method (1600) in a first network node of a radio access network (105), RAN, for managing measurement gap information, wherein the first network node is a central unit (172), CU, of a distributed base station (104A) or a source base station (104A) in a handover procedure, and a second network node of the RAN (105) is a distributed unit (174), DU, of the distributed base station (104A) or a target base station (104B) in the handover procedure, respectively, the method comprising:
receiving (1602) an information element specifying a measurement gap capability of a user equipment (102), UE, in communication with the RAN (105);
transmitting (1604), to the second network node, an indication of the measurement gap capability of the UE; and
receiving (1606), from the second network node, an indication as to whether the second network node has generated a measurement gap configuration for the UE (102).

7. The method of claim 6, wherein receiving (1606) the indication includes:
receiving the measurement gap configuration; or
receiving a message that does not include the measurement gap configuration.

8. The method of claim 6 or 7, wherein:
the information element is a first information element; and
transmitting (1604) the indication includes:
determining, based on the first information element, whether the UE (102) requires measurement gaps to perform measurements on a target frequency band;
if the UE (102) requires measurement gaps, transmitting at least one of measurement timing information to the second network node or a second information element requesting the second network node to generate measurement gap configuration; and
if the UE (102) does not require measurement gaps, transmitting a second information element requesting the second network node not to generate the measurement gap configuration or to release a previously configured measurement gap configuration.

9. The method of any one of claims 6-8, wherein transmitting (1604) the indication includes:
transmitting the information element.

10. The method of any one of claims 6-9, wherein receiving (1602) the information element includes:
receiving a response to a request to retrieve a context of the UE (102), the response including the information element.

11. The method of any one of claims 6-10, wherein:
the first network node and the second network node correspond to the central unit (172) and the distributed unit (174); and
transmitting (1604) the indication includes transmitting a request to modify or set up a context of the UE (102), the request including the indication.

12. The method of any one of claims 6-10, wherein:
the first network node and the second network node correspond to the source base station (104A) and the target base station (104B); and
transmitting (1604) the indication includes transmitting a request to perform the handover procedure, the request including the indication.

13. The method of any one of the preceding claims, wherein the information element indicates whether the UE (102) requires measurement gaps to perform measurements for a frequency band.

14. The method of any one of the preceding claims, wherein the information element is a *NeedForGapsInfo* information element.

15. A network node of a radio access network (105), RAN, comprising processing hardware (130, 140) and configured to implement a method of any of claims 1-5 or a method according to any of claims 6-14.

## Patentansprüche

1. Verfahren (1500) in einem ersten Netzwerkknoten eines Funkzugangsnetzwerks (105), RAN, zum Verwalten von Messungslückeninformationen, wobei der erste Netzwerkknoten eine verteilte Einheit (174), DU, einer verteilten Basisstation (104A) oder eine Ziel-Basisstation (104B) in einer Verbindungsübergabe-Prozedur ist und ein zweiter Netzwerkknoten des RAN eine Zentraleinheit (172), CU, der verteilten Basisstation (104A) bzw. einer Quell-Basisstation (104A) in der Verbindungsübergabe-Prozedur ist, wobei das Verfahren Folgendes umfasst:
am ersten Netzwerkknoten erfolgendes Empfangen (1502) eines Informationselements vom zweiten Netzwerkknoten, das eine Messungslückenfähigkeit einer Benutzereinrichtung (102), UE, in Kommunikation mit dem RAN (105) angibt;
durch den ersten Netzwerkknoten und auf der Grundlage des Informationselements erfolgendes Bestimmen (1504), ob eine Messungslückenkonfiguration für die UE (105) zu erzeugen ist; und
Bereitstellen (1506) einer Angabe für den zweiten Netzwerkknoten, ob der erste Netzwerkknoten die Messungslückenkonfiguration für die UE (102) erzeugt hat.

2. Verfahren nach Anspruch 1, ferner umfassend:
durch den ersten Netzwerkknoten und als Antwort auf das Bestimmen (1504) erfolgendes Erzeugen der Messungslückenkonfiguration für die UE (102),
wobei das Bereitstellen (1506) Folgendes einschließt:
Übertragen einer Nachricht, welche die Messungslückenkonfiguration einschließt, zum zweiten Netzwerkknoten.

3. Verfahren nach Anspruch 1, wobei das Bereitstellen (1506) Folgendes einschließt:
als Antwort auf das Bestimmen, die Messungslückenkonfiguration nicht zu erzeugen, erfolgendes Übertragen einer Messungskonfiguration, welche die Messungslückenkonfiguration nicht einschließt.

4. Verfahren nach einem der vorhergehenden Ansprüche, wobei:
der erste Netzwerkknoten und der zweite Netzwerkknoten der verteilten Einheit (174) bzw. der Zentraleinheit (172) entsprechen; und
das Empfangen (1502) das Empfangen des Informationselements in einer Aufforderung, einen Kontext der UE (102) zu modifizieren oder einzurichten, einschließt.

5. Verfahren nach einem der Ansprüche 1 bis 3, wobei:
der erste Netzwerkknoten und der zweite Netzwerkknoten der Ziel-Basisstation (104B) bzw. der Quell-Basisstation (104A) entsprechen; und
das Empfangen (1502) das Empfangen des Informationselements in einer Aufforderung, die Verbindungsübergabe-Prozedur durchzuführen, einschließt.

6. Verfahren (1600) in einem ersten Netzwerkknoten eines Funkzugangsnetzwerks (105), RAN, zum Verwalten von Messungslückeninformationen, wobei der erste Netzwerkknoten eine Zentraleinheit (172), CU, einer verteilten Basisstation (104A) oder einer Quell-Basisstation (104A) in einer Verbindungsübergabe-Prozedur ist und ein zweiter Netzwerkknoten des RAN (105) eine verteilte Einheit (174), DU, der verteilten Basisstation (104A) bzw. einer Ziel-Basisstation (104B) in der Verbindungsübergabe-Prozedur ist, wobei das Verfahren Folgendes umfasst:
Empfangen (1602) eines Informationselements, das eine Messungslückenfähigkeit einer Benutzereinrichtung (102), UE, in Kommunikation mit dem RAN (105) angibt;
Übertragen (1604) einer Angabe der Messungslückenfähigkeit der UE zum zweiten Netzwerkknoten; und
Empfangen (1606) einer Angabe vom zweiten Netzwerkknoten, ob der zweite Netzwerkknoten eine Messungslückenkonfiguration für die UE (102) erzeugt hat.

7. Verfahren nach Anspruch 6, wobei das Empfangen (1606) der Angabe Folgendes einschließt:
Empfangen der Messungslückenkonfiguration; oder
Empfangen einer Nachricht, welche die Messungslückenkonfiguration nicht einschließt.

8. Verfahren nach Anspruch 6 oder 7, wobei:
das Informationselement ein erstes Informationselement ist; und
das Übertragen (1604) der Angabe Folgendes einschließt:
Bestimmen auf der Grundlage des ersten Informationselements, ob die UE (102) Messungslücken benötigt, um Messungen an einem Zielfrequenzband durchzuführen;
wenn die UE (102) Messungslücken benötigt, Übertragen von mindestens einem von Folgendem: Messungszeitsteuerungsinformationen für den zweiten Netzwerkknoten oder ein zweites Informationselement, das den zweiten Netzwerkknoten auffordert, eine Messungslückenkonfiguration zu erzeugen; und
wenn die UE (102) keine Messungslücken benötigt, Übertragen eines zweiten Informationselements, das den zweiten Netzwerkknoten auffordert, die Messungslückenkonfiguration nicht zu erzeugen oder eine zuvor konfigurierte Messungslückenkonfiguration freizugeben.

9. Verfahren nach einem der Ansprüche 6 bis 8, wobei das Übertragen (1604) der Angabe Folgendes einschließt:
Übertragen des Informationselements.

10. Verfahren nach einem der Ansprüche 6 bis 9, wobei das Empfangen (1602) des Informationselements Folgendes einschließt:
Empfangen einer Antwort auf eine Aufforderung, einen Kontext der UE (102) abzurufen, wobei die Antwort das Informationselement einschließt.

11. Verfahren nach einem der Ansprüche 6 bis 10, wobei:
der erste Netzwerkknoten und der zweite Netzwerkknoten der Zentraleinheit (172) und der verteilten Einheit (174) entsprechen; und
das Übertragen (1604) der Angabe das Übertragen einer Aufforderung, einen Kontext der UE (102) zu modifizieren oder einzurichten, einschließt, wobei die Aufforderung die Angabe einschließt.

12. Verfahren nach einem der Ansprüche 6 bis 10, wobei:
der erste Netzwerkknoten und der zweite Netzwerkknoten der Quell-Basisstation (104A) und der Ziel-Basisstation (104B) entsprechen; und
das Übertragen (1604) der Angabe das Übertragen einer Aufforderung, die Verbindungsübergabe-Prozedur durchzuführen, einschließt, wobei die Aufforderung die Angabe einschließt.

13. Verfahren nach einem der vorhergehenden Ansprüche, wobei das Informationselement angibt, ob die UE (102) Messungslücken benötigt, um Messungen für ein Frequenzband durchzuführen.

14. Verfahren nach einem der vorhergehenden Ansprüche, wobei das Informationselement ein Informationselement *NeedForGapsInfo* ist.

15. Netzwerkknoten eines Funkzugangsnetzwerks (105), RAN, der Verarbeitungshardware (130, 140) umfasst und dafür konfiguriert ist, ein Verfahren nach einem der Ansprüche 1 bis 5 oder ein Verfahren nach einem der Ansprüche 6 bis 14 zu implementieren.

## Revendications

1. Procédé (1500) dans un premier noeud de réseau d'un réseau d'accès radio (105), RAN, pour gérer des informations sur les écarts de mesure, dans lequel le premier noeud de réseau est une unité distribuée (174), DU, d'une station de base (104A) distribuée ou d'une station de base (104B) cible dans une procédure de transfert, et un deuxième noeud de réseau du RAN est une unité centrale (172), CU, de la station de base (104A) distribuée ou d'une station de base (104A) source dans la procédure de transfert, respectivement, le procédé comprenant les étapes consistant à :
recevoir (1502), au premier noeud de réseau, à partir du deuxième noeud de réseau, un élément d'information qui spécifie une capacité d'écart de mesure d'un équipement d'utilisateur (102), UE, en communication avec le RAN (105) ;
déterminer (1504), par le premier noeud de réseau et sur la base de l'élément d'information, s'il faut générer une configuration d'écart de mesure pour l'UE (105) ; et
fournir (1506) au deuxième noeud de réseau une indication permettant de savoir si le premier noeud de réseau a généré la configuration d'écart de mesure pour l'UE (102).

2. Procédé selon la revendication 1, comprenant en outre les étapes consistant à :
générer, par le premier noeud de réseau et en réponse à la détermination (1504), la configuration d'écart de mesure pour l'UE (102),
dans lequel la fourniture (1506) inclut :
la transmission au deuxième noeud de réseau un message incluant la configuration d'écart de mesure.

3. Procédé selon la revendication 1, dans lequel la fourniture (1506) inclut :
en réponse à la détermination de ne pas générer la configuration d'écart de mesure, la transmission d'une configuration de mesure qui n'inclut pas la configuration d'écart de mesure.

4. Procédé selon l'une quelconque des revendications précédentes, dans lequel :
le premier noeud de réseau et le deuxième noeud de réseau correspondent respectivement à l'unité distribuée (174) et à l'unité centrale (172) ; et
la réception (1502) inclut la réception de l'élément d'information dans une demande de modification ou d'établissement d'un contexte de l'UE (102).

5. Procédé selon l'une quelconque des revendications 1 à 3, dans lequel :
le premier noeud de réseau et le deuxième noeud de réseau correspondent respectivement à la station de base (104B) cible et à la station de base (104A) source ; et
la réception (1502) inclut la réception de l'élément d'information dans une demande d'exécution de la procédure de transfert.

6. Procédé (1600) dans un premier noeud de réseau d'un réseau d'accès radio (105), RAN, pour gérer des informations sur les écarts de mesure, dans lequel le premier noeud de réseau est une unité centrale (172), CU, d'une station de base (104A) distribuée ou d'une station de base (104A) source dans une procédure de transfert, et un deuxième noeud de réseau du RAN (105) est une unité distribuée (174), DU, de la station de base (104A) distribuée ou d'une station de base (104B) cible dans la procédure de transfert, respectivement, le procédé comprenant les étapes consistant à :
recevoir (1602) un élément d'information spécifiant une capacité d'écart de mesure d'un équipement d'utilisateur (102), UE, en communication avec le RAN (105) ;
transmettre (1604), au deuxième noeud de réseau, une indication de la capacité d'écart de mesure de l'UE ; et
recevoir (1606), du deuxième noeud de réseau, une indication selon laquelle le deuxième noeud de réseau a généré une configuration d'écart de mesure pour l'UE (102).

7. Procédé selon la revendication 6, dans lequel la réception (1606) de l'indication inclut les étapes consistant à :
recevoir la configuration d'écart de mesure ; ou
recevoir un message qui n'inclut pas la configuration d'écart de mesure.

8. Procédé selon la revendication 6 ou 7, dans lequel :
l'élément d'information est un premier élément d'information ; et
la transmission (1604) de l'indication inclut les étapes consistant à :
déterminer, sur la base du premier élément d'information, si l'UE (102) a besoin d'écarts de mesure pour effectuer des mesures sur une bande de fréquence cible ;
si l'UE (102) a besoin d'écarts de mesure, transmettre au moins un élément parmi des informations de synchronisation des mesures au deuxième noeud de réseau ou un deuxième élément d'information demandant au deuxième noeud de réseau de générer une configuration d'écart de mesure ; et
si l'UE (102) n'a pas besoin d'écarts de mesure, transmettre un deuxième élément d'information demandant au deuxième noeud de réseau de ne pas générer la configuration d'écart de mesure ou de libérer une configuration d'écart de mesure précédemment configurée.

9. Procédé selon l'une quelconque des revendications 6 à 8, dans lequel la transmission (1604) de l'indication inclut l'étape consistant à :
transmettre l'élément d'information.

10. Procédé selon l'une quelconque des revendications 6 à 9, dans lequel la réception (1602) de l'élément d'information inclut l'étape consistant à :
recevoir une réponse à une demande d'extraction d'un contexte de l'UE (102), la réponse incluant l'élément d'information.

11. Procédé selon l'une quelconque des revendications 6 à 10, dans lequel :
le premier noeud de réseau et le deuxième noeud de réseau correspondent à l'unité centrale (172) et à l'unité distribuée (174) ; et
la transmission (1604) de l'indication inclut la transmission d'une demande de modification ou d'établissement d'un contexte de l'UE (102), la demande incluant l'indication.

12. Procédé selon l'une quelconque des revendications 6 à 10, dans lequel :
le premier noeud de réseau et le deuxième noeud de réseau correspondent à la station de base (104A) source et à la station de base (104B) cible ; et
la transmission (1604) de l'indication inclut la transmission d'une demande d'exécution de la procédure de transfert, la demande incluant l'indication.

13. Procédé selon l'une quelconque des revendications précédentes, dans lequel l'élément d'information indique si l'UE (102) a besoin d'écarts de mesure pour effectuer des mesures dans une bande de fréquences.

14. Procédé selon l'une quelconque des revendications précédentes, dans lequel l'élément d'information est un élément d'information *NeedForGapsInfo.*

15. Noeud de réseau d'un réseau d'accès radio (105), RAN, comprenant un matériel de traitement (130, 140) et configuré pour mettre en oeuvre un procédé selon l'une quelconque des revendications 1 à 5 ou un procédé selon l'une quelconque des revendications 6 à 14.
